# EUROPEAN PATENT APPLICATION

(11) **EP 2 811 411 A1**
(43) Date of publication of application: **10.12.2014**
(21) Application number: 12884843.9
(22) Date of filing: 24.09.2012
(51) Int. Cl.: G06F 12/00

(54) **COMPUTER AND METHOD FOR CONTROLLING ARRANGEMENT OF DATA IN HIERARCHICAL POOL OWNED BY STORAGE DEVICE**

(71) Applicant: Hitachi, Ltd., Tokyo 100-8280 (JP)
(72) Inventor: NAGAO, Takashi, Tokyo 100-8280 (JP); OKADA, Wataru, Tokyo 100-8280 (JP); MAKI, Nobuhiro, Tokyo 100-8280 (JP); NIKAIDO, Yuki, Tokyo 100-8280 (JP)
(74) Representative: MERH-IP Matias Erny Reichl Hoffmann
(86) International application number: PCT/JP2012/074402
(87) International publication number: WO 2014/045441

(57) **Abstract**

A computer is coupled to a storage apparatus, which comprises a hierarchical pool comprising multiple storage tiers that are multiple page groups having different IO performance, and which, in a case where a migration request has been received, migrates page data, which is data in units of pages, between storage tiers in accordance with the migration request. The computer comprises a storage device and a control device, which is coupled to the storage device. The storage device stores performance requirement management information comprising information denoting a performance requirement of a task, which is an execution unit of a prescribed process, and IO performance information enabling identification of a difference in IO performance between the multiple storage tiers. The control device calculates, based on the IO performance information, an amount of change predicted in the task execution performance on supposition that one or more data objects for use in the task are to be migrated to a page in another storage tier, and identifies, based on the predicted amount of change, one or more data objects capable of being migrated to a page in another storage tier while ensuring a state in which execution performance with respect to the task meets the performance requirement.

## Description

### [Technical Field]

The present invention relates to controlling the allocation of data in a hierarchical pool, which is a storage area comprising multiple page groups having different input/output performance.

### [Background Art]

To efficiently utilize a storage area in a computer system, there is technology by which a storage apparatus hierarchically manages the storage areas of storage devices having different IO (Input/Output) performance and hardware costs in accordance with the IO performance thereof, and, in addition, dynamically allocates the storage area required to store the relevant data from any of multiple storage devices having different performance to a virtual volume (virtual logical volume) in units called pages. This technology, for example, is a type of Thin Provisioning. According to this technology, the virtual volume is comprised of multiple virtual areas, the storage apparatus comprises a hierarchical pool, which is a storage area comprising multiple page groups having different IO performance, and a page is allocated to a virtual area in the virtual volume from the hierarchical pool. Generally speaking, one page group is based on one or more storage devices of the same IO performance (or approximate IO performance).

Thus, the storage area of the relevant storage device, which is hierarchically managed in accordance with the IO performance of the storage device, will be called "storage tier" hereinafter. The storage tier is equivalent to a page group. That is, multiple page groups having different IO performance respectively correspond to multiple storage tiers.

The migration of data from a migration-source page, which is allocated to a target virtual area, to a migration-destination page in a storage tier different from the storage tier comprising the migration-source page, and, in addition, the allocation of the migration-destination page to the target virtual area instead of the migration-source page may be called "page migration" hereinafter. In page migration, data is migrated in units of pages. Hereinafter, data to be migrated in units of pages by page migration may be called "page data".

Patent Literature 1 discloses technology which, based on a request for an IO performance allotted to a file, which is a unit by which a user manages data, stores the relevant file in the storage tier, which meets the IO performance requirement, in a storage apparatus comprising a hierarchical pool comprised of multiple storage tiers.

According to Patent Literature 1, it is possible, based on the IO performance requirement of a user-specified file, to migrate page data comprising the relevant file to a storage tier having the appropriate IO performance, and, in addition, to deter a page migration based on the access frequency with respect to the page in which the relevant page data is stored.

### [Citation List]

### [Patent Literature]

[PTL 1]
WO 2011/117925

### [Summary of Invention]

### [Technical Problem]

In a case where the performance requirement for an application program has been decided, there are requirements, which are desirable as the performance requirements of various elements related to the implementation of the application program (for example, processor performance requirements), but even when at least one type of requirement is not desirable, all that has to be done is to meet the performance requirement of the application program.

In Patent Literature 1, the user is able to store the relevant file in a storage tier having the appropriate IO performance in accordance with specifying the file IO performance needed to meet the performance requirement specified for the application program (for example, that the length of time from the booting up of the application program until a prescribed process has ended be equal to or less than X seconds, and that 100 IOs be performed within one second).

However, generally speaking, the number of files used by the application is enormous. Thus, identifying the file IO performance needed to meet the application performance requirement and specifying the identified IO performance for each file places a heavy workload on the user.

There are also cases in which the access frequency with respect to a certain file changes while the application program is being executed, and as such, an IO performance that differs from the IO performance specified by the user becomes desirable for this certain file.

In addition, even though a page migration is performed on the basis of access frequency, it is not always possible to meet the application program performance requirement. This is because the storage apparatus does not know the application program in which the data is being used and does not know the application program performance requirement, and, although the access frequency index is suitable for enhancing the IO performance of the storage apparatus with respect to a page migration, the access frequency is not necessarily matched up for meeting the application program performance requirement.

Problems like the above are not limited to files, and are possible for other types of data objects (a unit of data managed by either the user or the application program (in some ways a coherent unit)), for example, even the dataset generally referred to with respect to a mainframe.

The problems mentioned above are not limited to cases in which the performance requirement is specified for the application program, and are also possible in cases where the performance requirement is specified for other types of processing units (for example, a task comprising multiple sub-tasks).

### [Solution to Problem]

A computer is coupled to a storage apparatus, which comprises a hierarchical pool comprising multiple storage tiers that are multiple page groups having different IO performance, and which, in a case where a migration request has been received, migrates page data, which is data in units of pages, between storage tiers in accordance with the migration request. The computer comprises a storage device and a control device, which is coupled to the storage device. The storage device stores performance requirement management information, which comprises information denoting the performance requirement of a task, which is an execution unit of a prescribed process, and IO performance information for enabling identification of a difference in IO performance between multiple storage tiers. The control device, based on the IO performance information, calculates a predicted amount of change in the execution performance of a task on supposition that one or more data objects for use in the task are to be migrated to a page in another storage tier, and based on the relevant predicted amount of change, identifies the one or more data objects capable of being migrated to a page in another storage tier while ensuring a state in which the execution performance with respect to the task meets a performance requirement.

### [Advantageous Effects of Invention]

The present invention makes it possible to identify a destination storage tier, which meets the performance requirement of an application with respect to a file used by the relevant application without using the IO performance requirement for each file. This makes it possible to store the relevant file in a storage tier having the appropriate IO performance.

### [Brief Description of Drawings]

[Fig. 1]

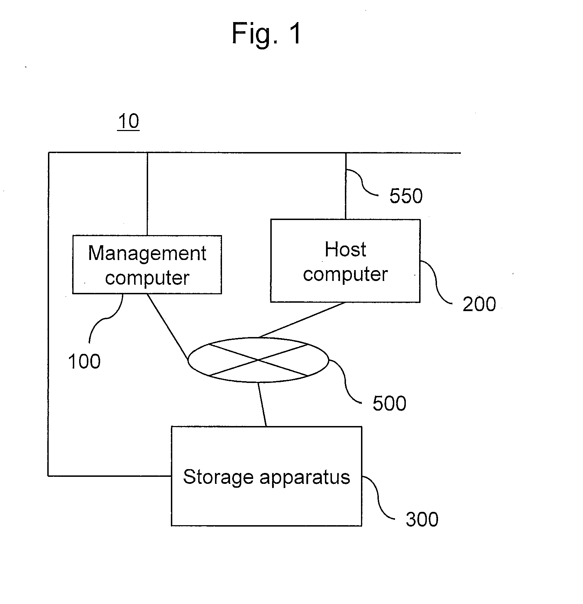

   Fig. 1 is a hardware block diagram of a computer system related to Example 1.
[Fig. 2]

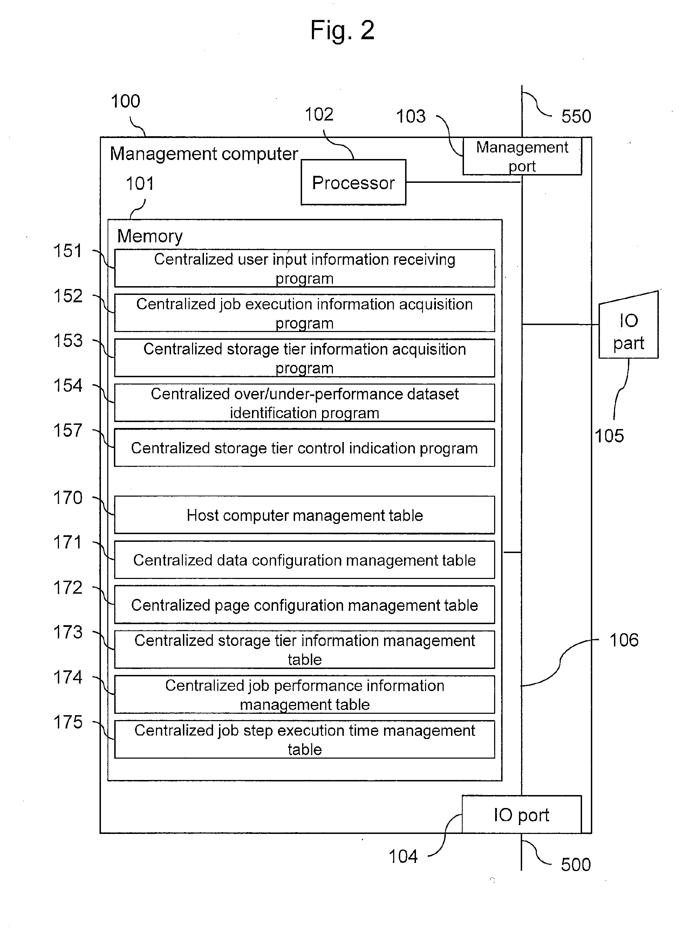

   Fig. 2 is a block diagram of a management computer related to Example 1.
[Fig. 3]

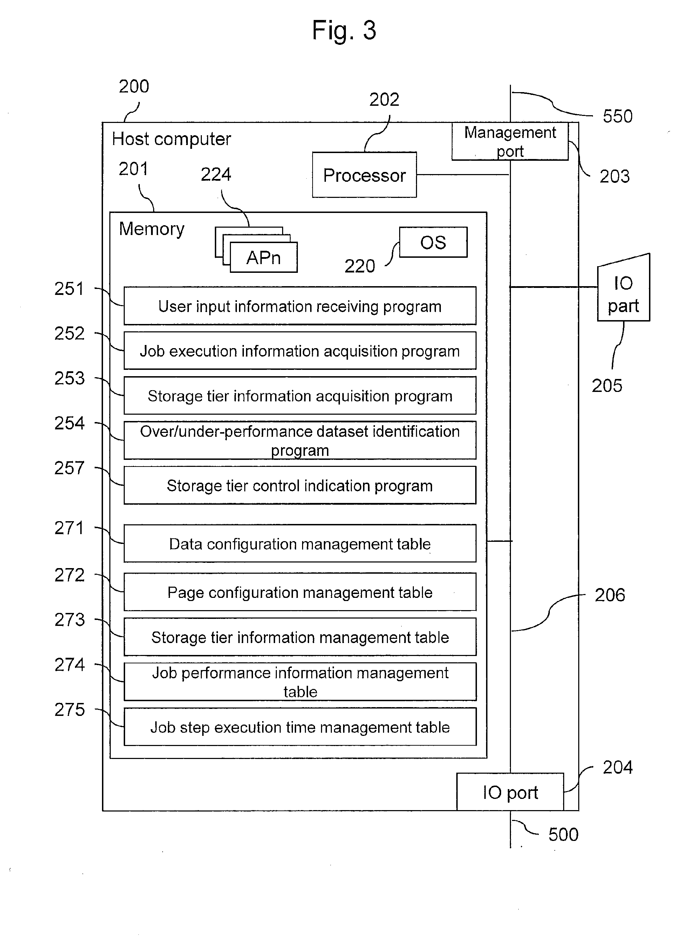

   Fig. 3 is a block diagram of a host computer related to Example 1.
[Fig. 4]

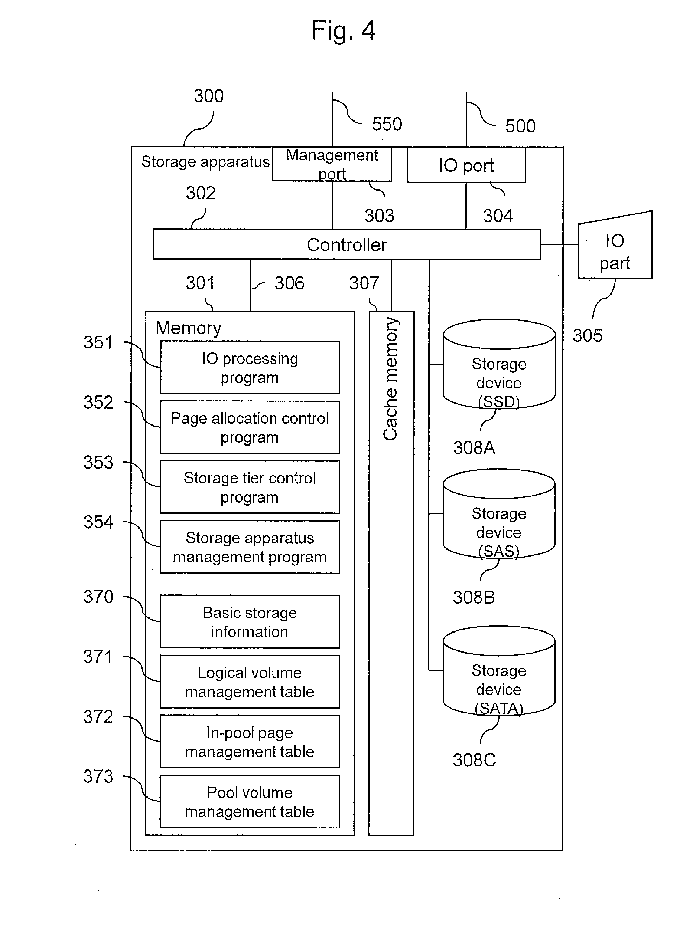

   Fig. 4 is a block diagram of a storage apparatus related to Example 1.
[Fig. 5]

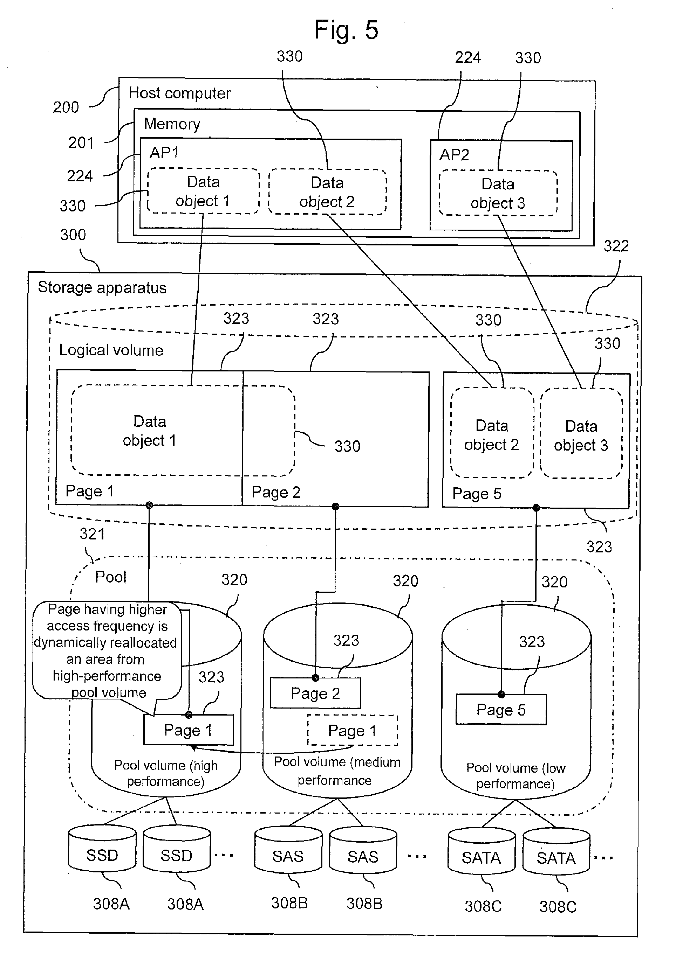

   Fig. 5 is a conceptual drawing illustrating an overview of computer system processing related to Example 1.
[Fig. 6]

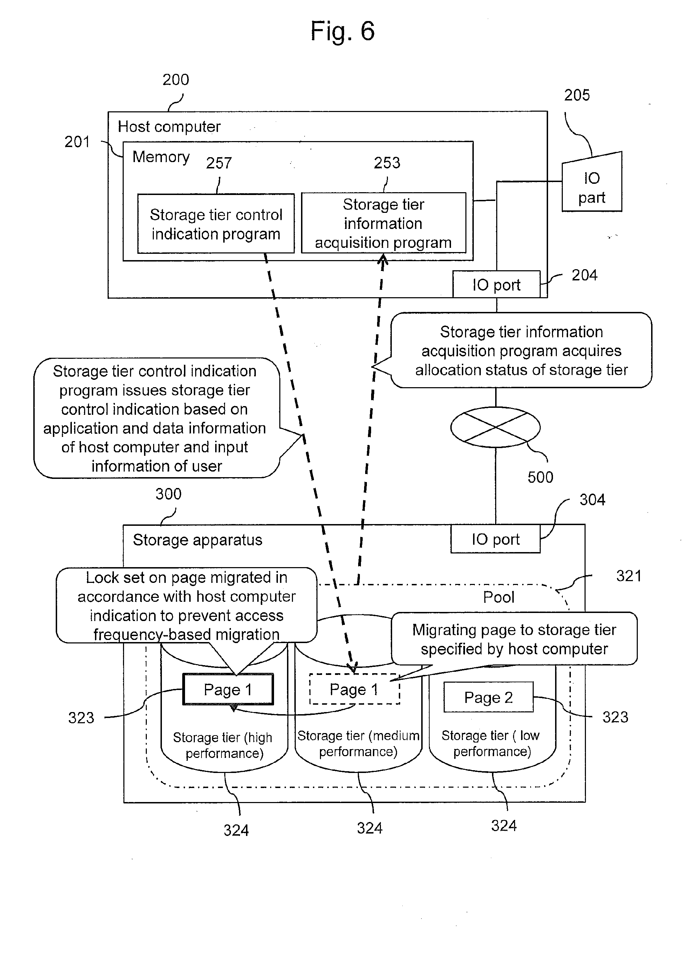

   Fig. 6 is a conceptual drawing illustrating an overview of host computer and storage apparatus processing related to Example 1.
[Fig. 7]

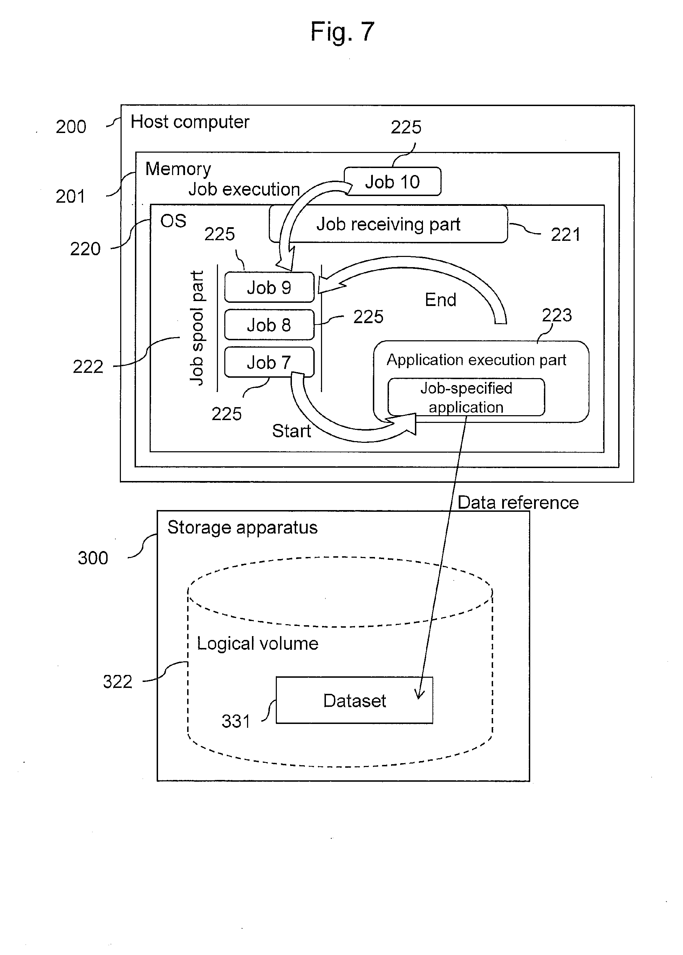

   Fig. 7 is a conceptual drawing of an application and a job related to Example 1.
[Fig. 8]

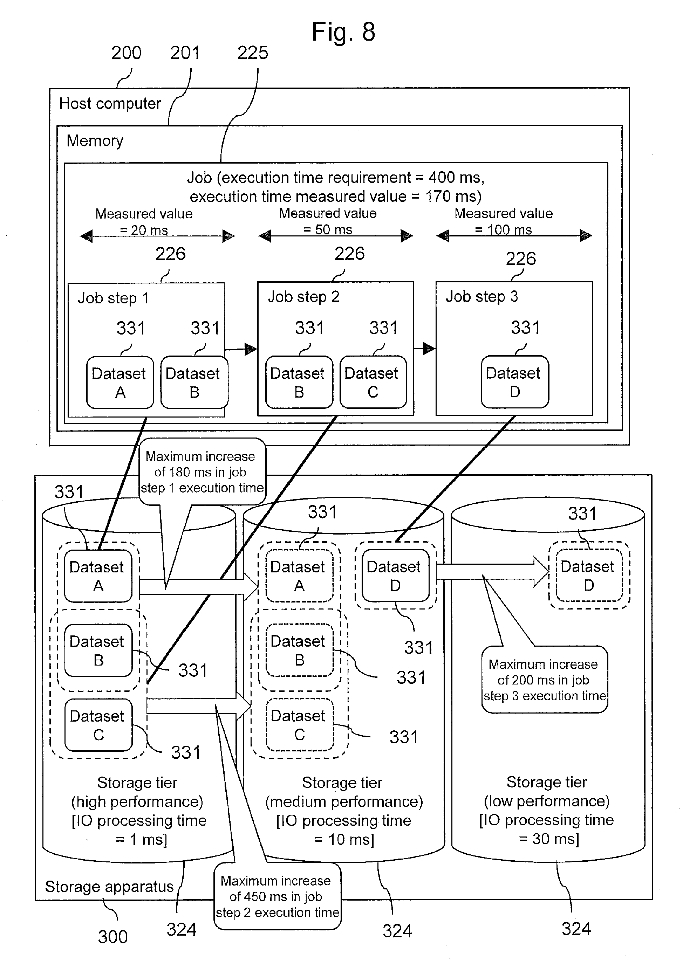

   Fig. 8 is a conceptual drawing illustrating an overview of a method for identifying an over-performance dataset related to Example 1.
[Fig. 9]

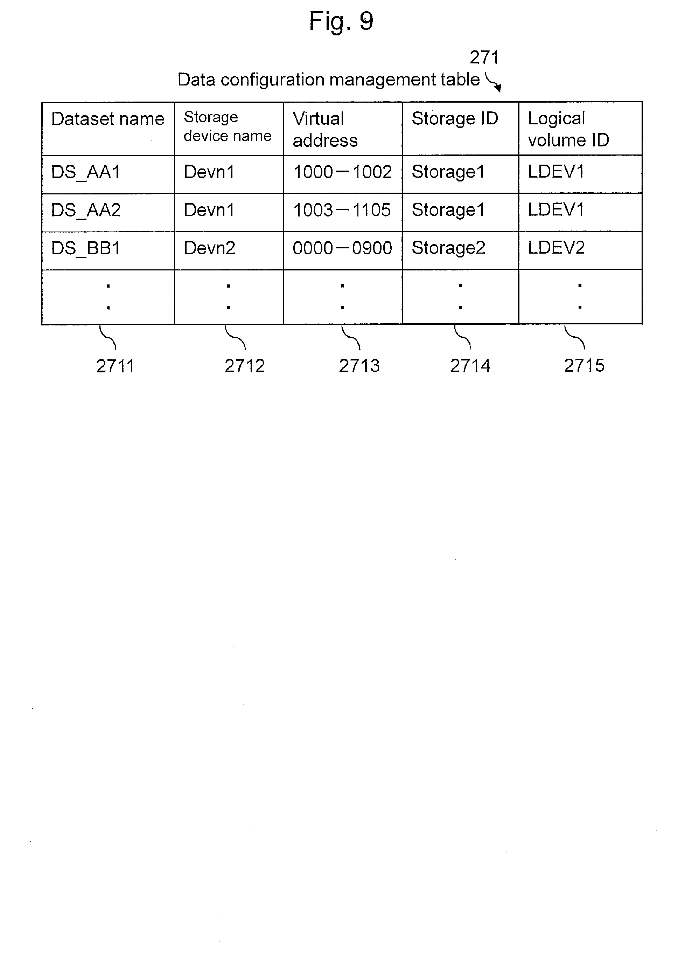

   Fig. 9 is a drawing showing an example of a data configuration management table related to Example 1.
[Fig. 10]

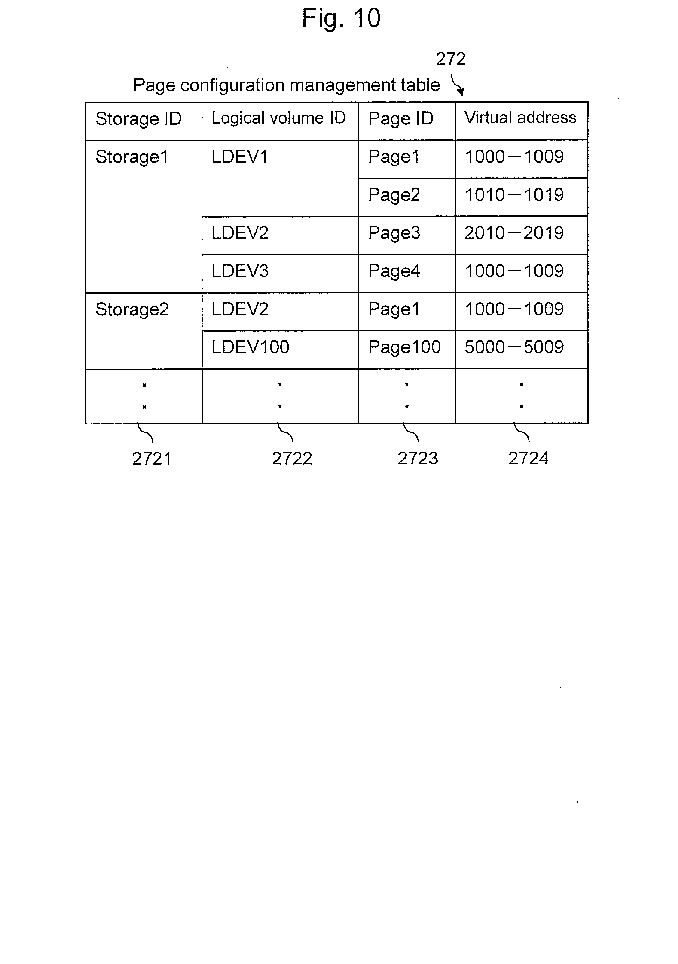

   Fig. 10 is a drawing showing an example of a page configuration management table related to Example 1.
[Fig. 11]

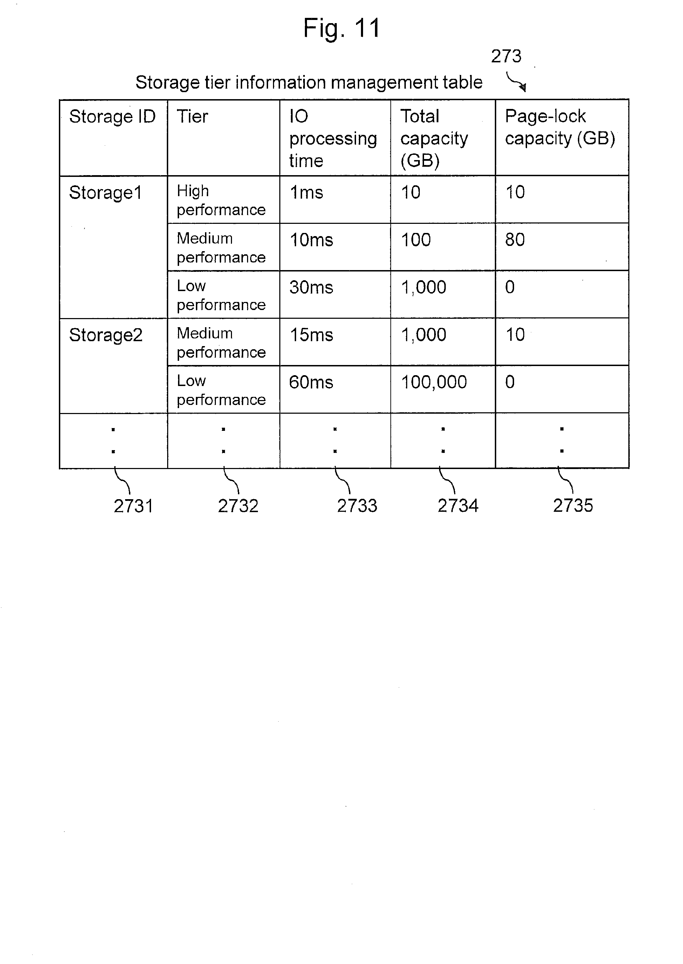

   Fig. 11 is a drawing showing an example of a storage tier information management table related to Example 1.
[Fig. 12]

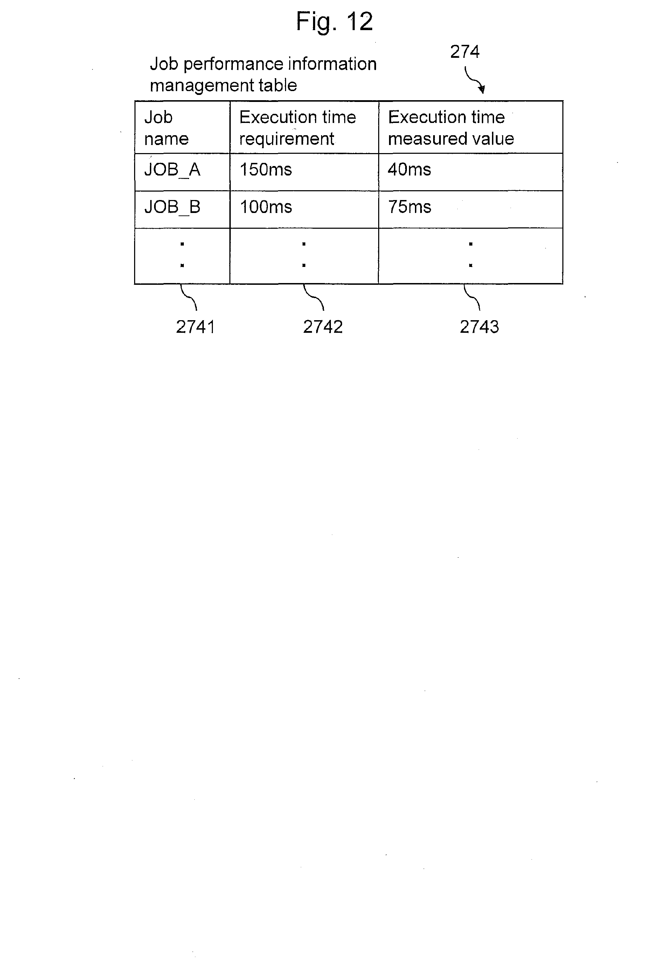

   Fig. 12 is a drawing showing an example of a job performance information management table related to Example 1.
[Fig. 13]

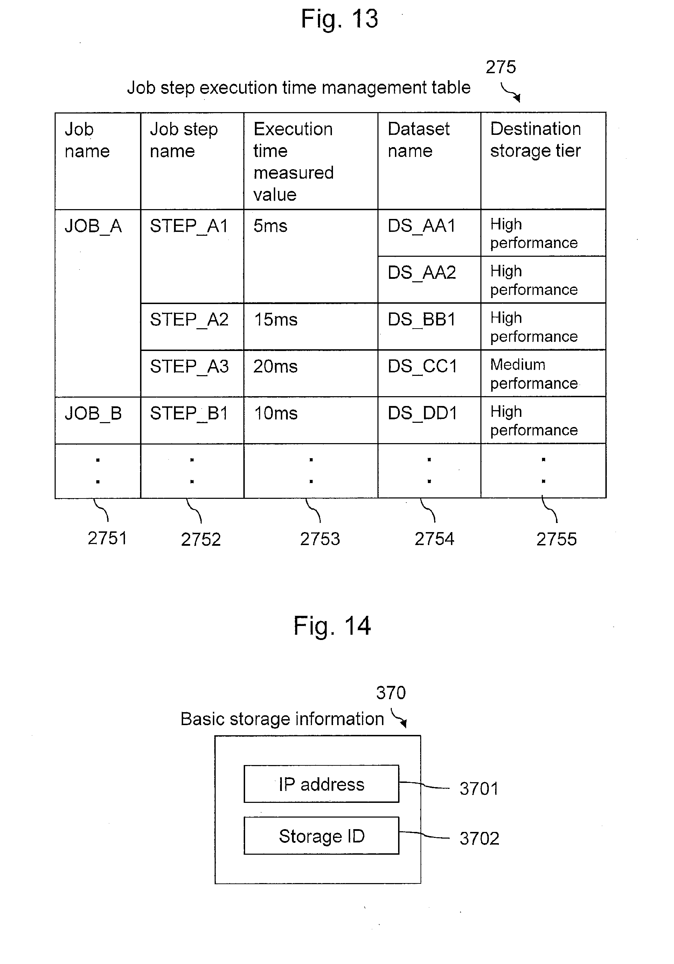

   Fig. 13 is a drawing showing an example of a job step execution time management table related to Example 1.
[Fig. 14]
   Fig. 14 is a drawing showing an example of basic storage information related to Example 1.
[Fig. 15]

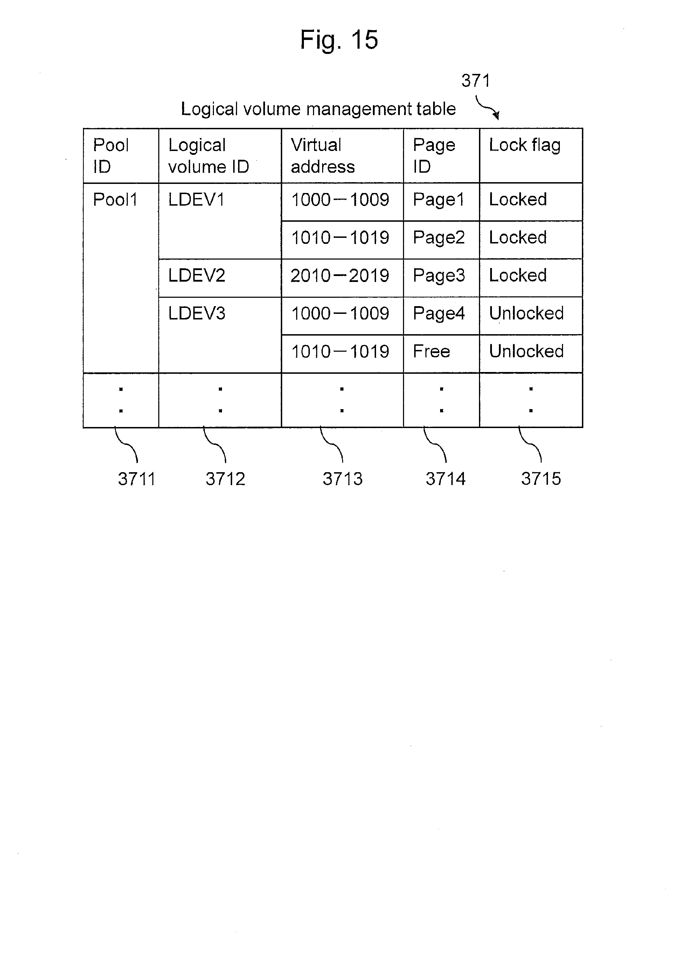

   Fig. 15 is a drawing showing an example of a logical volume management table related to Example 1.
[Fig. 16]

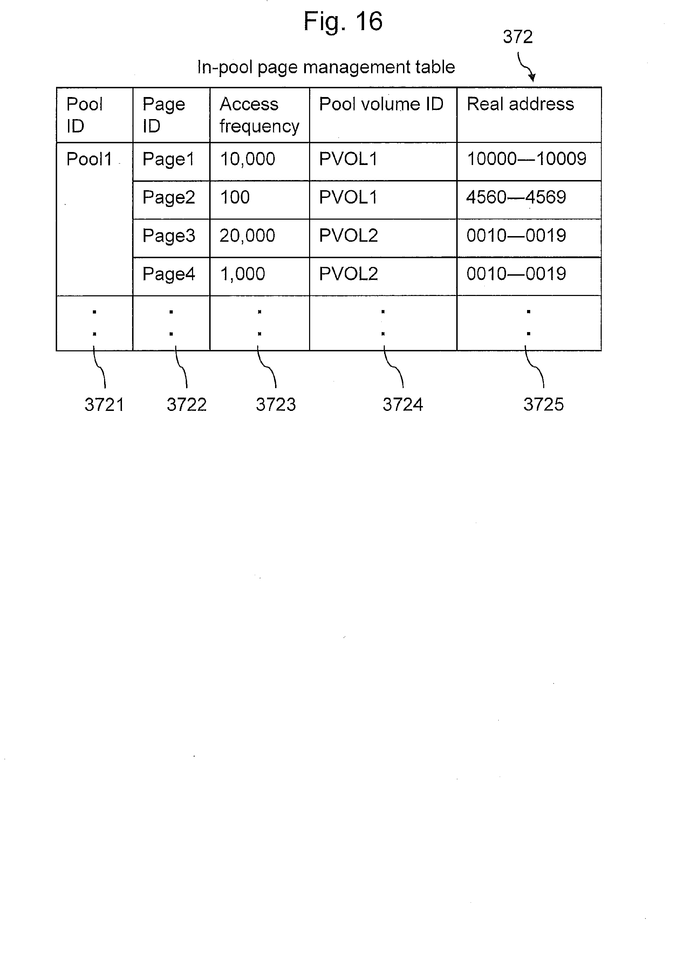

   Fig. 16 is a drawing showing an example of an in-pool page management table related to Example 1.
[Fig. 17]

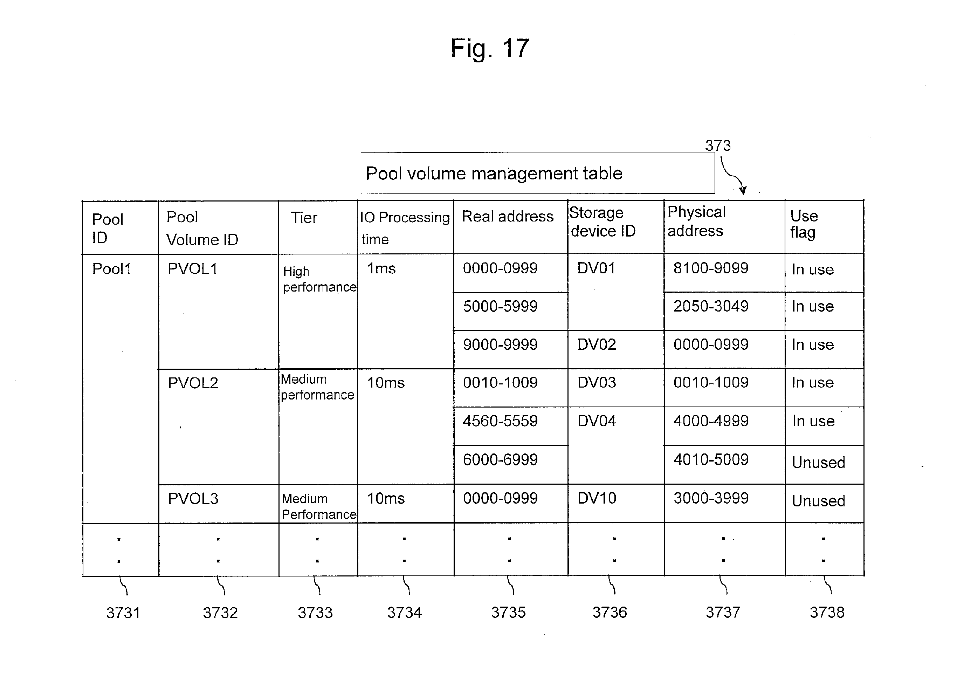

   Fig. 17 is a drawing showing an example of a pool volume management table related to Example 1.
[Fig. 18]

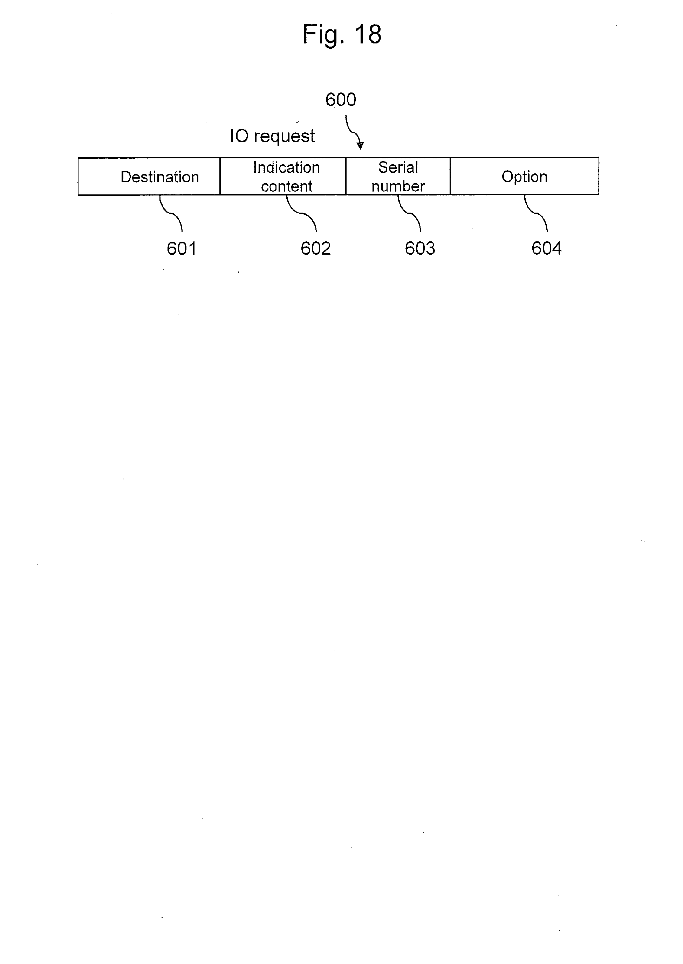

   Fig. 18 is a drawing showing an IO request related to Example 1.
[Fig. 19]

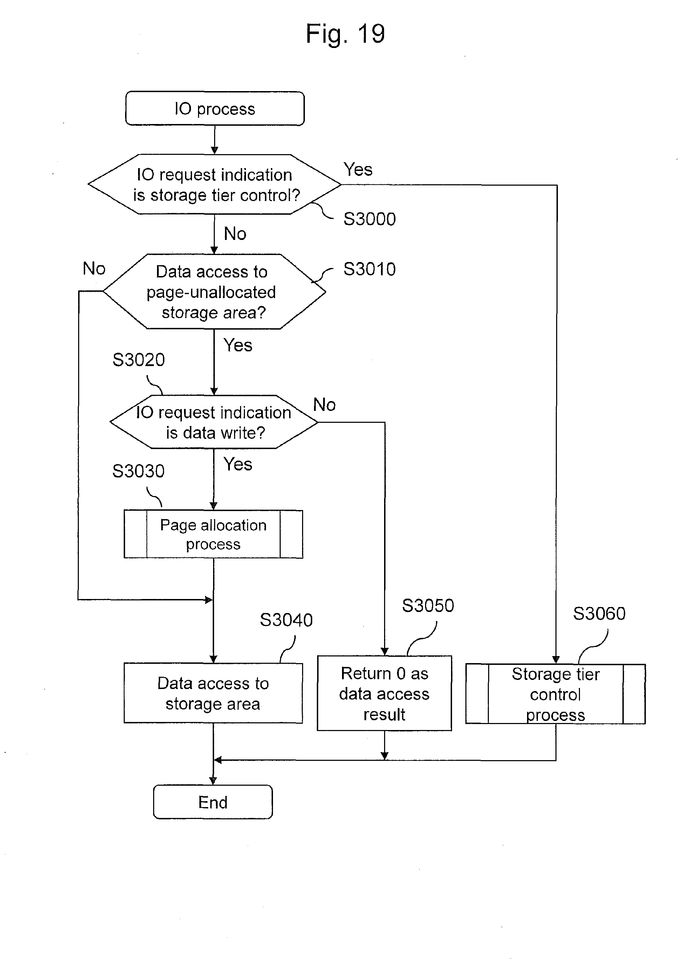

   Fig. 19 is a flowchart of an IO process related to Example 1.
[Fig. 20]

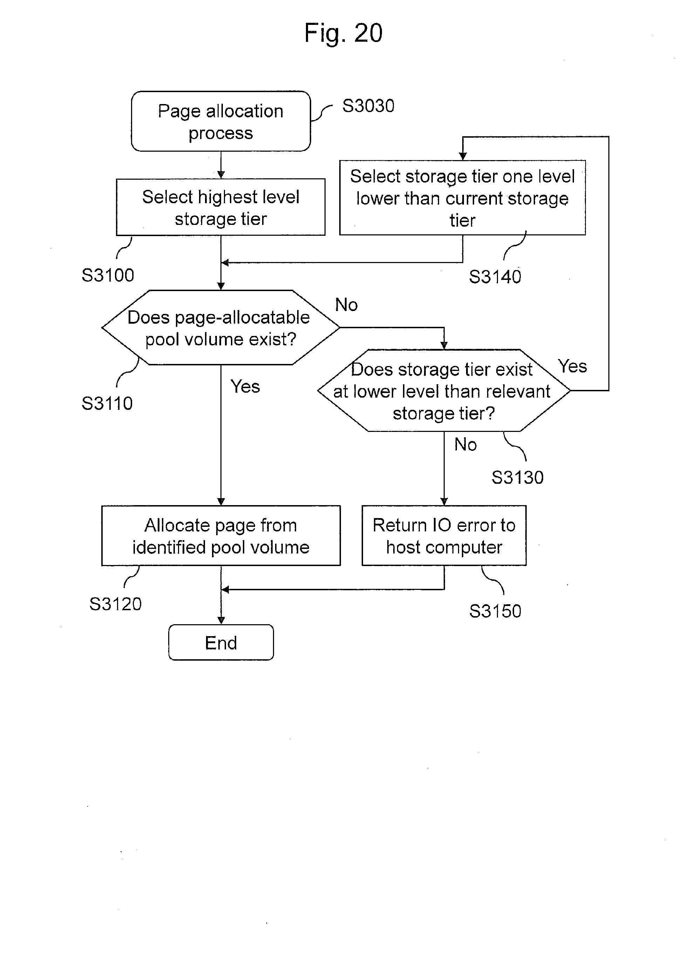

   Fig. 20 is a flowchart of a page allocation process related to Example 1.
[Fig. 21]

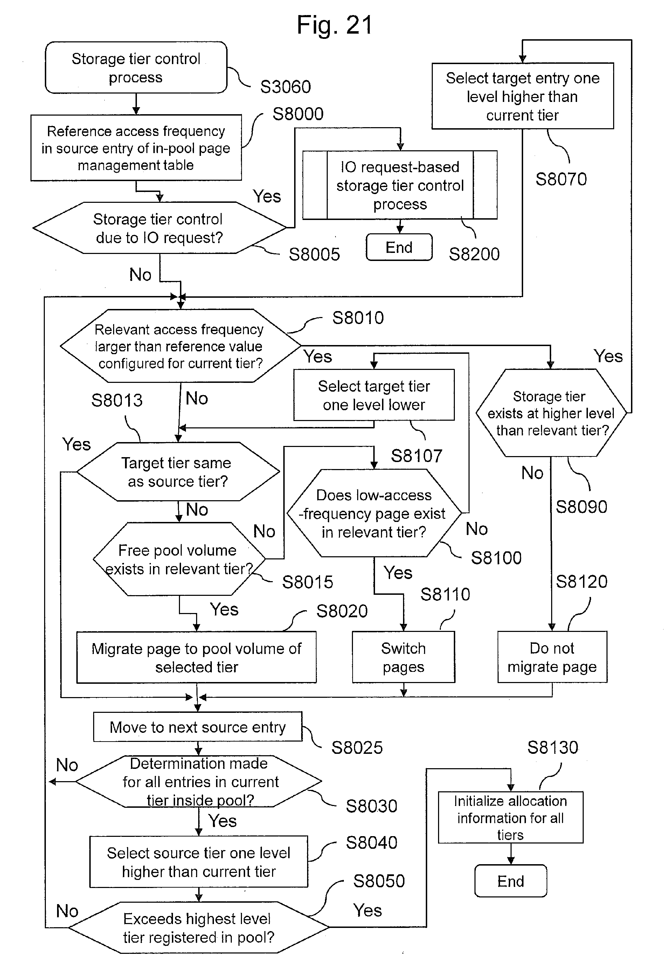

   Fig. 21 is a flowchart of a storage tier control process related to Example 1.
[Fig. 22]

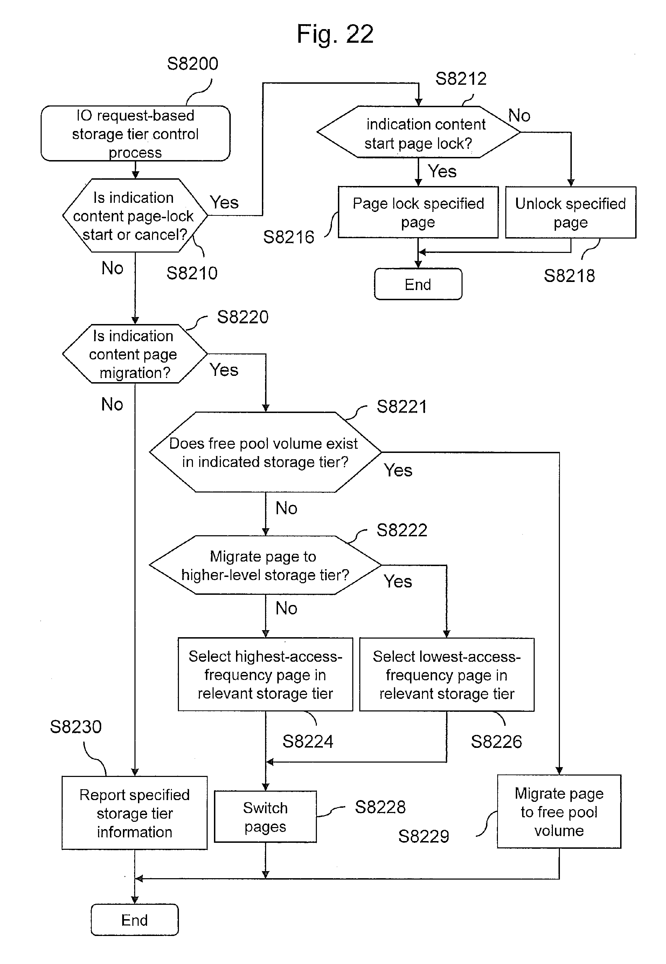

   Fig. 22 is a flowchart of an IO request-based storage tier control process related to Example 1.
[Fig. 23]

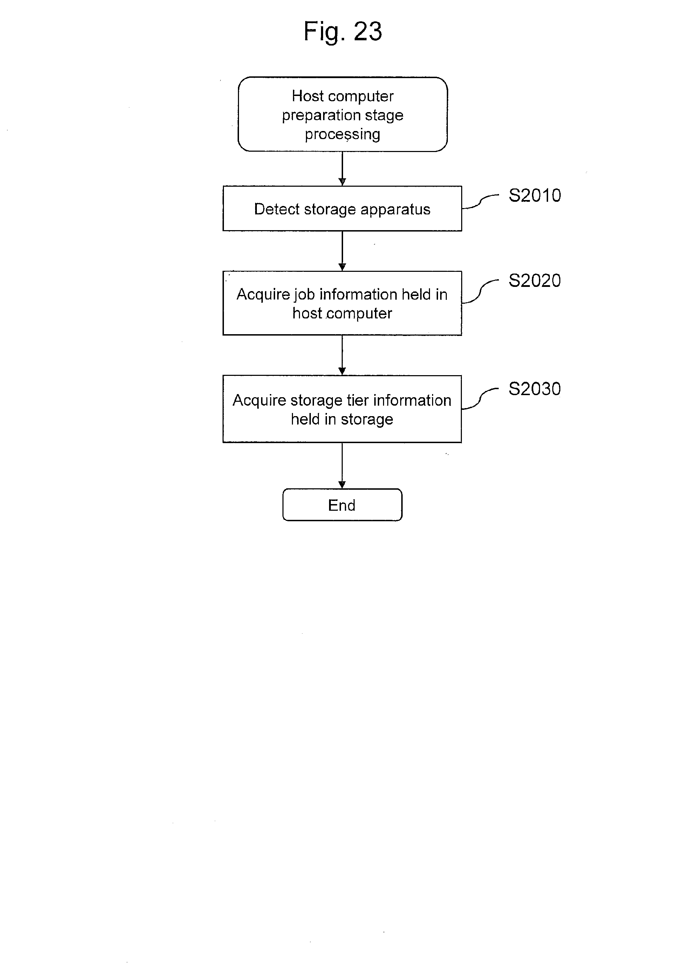

   Fig. 23 is a flowchart of a preparation process in a preparation stage of the host computer related to Example 1.
[Fig. 24]

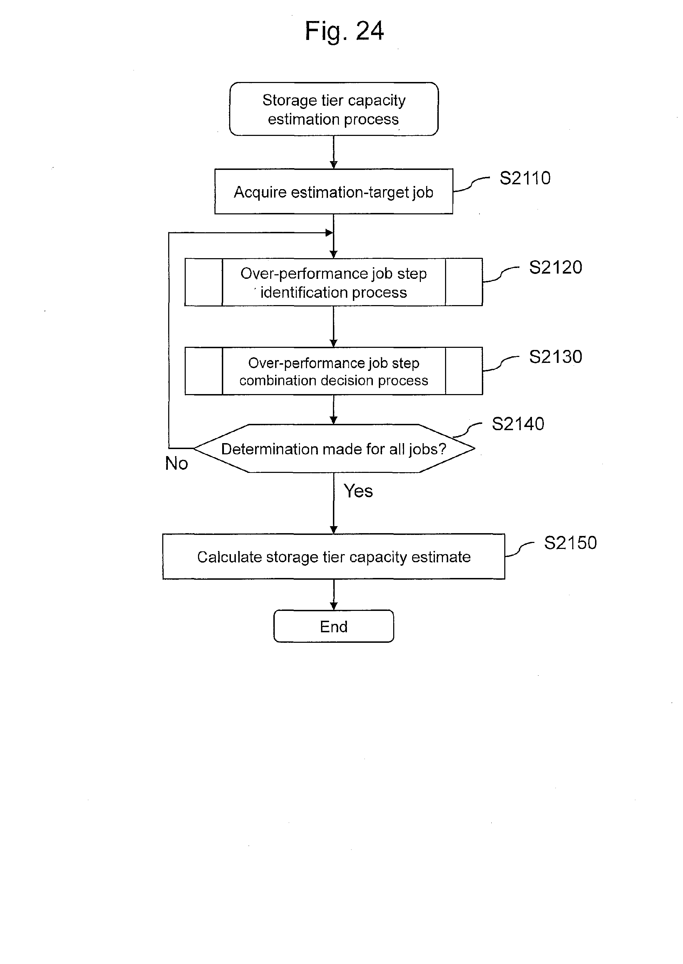

   Fig. 24 is a flowchart of a storage tier capacity estimation process related to Example 1.
[Fig. 25]

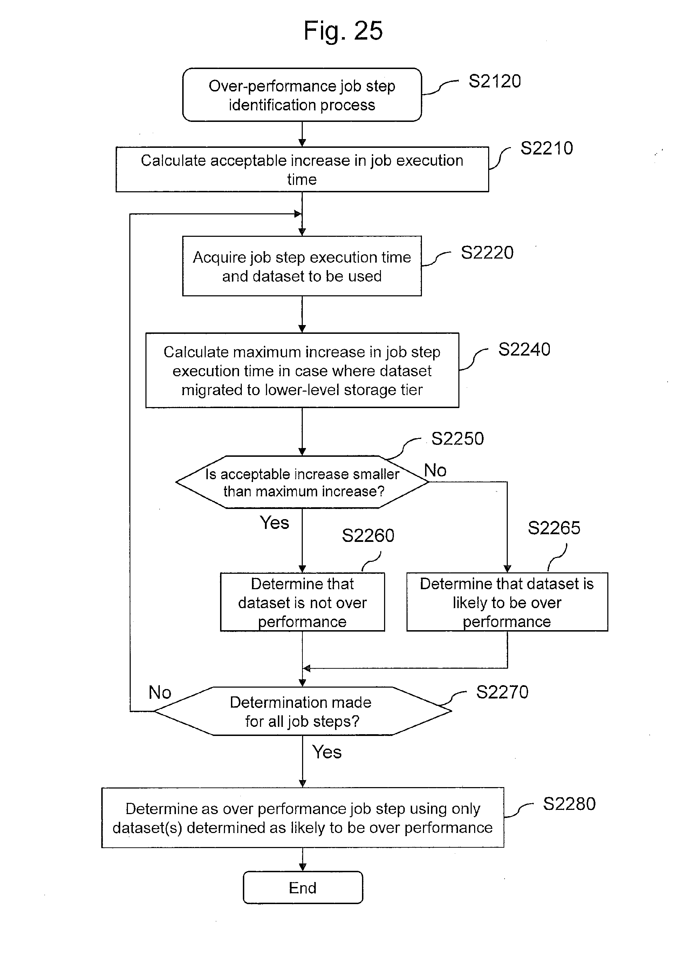

   Fig. 25 is a flowchart of an over-performance job step identification process related to Example 1.
[Fig. 26]

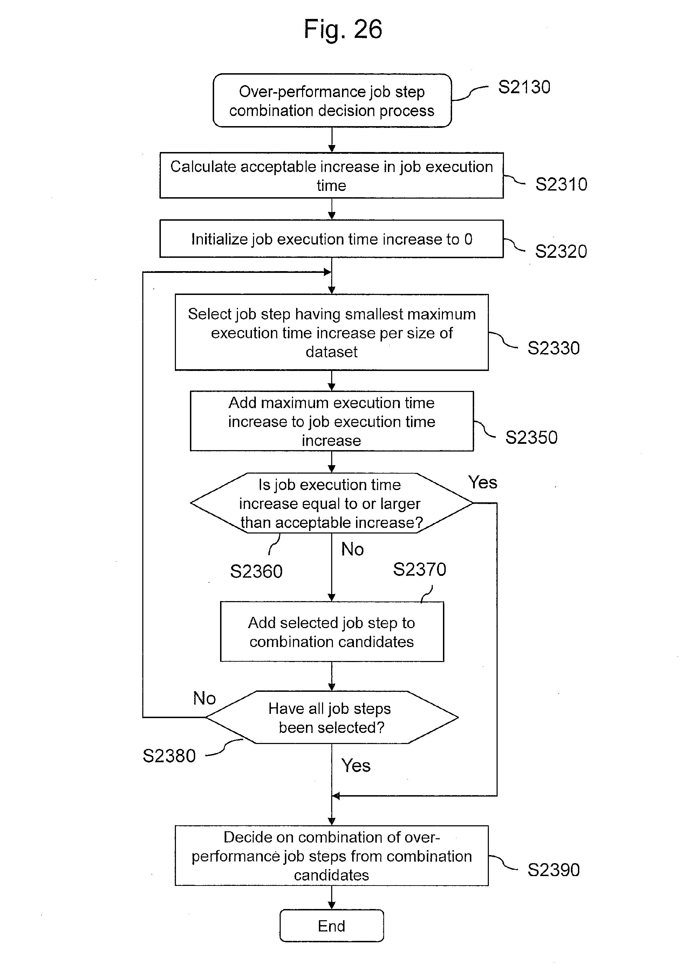

   Fig. 26 is a flowchart of an over-performance job step combination decision process related to Example 1.
[Fig. 27]

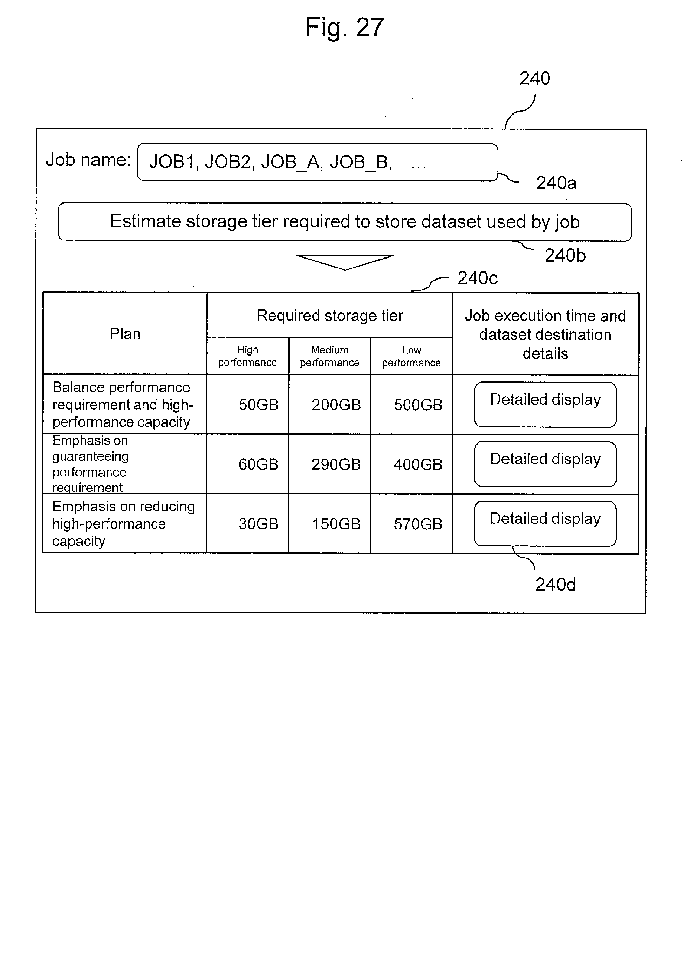

   Fig. 27 is a first drawing showing an example of a host computer operation screen related to Example 1.
[Fig. 28]

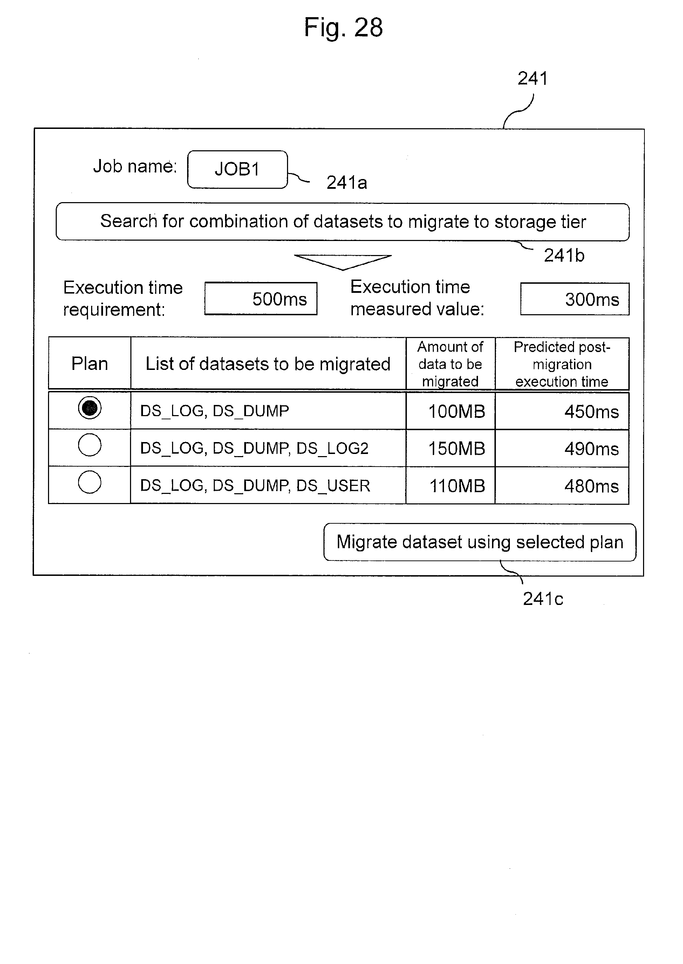

   Fig. 28 is a second drawing showing an example of a host computer operation screen related to Example 1.
[Fig. 29]

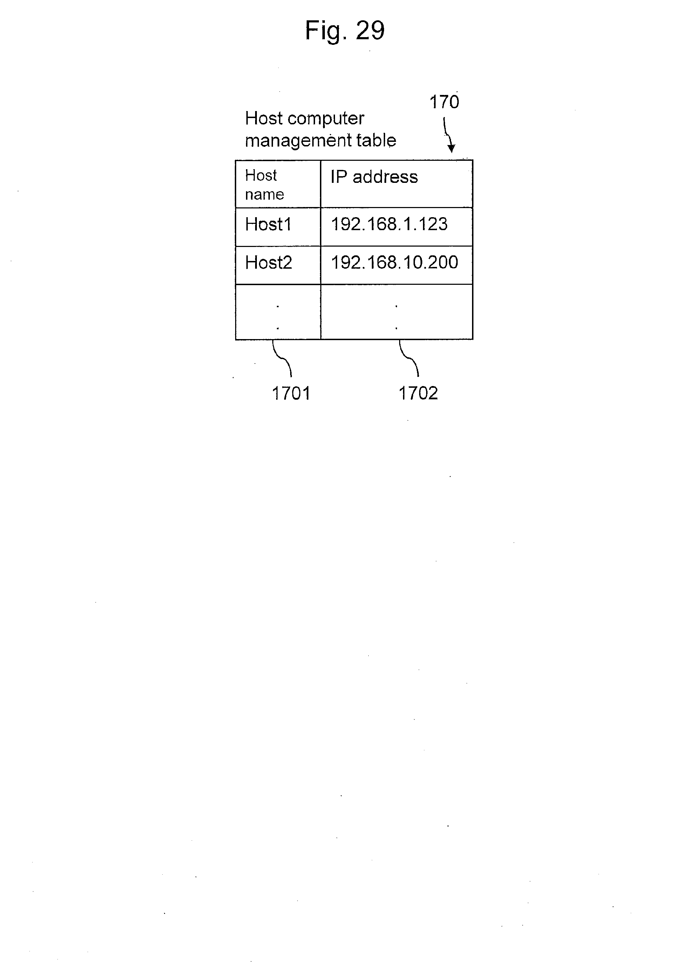

   Fig. 29 is a drawing showing an example of a host computer management table related to Example 1.
[Fig. 30]

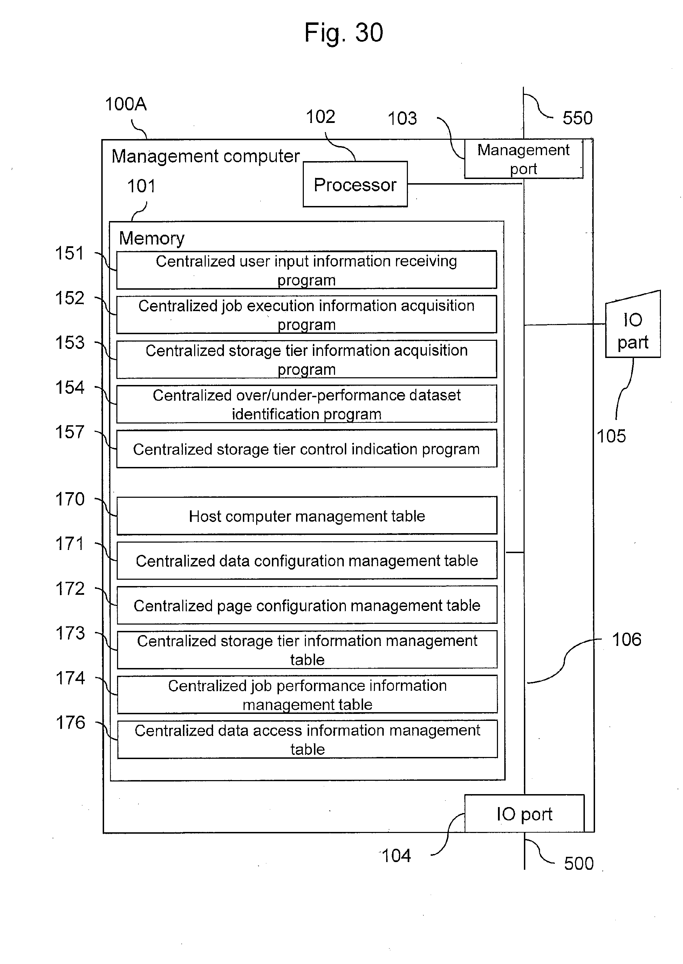

   Fig. 30 is a block diagram of a management computer related to Example 2.
[Fig. 31]

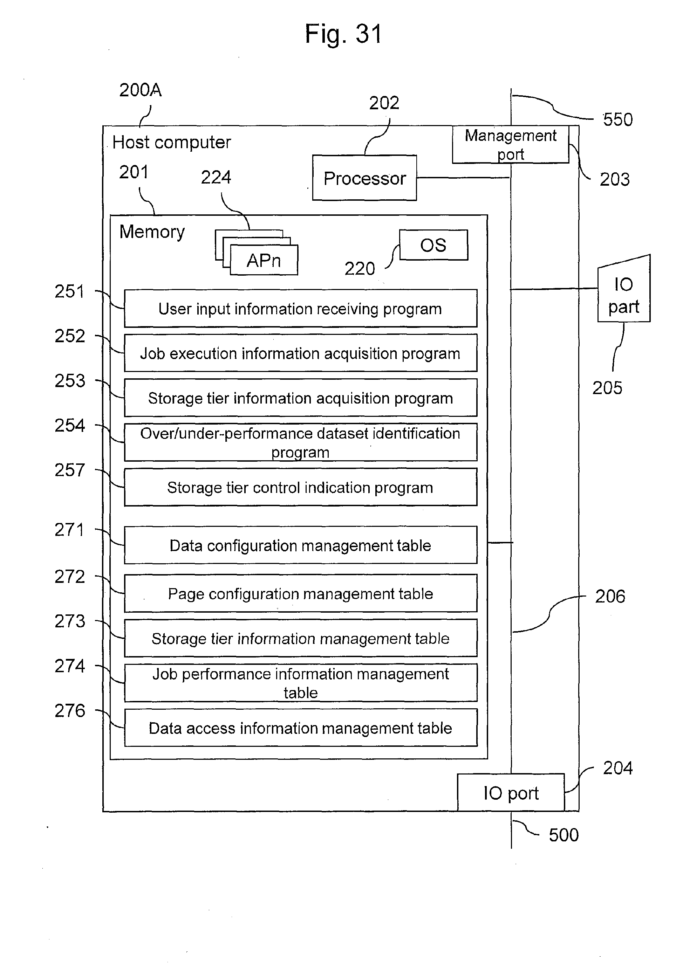

   Fig. 31 is a block diagram of a host computer related to Example 2.
[Fig. 32]

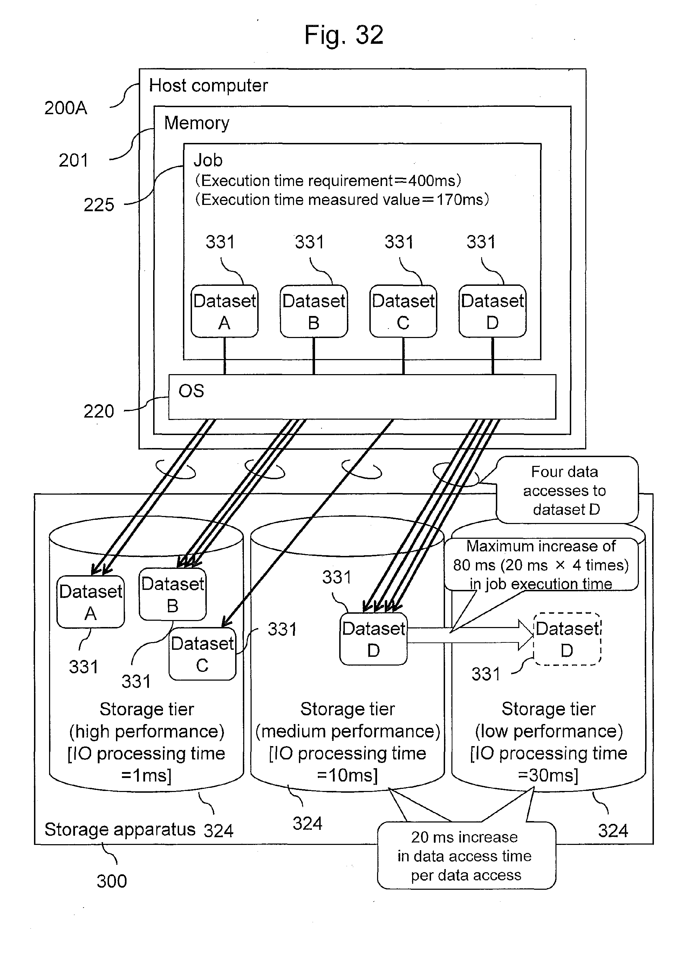

   Fig. 32 is a conceptual drawing illustrating an overview of a method for identifying an over-performance dataset related to Example 2.
[Fig. 33]

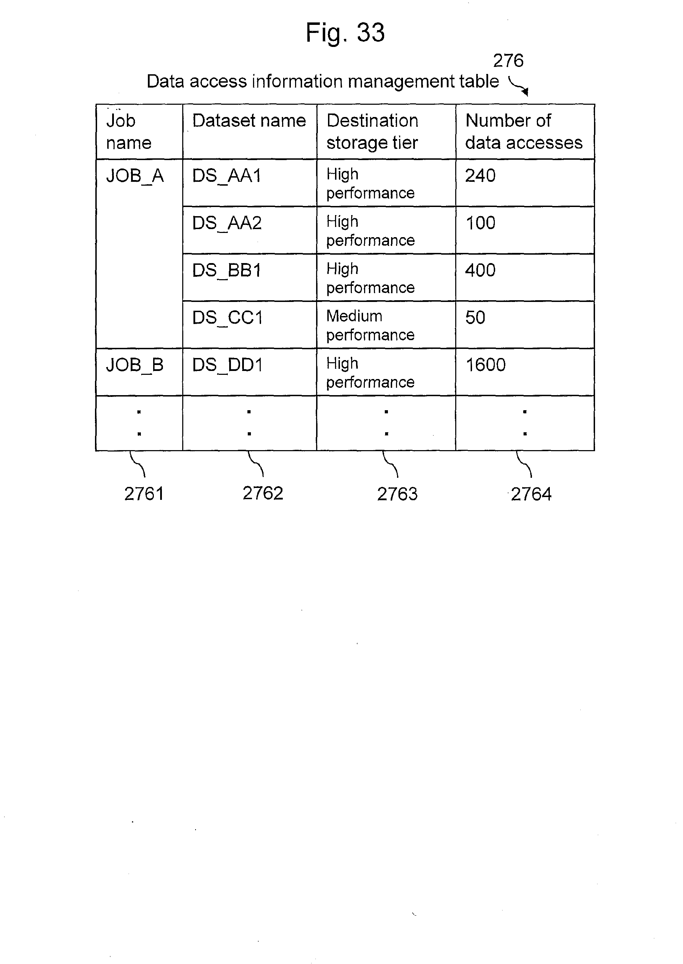

   Fig. 33 is a diagram showing an example of a data access information management table related to Example 2.
[Fig. 34]

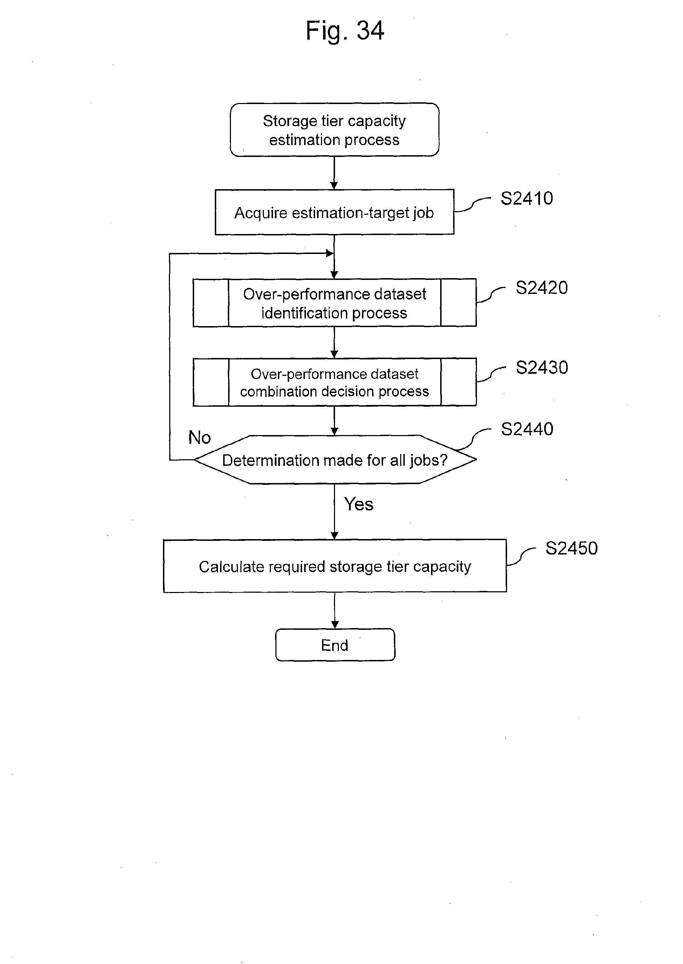

   Fig. 34 is a flowchart of a storage tier capacity estimation process related to Example 2.
[Fig. 35]

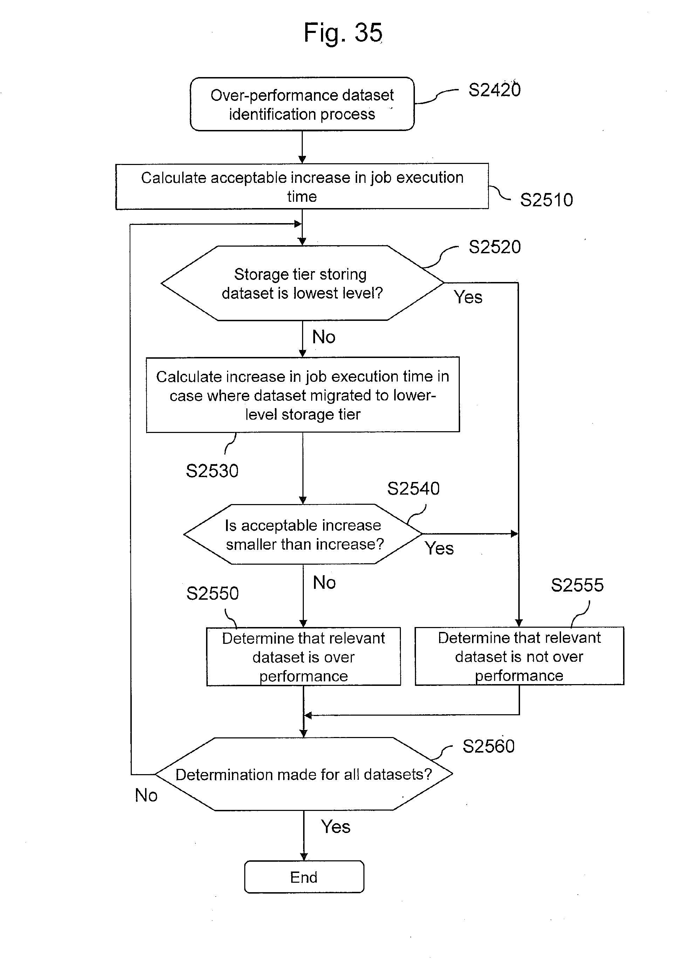

   Fig. 35 is a flowchart of an over-performance dataset identification process related to Example 2.
[Fig. 36]

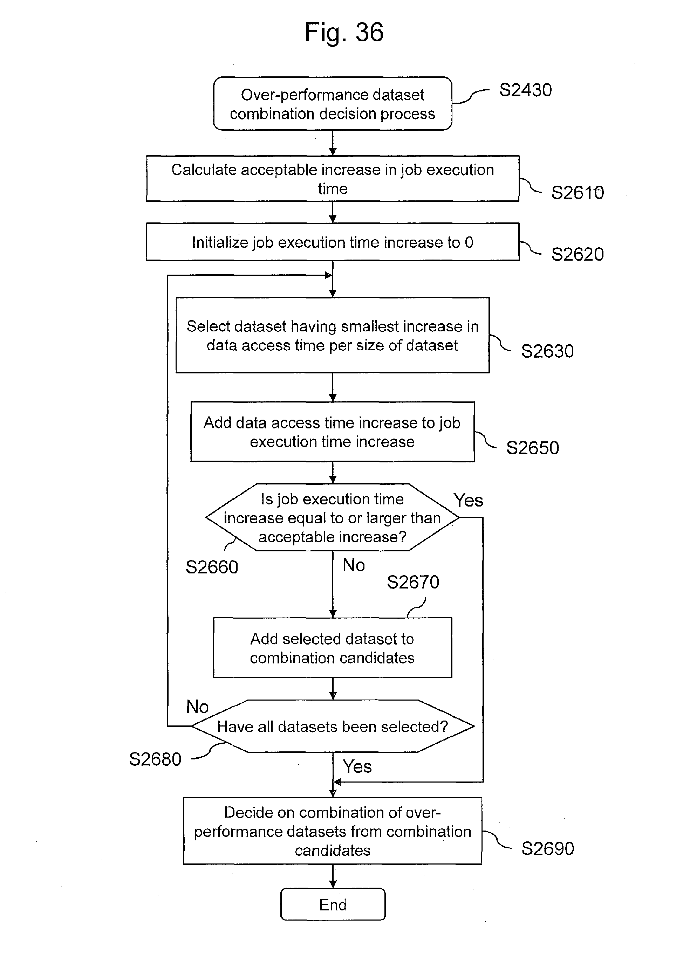

   Fig. 36 is a flowchart of an over-performance dataset combination decision process related to Example 2.
[Fig. 37]

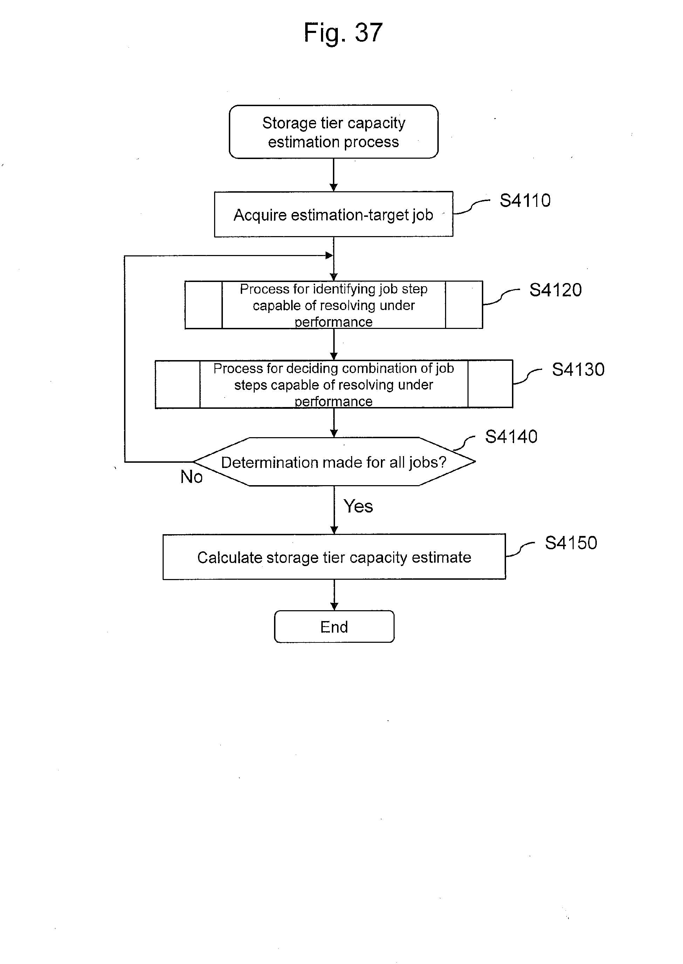

   Fig. 37 is a flowchart of a storage tier capacity estimation process related to Example 4.
[Fig. 38]

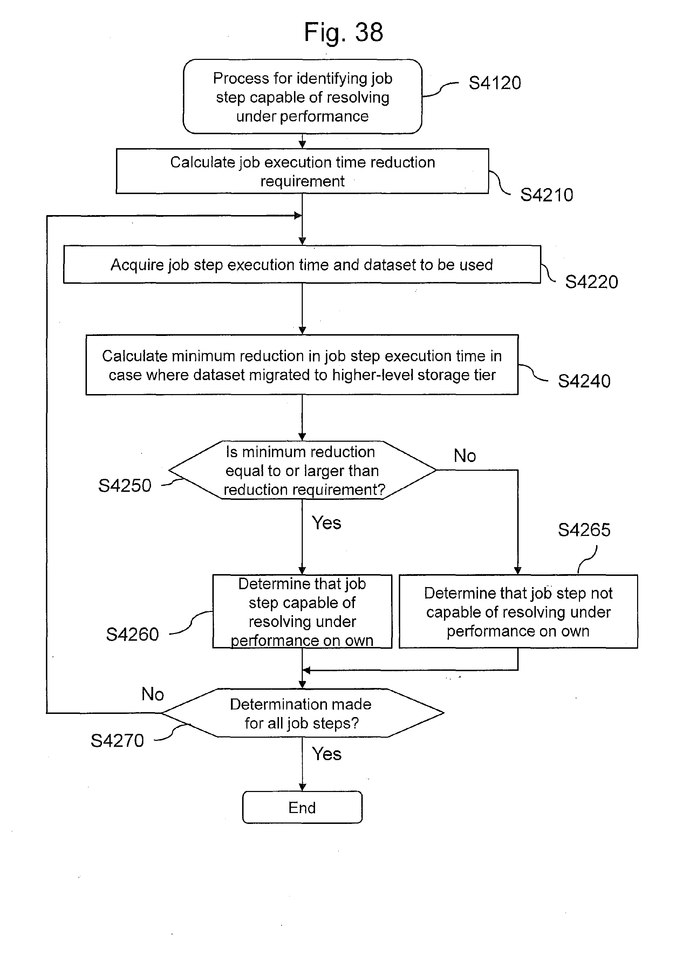

   Fig. 38 is a flowchart of a process for identifying a job step capable of resolving under performance related to Example 4.
[Fig. 39]

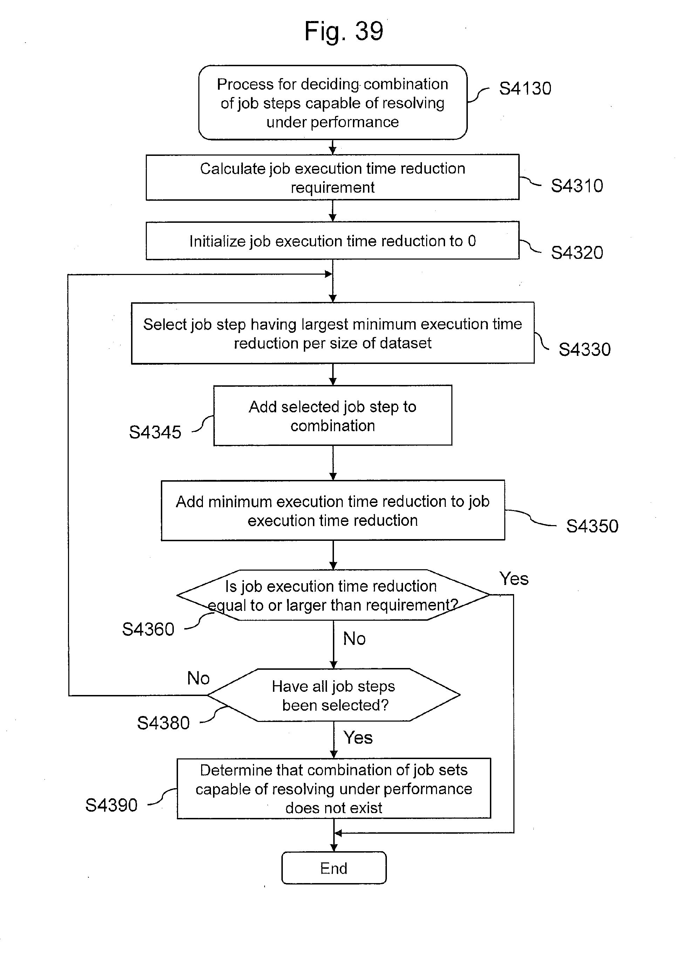

   Fig. 39 is a flowchart of a process for deciding a combination of job steps capable of resolving under performance related to Example 4.
[Fig. 40]

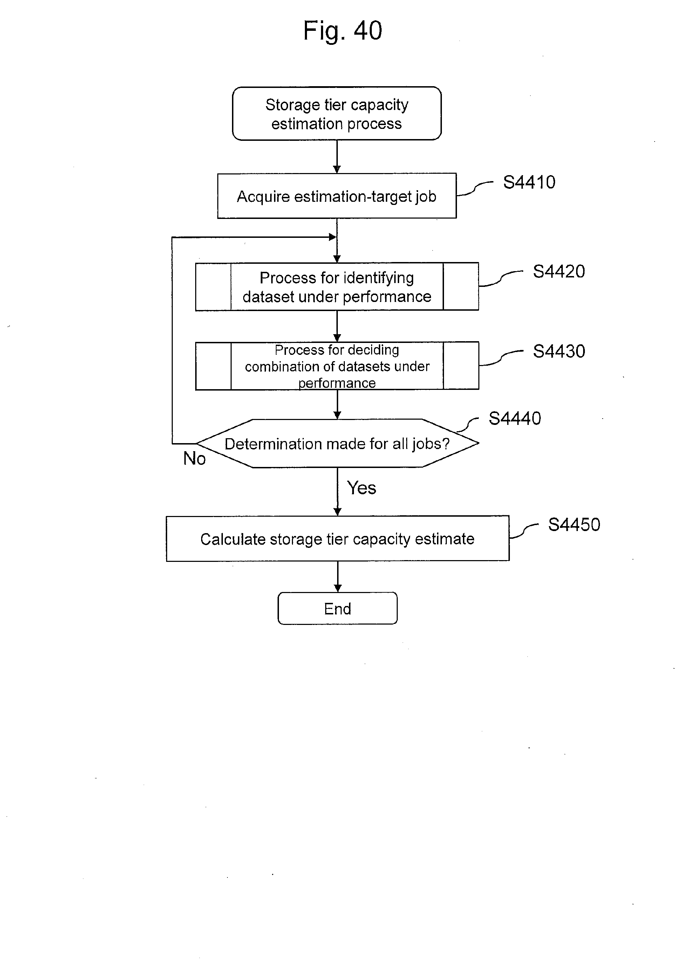

   Fig. 40 is a flowchart of a storage tier capacity estimation process related to Example 5.
[Fig. 41]

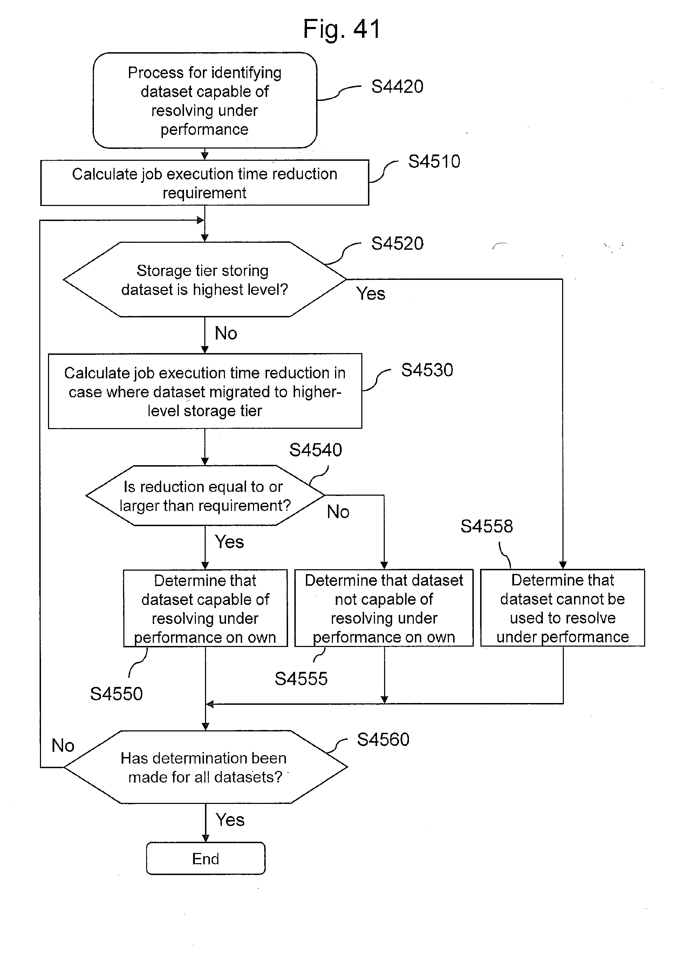

   Fig. 41 is a flowchart of a process for identifying a dataset capable of resolving under performance related to Example 5.
[Fig. 42]

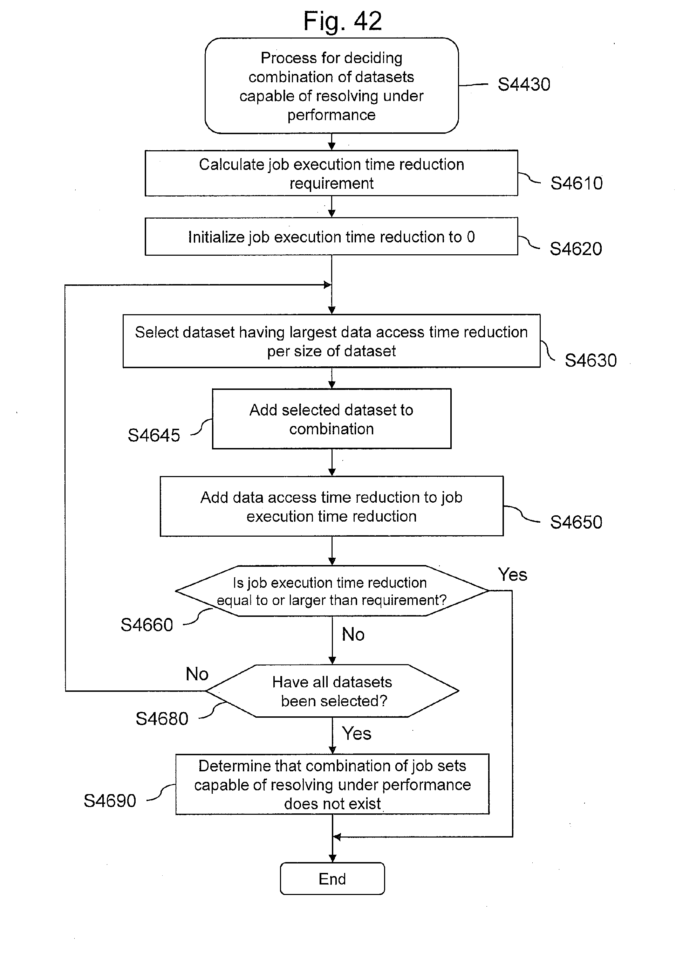

   Fig. 42 is a flowchart of a process for deciding a combination of datasets capable of resolving under performance related to Example 5.

### [Description of the Embodiment]

A number of examples will be explained by referring to the drawings. The examples explained below do not limit the invention related to the claims, and not all of the elements and combinations thereof explained in the examples are essential for the solution provided by the invention.

In the following explanation, various information may be explained using expressions such as "aaa table", but the various information may also be expressed using a data structure other than a table. To show that this information is not dependent on the data structure, "aaa table" may be called "aaa information". In addition, information elements comprising the values of respective columns in the table will be called an entry, and an entry of an "aaa table" will be named "aaa table entry" for explanation purposes.

In the following explanation, there may be cases where a process is explained using simply a management computer or a host computer as the subject, but these processes are executed by a processor (for example, a CPU (Central Processing Unit)) of a control device in a computer. Similarly, a case in which a process is explained having simply a storage apparatus as the subject shows that a controller in the storage apparatus is executing the processing. At least one of the above-mentioned control device and controller may be the processor itself, and the processor may comprise a hardware circuit for performing either all or part of the processing performed by either the control device or the controller.

A program may be installed in the respective computers or the storage apparatus from a program source. The program source, for example, may be either a program distribution server or a storage medium.

In the following explanation, an application performance requirement will be explained as an execution time requirement, but the application performance requirement is not limited to an execution time requirement. For example, the application performance requirement may be an execution rate requirement. Similarly, IO performance is explained as the time required for data access, but IO performance is not limited to the time required for data access.

Here a "task", which is a unit of processing executed in accordance with the host computer as viewed by the user, is equivalent to a "job" in a case where the host computer is a mainframe, and is equivalent to a "task" in a case where the host computer is a so-called open system. A "subtask", which is included in a "task", is equivalent to a "job step" in a case where the host computer is a mainframe, and is equivalent to a "subtask" in a case where the host computer is an open system. A "data object", which is a unit of data used by the host computer, is equivalent to a "dataset" in a case where the host computer is a mainframe, and is equivalent to a "file" in a case where the host computer is an open system.

### [Example 1]

### (1-1) Overview of Example 1

In Example 1, it is supposed that the host computer is a mainframe. The mainframe executes an application by defining an application program for a job, which the user recognizes as a single processing unit. Thus, in the mainframe, the job performance requirement is equivalent to the application performance requirement. In the mainframe, the data object, which is the data unit used by the host computer, is equivalent to a dataset. Therefore, in Example 1, the application performance requirement is explained as the job performance requirement, and the data object is explained as the dataset.

For a job application that meets the performance requirement, Example 1 identifies, from among the datasets used by the relevant application, a file, which can be stored in a storage tier having a lower IO performance than the current storage tier while meeting the performance requirement of the relevant job.

The intention here is that the user is able to ascertain a dataset, which is able to be migrated to a storage tier having a lower IO performance than the current storage tier. This makes it possible for the user to appropriately ascertain the capacity of each storage tier required for storing the dataset(s) used by the relevant application. In accordance with storing the relevant dataset(s) in a storage tier having lower IO performance than the current storage tier, it becomes possible for another dataset to effectively utilize a storage tier having a higher IO performance. Or, it becomes possible to lower the utilization frequency of a storage tier having relatively high IO performance, making it possible to extend the life of the storage device configuring the relevant storage tier.

A dataset, which is able to be migrated to a storage tier having a lower IO performance than the current storage tier, that is, a lower-level storage tier, while meeting the performance requirement of a job will be called an over-performance dataset hereinafter.

In Example 1, for each job step comprising a job, the host computer 200 determines whether or not either one or multiple datasets used by the application for this job step is over performance. Specifically, the host computer 200 calculates an acceptable increase in execution time based on a difference between the job execution time requirement and an execution time measured value. Next, the host computer 200 calculates the increase in the execution time of the relevant job step in a case where a dataset used in the job step is migrated to a lower-level storage tier. Then, the host computer 200 determines whether or not the dataset used in the relevant job step is over performance in accordance with comparing the increase in the execution time to the acceptable increase in execution time.

The determination for each job step as to whether or not one or multiple datasets used in the job step are over performance is made for the following three reasons. The first reason is that the job step is a smaller processing unit than the job. The second reason is that the number of job steps comprising the job is smaller than the number of datasets used by the job. Thus, it is because it is easier to acquire the execution time of each job step than to acquire the data access time of each dataset. The third reason is that the used dataset is defined by the job step, making it possible to identify the dataset used in the job set.

In addition, the host computer 200 combines one or multiple over-performance datasets within a range that meets the job performance requirement. Then, the host computer 200 presents the combination of one or multiple over-performance datasets to the user.

This makes it possible for the user to ascertain either a dataset or a set of datasets, which are able to be migrated to a storage tier having a lower IO performance than the current storage tier within a range that meets the job performance requirement without identifying the IO performance requirement required for each dataset.

### (1-2) Computer System Hardware Configuration

Fig. 1 is a hardware block diagram of a computer system related to Example 1.

A computer system 10 comprises a management computer 100, the host computer 200, and a storage apparatus 300. The management computer 100 and the host computer 200 may be the same computer. There may be one of each of the management computer 100 and the host computer 200, or there may be multiple units of at least one thereof. Either the management computer 100 or the host computer 200 here is an example of the computer referred to in the claims.

The management computer 100, the host computer 200, and the storage apparatus 300 are coupled to one another via a communication network (for example, a SAN (Storage Area Network)) 500 for IO processing. The host computer 200 sends the storage apparatus 300 via the communication network 500 various types of data, for example, an IO request 600 (refer to Fig. 18) for, issuing either a data access (data IO) or a storage tier control indication. The storage apparatus 300 receives the IO request via the communication network 500, executes processing corresponding to the IO request, and sends the host computer 200 a response with respect to the received IO request 600.

The management computer 100 is coupled to the host computer 200 and the storage apparatus 300 via a communication network (for example, a LAN (Local Area Network)) 550 for managing apparatuses. The management computer 100 sends either the host computer 200 or the storage apparatus 300 various types of data, for example, data for instructing storage tier control, via the communication network 550. The communication network 500 and the communication network 550 may be a single communication network.

The configurations of the storage apparatus 300, the host computer 200, and the management computer 100 will be described hereinbelow, and the various types of tables and programs held by these apparatuses will be described in detail in (1-4) Contents of Various Types of Tables and (1-5) Each Apparatus Operations, respectively.

Fig. 4 is a block diagram of the storage apparatus 300 related to Example 1.

The storage apparatus 300 comprises a memory 301, a controller 302, a management port 303, an IO port 304, a cache memory 307, a storage device 308 (308A, 308B, 308C), an IO part 305, and an internal network 306. The controller 302 is coupled to the memory 301, the management port 303, the IO port 304, the cache memory 307, the storage device 308, and the IO part 305 via the internal network 306.

The memory 301 stores programs, which are executed by the controller 302, and information, which is required by the controller 302. Specifically, the memory 301 stores an IO processing program 351, a page allocation control program 352, a storage tier control program 353, a storage apparatus management program 354, basic storage information 370, a logical volume management table 371, an in-pool page management table 372, and a pool volume management table 373.

The IO processing program 351 is for processing an IO request 600 received via the IO port 304. The IO request 600, for example, comprises either a data access indication, or a storage tier control indication (one example of a migration request). The IO request 600 will be explained in detail further below. The page allocation control program 352 is for allocating a page 323 to a storage area specified in the relevant IO request 600 in a case where a data write request has been made via the IO request 600. The storage tier control program 353 is for performing storage tier control. The storage apparatus management program 354 is for receiving an input from the user via the IO part 305 and configuring the storage apparatus 300.

The basic storage information 370 is identifier information for a storage apparatus 300 on the communication network 550. The logical volume management table 371 stores information for managing a logical volume 322. The logical volume 322 will be explained in detail further below. The in-pool page management table 372 stores information for managing a page 323. The in-pool page management table 372 will be explained in detail further below. The pool volume management table 373 stores information for managing a pool volume 320. The pool volume management table 373 will be explained in detail further below.

The controller 302 performs various types of processing in accordance with executing a program stored in the memory 301. For example, the controller 302 performs a data access with respect to a specified logical volume 322 in accordance with executing processing, which conforms to an IO request 600 received via the IO port 304. The management port 303 is an interface for coupling to the management computer 100 and the host computer 200 via the communication network 550. The IO port 304 is an interface for coupling to the management computer 100 and the host computer 200 via the communication network 500. The cache memory 307 temporarily stores data to be written to a storage device 308 and data read from a storage device 308.

The storage device 308 comprises a storage media, and stores data specified in a write request from the host computer 200. The storage apparatus 300 comprises either one or multiple storage devices 308. As the storage devices 308, for example, there is a storage device 308A (SSD (Solid State Disk)), a storage device 308B (SAS (Serial Attached SCSI)), and a storage device 308C (SATA (Serial ATA)).

The IO part 305 comprises an input part for receiving an input from the user (for example, a keyboard, a switch, a pointing device and/or a microphone), and an output part for displaying various types of information to the user (for example, a display device and/or a speaker).

Fig. 3 is a block diagram of the host computer 200 related to Example 1.

The host computer 200 comprises a memory 201, a processor 202, a management port 203, an IO port 204, an IO part 205, and an internal network 206. The memory 201, the processor 202, the management port 203, the IO port 204, and the IO part 205 are coupled to one another via the internal network 206.

The memory 201 stores programs executed by the processor 202 and information and so forth required by the processor 202. Specifically, the memory 201 stores an Operating System (OS) 220, either one or multiple application programs (AP) 224, a user input information receiving program 251, a job execution information acquisition program 252, a storage tier information acquisition program 253, an over/under-performance dataset identification program 254, a storage tier control indication program 257, a data configuration management table 271, a page configuration management table 272, a storage tier information management table 273, a job performance information management table 274, and a job step execution time management table 275.

The OS 220 is a program for controlling the overall processing of the host computer 200. The AP 224 is a program, which defines various types of processing executed by the processor 202 of the host computer 200. For example, the host computer 200 processor 202 executes processing based on the definition by the AP 224, and provides either a database function or a mail server function. The user input information receiving program 251 is for receiving an input of information from the user via the IO part 205. The job execution information acquisition program 252 is for acquiring information related to a job 225 of the OS 220. The job 225 will be explained in detail further below. The storage tier information acquisition program 253 is for acquiring information related to a storage tier of the storage apparatus 300. The over/under-performance dataset identification program 254 is for identifying an over-performance dataset 331 from among the datasets 331 being used in the job 225. The storage tier control indication program 257 is for instructing the storage apparatus 300 to control a storage tier based on a storage tier control indication received from the user via the IO part 205.

The data configuration management table 271 stores information related to a dataset 331 stored in the storage apparatus 300. The page configuration management table 272 stores information for associating a page 323 with a dataset 331. The storage tier information management table 273 stores information related to the utilization status of a storage tier 324 of the storage apparatus 300. The job performance information management table 274 stores information for managing the performance of the job 225. The job step execution time management table 275 stores information for managing the execution time of the processing of a job step 226 comprising the job 225. The job step 226 will be explained in detail further below.

The processor 202 performs various types of processing in accordance with executing a program stored in the memory 201. For example, the processor 202, in accordance with sending an IO request 600 to the storage apparatus 300, performs either storage tier control executed by the storage apparatus 300 or a data access with respect to a dataset 331 of a logical volume 322 managed by the storage apparatus 300. The management port 203 is an interface for coupling the management computer 100 and the storage apparatus 300 via the communication network 550. The IO port 204 is an interface for coupling the management computer 100 and the storage apparatus 300 via the communication network 500. The IO part 205 comprises an input part for receiving an input from the user (for example, a keyboard, a switch, a pointing device and/or a microphone), and an output part for displaying various types of information to the user (for example, a display device and/or a speaker).

Fig. 2 is a block diagram of the management computer 100 related to Example 1.

The management computer 100 comprises a memory 101, a processor 102, a management port 103, an IO port 104, an IO part 105, and an internal network 106. The memory 101, the processor 102, the management port 103, the IO port 104, and the IO part 105 are coupled to one another via the internal network 106.

The memory 101 stores programs executed by the processor 102 and information and so forth required by the processor 102. Specifically, the memory 101 stores a centralized user input information receiving program 151, a centralized job execution information acquisition program 152, a centralized storage tier information acquisition program 153, a centralized over/under-performance dataset identification program 154, a centralized storage tier control indication program 157, a host computer management table 170, a centralized data configuration management table 171, a centralized page configuration management table 172, a centralized storage tier information management table 173, a centralized job performance information management table 174, and a centralized job step execution time management table 175. The memory 101 may also store an OS and an AP.

The centralized user input information receiving program 151 is for receiving an input of information from the user via the IO part 105. The centralized job execution information acquisition program 152 is for acquiring information related to a job 225 of the OS 220 stored in the memory 201 of either one or multiple host computers 200. The centralized storage tier information acquisition program 153 is for acquiring information related to a storage tier of the storage apparatus 300. The centralized over/under-performance dataset identification program 154 is for identifying an over-performance dataset 331 from among the datasets 331 used in the job 225 being executed by the processor in either one or multiple host computers 200.

The host computer management table 170 stores information related to one or more host computers 200 targeted for management by the management computer 100. The centralized data configuration management table 171 stores information related to a dataset 331 stored in the storage apparatus 300. The centralized page configuration management table 172 stores information for associating a page 323 with a dataset 331. The centralized storage tier information management table 173 stores information related to the utilization status of a storage tier 324 of the storage apparatus 300. The centralized job performance information management table 174 stores information for managing the performance of the job 225. The centralized job step execution time management table 175 stores information for managing the execution time of the processing of a job step 226 comprising the job 225.

The processor 102 performs various types of processing in accordance with executing a program stored in the memory 101. For example, the processor 102 controls a page migration executed by the storage apparatus 300 via the host computer 200 in accordance with instructing the host computer 200 to control a storage tier. The management port 103 is an interface for coupling the host computer 200 and the storage apparatus 300 via the communication network 550. The IO port 104 is an interface for coupling the host computer 200 and the storage apparatus 300 via the communication network 500. The IO part 105 comprises an input part for receiving an input from the user (for example, a keyboard, a switch, a pointing device and/or a microphone), and an output part for displaying various types of information to the user (for example, a display device and/or a speaker).

### (1-3) Overview of Computer System Processing

Fig. 5 is a conceptual drawing illustrating an overview of the processing of the computer system 10 related to Example 1.

The relationship of a pool volume 320, a pool (hierarchical pool) 321, and a logical volume 322, which are the premise of this example, will be explained first.

The pool volume 320 is a logical storage area created by the storage apparatus 300 from a storage area (actual storage area) of either one or multiple storage devices 308 (308A, 308B, 308C).

In this example, the storage apparatus 300 comprises multiple storage devices 308 (storage devices 308A, 308B, 308C) having different characteristics, and can comprise multiple pool volumes 320 having different characteristics in accordance with the differences in the storage devices, which provide the storage areas. Different characteristics, for example, signifies different storage elements, such as a semiconductor drive (for example, SSD) and a magnetic drive (for example, a HDD: Hard Disk Drive), different interfaces, such as FC, SAS, and SATA, or different methods for forming a storage area based on a storage device 308. The time required for data access and whether or not it is possible to recover data when a hardware failure occurs will differ in accordance with the different characteristics. In the example shown in Fig. 5, a pool volume 320 configured from a storage area of a high-performance storage device 308 (hereinafter, referred to as pool volume (high performance)) is configured from a storage area of multiple storage devices 308A.

The pool 321 is a set of pool volumes 320, and is associated with either one or multiple logical volumes 322. When a data write is performed from the host computer 200 to a logical volume 322, the storage apparatus 300 provides a storage area from the pool volume 320, which belongs to the pool 321 associated with the relevant logical volume 322. Either one or multiple pool volumes 320 having different characteristics are managed in the pool 321. In the example shown in Fig. 5, three pool volumes 320 (high performance, medium performance, and low performance) are managed in the same pool 321.

The logical volume 322 is a virtual volume, which the storage apparatus 300 provides to the host computer 200. The host computer 200 makes a data access request to the storage apparatus 300 using an IO request 600, which specifies the logical volume 322 and an address showing a storage area in the logical volume 322. Of the storage areas in the logical volume 322, the storage apparatus 300 stores only data specified in the data access request in the pool volume 320 belonging to the pool 321. Specifically, when there is a data write to the logical volume 332, the storage apparatus 300 allocates a storage area of the pool volume 320 in units called pages 323 to a virtual address on the logical volume 322, which is the target of the data write.

In addition, the relationship between the data and the page 323 storing the data will be explained by referring to Fig. 5.

In the example shown in Fig. 5, data objects 330 (data object 1, data object 2, and data object 3) are respectively stored in three areas of the logical volume 322 in accordance with an IO request 600 from the host computer 200. The data object 330 here is a unit of data managed by the user, and, for example, is equivalent to either a file in an open system or a dataset 331 in a mainframe. Each data object 330 is stored in a page 323, which the storage apparatus 300 allocates to each area of the logical volume 322 from the pool volume 320. The data object 330 does not necessarily relate to the page 323 allocated to the data object 330 on a one-to-one basis. Specifically, a single data object 330 may be stored in multiple pages 323, and multiple data objects 330 may be stored in a single page 323. For example, as with the data object 1 of Fig. 5, in a case where the size of the data object 330 (called data size) is larger than the size of the page 323 (called page size), the storage apparatus 300 allocates multiple pages 323 (page 1 and page 2 in the example of the same drawing) for storing the relevant data object 330. Alternatively, in a case where the data size is smaller than the page size as with the data object 2, unused storage area exists in the page 323 storing the data object 330, and as such, the storage apparatus 300 does not allocate a new page 323 for a data object 330 (data object 3) when there is a write for this data object 330 (the data object 3) to the unused storage area of the relevant page 323 in accordance with an IO request 600 from the host computer 200. As a result, multiple data objects 330 (the data object 2 and the data object 3) exist in a single page 323 (page 5).

Next, a page migration and storage tier control in the storage apparatus 300 will be explained.

Page migration refers to migrating data on a page 323 in the logical volume 322 between pool volumes 320 in the pool 321. Storage tier control refers to controlling a data-storing pool volume 320 in accordance with the storage apparatus 300 migrating data on a page 323 between pool volumes 320 having different performance for the purpose of providing to the relevant data an appropriate-performance logical volume 322, which corresponds to the access frequency and performance requirement of the data.

An example of storage tier control will be explained here by referring to Fig. 5. It is supposed that time differences required for the host computer 200 to access data in the storage apparatus 300 are managed as characteristics information (high performance, medium performance, or low performance in the example of Fig. 5). In a case where it has been determined that the access frequency from the host computer 200 has increased compared to the past with respect to the storage area allocated to the page 1 from among the storage areas storing the data object 1, the storage apparatus 300 performs a page migration with respect to the page 1 from the pool volume 320 (medium performance) to the pool volume 320 (high performance).

By implementing a page migration like this, the storage apparatus 300 is able to provide the appropriate-performance logical volume 322 for data in accordance with the frequency with which the host computer 200 accesses the relevant data. The storage apparatus 300 executes this storage tier control on either a regular or irregular basis. For example, the storage apparatus 300 may execute storage tier control every hour. Or, the storage apparatus 300 may execute storage tier control triggered by an indication from the user via the IO part 305 or an indication from the host computer 200.

As explained above, in storage tier control, a page migration is implemented between pool volumes 320 of different performance inside a pool 321. In this example, a pool volume 320 is segmented into multiple tiers and managed in accordance with the characteristics thereof. In this example, unless explicitly stated otherwise, the pool volume 320 will be explained as having three tiers (high performance, medium performance, and low performance). However, the tiers of the pool volume 320 are not limited to three tiers. A storage tier 324 having a higher IO performance than a certain storage tier 324 will be called a higher-level storage tier 324 here, and a storage tier 324 having a lower IO performance than a certain storage tier 324 will be called a lower-level storage tier 324.

Next, an overview of storage tier control based on an indication from the host computer 200 in this example will be explained.

Fig. 6 is a conceptual drawing illustrating an overview of the processing of the host computer 200 and the storage apparatus 300 related to Example 1.

As shown in Fig. 6, the host computer 200, based on the storage tier control indication program 257, specifies a page 323 and a page migration destination storage tier 324 (for example, a high-performance storage tier 324) and sends the storage apparatus 300 a storage tier control indication. The high-performance storage tier 324 is configured using a pool volume 320 (high performance), a medium-performance storage tier 324 is configured using a pool volume 320 (medium performance), and a low-performance storage tier 324 is configured using a pool volume 320 (low performance).

The storage apparatus 300 implements a page migration based on the storage tier control program 353 in accordance with the received host computer 200 storage tier control indication. In addition, the storage apparatus 300 stores the fact that the migrated page 323 is the control-target page of the storage tier control based on the host computer 200 indication, and ensures that the relevant page 323 does not become the control target of storage tier control that corresponds to access frequency. The process by which the storage apparatus 300 stores the fact that the migrated page 323 is the control-target page of storage tier control based on a host computer 200 indication and ensures that the relevant page 323 does not become the control target of storage tier control that corresponds to access frequency will be called page lock hereinafter. When the storage apparatus 300 executes the storage tier control corresponding to access frequency, a page-lock page 323 is excluded from the control-target page 323 of the storage tier control corresponding to access frequency. Thus, a page-lock page 323 can be appropriately prevented from being migrated in accordance with the storage tier control corresponding to access frequency.

In addition, since the host computer 200 either acquires information required for the storage tier control indication, or displays data access characteristics information to the user via the IO part 205, the host computer 200, based on the storage tier information acquisition program 253, sends the storage apparatus 300 an IO request 600 for acquiring information related to storage tier 324 allocation and IO processing time. The storage apparatus 300, which receives the relevant IO request 600, returns to the host computer 200 storage area information regarding the page 323 allocated to the logical volume 322 and characteristics information of the relevant page 323 storage tier 324 based on the IO processing program 351.

An overview of an application and a job 225, which run on the host computer 200, will be explained next.

Fig. 7 is a conceptual drawing of an application and a job related to Example 1.

In the host computer 200, either one or multiple applications can be executed at the same time. When executing an application, the host computer 200 defines the name of the execution-target application, the name of the dataset used by the application, and so forth in the job 225, and executes (SUBMIT) the job 225. Specifically, besides the application name and dataset name, a job name, a job class, which is the job 225 type, and a job 225 user can also be defined by the job 225. When the execution of the job 225 is instructed by the user, the host computer 200 commences executing the job 225 in accordance with an OS 220 indication. As used here, the dataset 331 is a logical unit, which is managed by a mainframe OS in particular, and is data used by an application operated mainly on the host computer 200 - equivalent to the data object 330 shown in Fig. 5. The dataset 331 is also equivalent to the file in an open system.

As shown in Fig. 7, the OS 220 comprises a job receiving part 221, a job spool part 222, and an application execution part 223 for processing a job 225 in the host computer 200. For example, when the user instructs that a job 225 be executed, the job receiving part 221 in the OS 220 (actually, the processor 202, which executes the job receiving part 221) receives the job 225, and instructs the host computer 200 to perform processing for acquiring the various information defined by the job 225.

The host computer 200, after acquiring the information defined by the job 225, moves the job 225 from the job receiving part 221 to the job spool part 222.

The job spool part 222 postpones execution of the job 225 until the application execution part 223 is able to execute the job 225 processing. When the application execution part 223 is able to execute the processing for a new job 225, the host computer 200 moves the job 225, which is in the job spool 222, to the application execution part 223.

The application execution part 223 executes the application defined by the job 225. The dataset 331 stored in the application program defined by the job 225 is referenced for the first time when the application is executed. When the processing by the application execution part 223 has ended (that is, the processing of the application defined by the job 225 is complete), the host computer 200 executes a job 225 end process and ends the job 225.

Generally speaking, in order to meet the requirements of a computer system-provided service, the user configures a performance requirement for the application, which defines the processing needed to realize the service. A minimum number of processes per unit of time, such as the updating of one million pieces of deposit data in one hour, is given here as an example of a service requirement. Also, an upper-limit value for application execution time, such as that the time required from execution start to finish for the application to process a deposit data update be within one millisecond, is given as an example of the application performance requirement. The OS 220 allocates computer resources, such as the processor 202 and the memory 201, to a job 225 executing an application to meet the user-configured performance requirement for the application.

An overview of a method for identifying an over-performance dataset 331 based on the application performance requirement in this example will be explained next.

Fig. 8 is a conceptual drawing illustrating an overview of a method for identifying an over-performance dataset 331 based on the application performance requirement related to Example 1.

It is supposed here that a job 225 is being deployed in the memory 201 of the host computer 200 as shown in Fig. 8. Generally speaking, the job 225 comprises either one or multiple job steps 226. The host computer 200 executes the job step 226-comprised job 225 by consecutively executing the either one or multiple job steps 226. A dataset 331, which is used in a job step 226, is defined by the job step 226. Here, a single job step 226 may use multiple datasets 331, or multiple job steps 226 may use a single dataset 331. In the example shown in Fig. 8, the job 225 comprises three job steps 226 (job step 1, job step 2, and job step 3). The job step 1 uses a dataset A and a dataset B, the job step 2 uses the dataset B and a dataset C, and the job step 3 uses a dataset D.

In this example, the host computer 200 uses a requirement for job 225 execution time (execution time requirement), a measured value for the job 225 execution time, an execution time for each job step 226, the storage tier of the storage destination of a dataset 331 used by each job step 226 (referred to as destination storage tier) 324, and an IO processing time for each storage tier 324 (the time required for one IO process for a prescribed amount of data) to identify an over-performance job step 226. As used here, over-performance job step 226 points to a job step 226, which uses only an over-performance dataset 331. In accordance with this, the host computer 200 identifies a set of datasets comprising one or more over-performance datasets 331.

First, the host computer 200 uses the difference between the job 225 execution time requirement and the execution time measured value to calculate an acceptable increase in the execution time of the relevant job 225. In the example of Fig. 8, the acceptable increase in the execution time for the job 225 is 230 ms (400 ms (the job 225 execution time requirement) - 170 ms (the job 225 execution time measured value)).

Next, the host computer 200, based on the destination storage tier 324 of the dataset 331 used in a job step 226 and the IO processing time of each storage tier 324, calculates the rate of increase in the time required for data access in a case where the dataset 331 used in the job step 226 is migrated to a lower-level storage tier 324. In the example of Fig. 8, the dataset A and the dataset B, which are used in the job step 1, are both stored in the high-performance storage tier 324. The IO processing time of the high-performance storage tier 324 is 1 ms, and the IO processing time of the medium-performance storage tier 324 is 10 ms. In accordance with this, when the dataset A and the dataset B are migrated to the medium-performance storage tier 324, the time required for data access in the job step 1 can be calculated as becoming 10 fold (10 ms/1 ms).

Then, based on a calculated rate of increase in the time required for data access and the execution time of the job step 226, the host computer 200 calculates a maximum increase in the relevant job step 226 execution time in a case where the dataset 331 is migrated to a lower-level storage tier 324. In the example shown in Fig. 8, since the measured value of the job step 1 execution time is 20 ms, in a case where the dataset A and the dataset B are migrated to the medium-performance storage tier 324, the maximum job step 1 execution time can be calculated as being 200 ms (20 ms × 10). Therefore, based on the difference between the calculated 200 ms and the 20 ms measured value of the job step 1 execution time, the maximum increase in the execution time of the job step 1 can be calculated as 180 ms.

In addition, the host computer 200 compares the calculated maximum increase in the execution time of a job step 226 to the acceptable increase in the execution time for the job 225. In a case where the maximum increase in the execution time of a job step 226 is smaller than the acceptable increase in the execution time for the job 225, the host computer 200 determines that there is a likelihood that the dataset 331 used in the relevant job step 226 is over performance, and alternatively, in a case where the maximum increase in the execution time of the job step 226 is not smaller than the acceptable increase in the execution time for the job 225, determines that the dataset 331 used in the relevant job step 226 is not over performance. In the example shown in Fig. 8, since the maximum increase in the execution time of the job step 1 is 180 ms, and the acceptable increase in the execution time for the job 225 is 230 ms, the maximum increase in the execution time of the job step 226 is smaller than the acceptable increase in the execution time for the job 225. Thus, the host computer 200 determines that there is a likelihood that the dataset A and the dataset B used in the job step 1 are over performance.

The host computer 200 performs the above determination for each job step 226, and determines that the job step 226, which uses only a dataset 331 determined as likely to be over performance, is an over-performance job step 226. Then, the host computer 200 determines that the dataset 331 used in the over-performance job step 226 is over performance. In the example shown in Fig. 8, the dataset B and the dataset C, which are used in the job step 2, are stored in the high-performance storage tier 324. When these datasets used in the job step 2 are migrated to the medium-performance storage tier 324, the time required for data access in job step 2 can be calculated as being 10 fold the same as with the job step 1. Since the execution time measured value of the job step 2 is 50 ms, the maximum increase in the execution time of the job step 2 can be calculated as 450 ms. In the meantime, the acceptable increase in the execution time for the job 225 is 230 ms. Since the maximum increase in the execution time is larger than the acceptable increase in the execution time, the host computer 200 determines that the dataset B and the dataset C used in the job step 2 are not over performance. Furthermore, the dataset D used in the job step 3 is stored in the medium-performance storage tier 324. The IO processing time of the medium-performance storage tier 324 is 10 ms, and the IO processing time of the low-performance storage tier 324 is 30 ms. When the dataset D is migrated from the medium-performance storage tier 324 to a lower-level storage tier 324, that is, to the low-performance storage tier 324, the time required for data access in the job step 3 can be calculated as being three fold. Since the measured value for the execution time of the job step 3 is 100 ms, the maximum increase in the execution time of the job step 3 can be calculated as 200 ms. In the meantime, the acceptable increase in the execution time for the job 225 is 230 ms. The maximum increase in the execution time is smaller than the acceptable increase in the execution time. Thus, the host computer 200 determines that there is a likelihood that the dataset D used in the job step 3 is over performance. In the example shown in Fig. 8, in the determinations with respect to each job step 226, the datasets 331 determined as being likely to be over performance are the dataset A and the dataset D. Therefore, determinations can be made that the over-performance job step 226 is the job step 3, and the over-performance dataset 331 is the dataset D.

An overview of a method for identifying an over-performance dataset 331 based on an application performance requirement in this example has been explained hereinabove.

The user can execute the above-described processing on the host computer 200 to ascertain a set of datasets 331 capable of being migrated to a lower-level storage tier 324. This makes it possible for the user to ascertain the capacity required for each storage tier 324. Furthermore, the migration of a set of over-performance datasets 331 to a lower-level storage tier 324 makes it possible for other datasets 331 to be able to effectively use the higher-level storage tier 324. Specifically, when a storage apparatus comprising a storage tier 324 is installed, the user may have the host computer 200 execute the above-described processing for a dataset 331 to be stored in the installed storage apparatus. According to this processing, it is possible to identify, with respect to the set of datasets 331, a storage tier 324 that will not become over performance while meeting the performance requirement of the job 225, which uses the relevant datasets 331. As a result, the user is able to ascertain the capacity required for each storage tier 324 when the storage apparatus comprising a storage tier 324 is installed. Furthermore, when the storage apparatus comprising the storage tier 324 is put into operation, the user may have the host computer 200 execute the above-described processing with respect to a job 225 for which it has been determined that the measured value of the execution time is extremely shorter that the requirement. According to this processing, the user is able to identify a set of over-performance datasets 331 and to issue an indication so that these datasets 331 are migrated to a lower-level storage tier 324. As a result, another dataset 331 becomes able to make effective use of the higher-level storage tier 324. Furthermore, by lowering the frequency with which the higher-level storage tier 324 is used, it is possible to increase the life of the storage device configuring the relevant storage tier 324.

The storage tier control process, which is realized by the computer system 10, basically is executed by the host computer 200 and the storage apparatus 300, but the management computer 100 may be configured so as to centrally manage multiple host computers 200 and the storage apparatus 300, if required. Specifically, the management computer 100 issues a storage tier control indication to the multiple host computers 200. Each host computer 200 issues a storage tier control indication to the storage apparatus 300 in accordance with the management computer 100 indication. In a case where multiple host computers 200 exist, this makes it possible to consolidate the user-operated IO part with the IO part 105 of the management computer 100, and to reduce the time and trouble required for the user to individually operate the IO parts 205 of each host computer 200. The management computer 100 may also send a storage tier control indication directly to the storage apparatus 300.

### (1-4) Contents of Various Tables

Fig. 14 is a drawing showing an example of basic storage information related to Example 1.

The basic storage information 370 is a table for managing the storage apparatus 300 information, and comprises an IP address 3701 and a storage ID 3702. The IP address 3701 is an IP address allotted to the storage apparatus 300. The storage ID 3702 is an identifier for uniquely identifying the storage apparatus 300 shown by the IP address.

Fig. 15 is a drawing showing an example of a logical volume management table related to Example 1.

The logical volume management table 371 is a table for managing the logical volume 322, and comprises the fields of a pool ID 3711, a logical volume ID 3712, a virtual address 3713, a page ID 3714, and a lock flag 3715 for each entry.

An identifier for the storage apparatus 300 to uniquely identify a pool 321 to which either one or multiple pool volumes 320 belong is stored in the pool ID 3711. An identifier (logical volume ID) for uniquely identifying the logical volume 322 allotted by the storage apparatus 300 is stored in the logical volume ID 3712. An address (virtual address) showing a storage area on the logical volume 322 is stored in the virtual address 3713. The address, for example, is a top cylinder and a number of headers, and a tail cylinder and a number of headers. In a case where the communication network 500 is SCSI (Small Computer System Interface), the address may be a LBA (Logical Block Address). The size of the address range stored in the virtual address 3713 is the same as the page size. An identifier (page ID) for uniquely identifying a page 323, which is allocated to the storage area shown by the virtual address of the same entry, is stored in the page ID 3714. In a case where a page 323 has not been allocated to a storage area, "free" is stored in the page ID 3714. A flag (lock flag), which shows whether or not the storage area shown by the virtual address in the virtual address 3713 is under page lock control is stored in the lock flag 3715. For example, in a case where the storage area shown by the virtual address in the virtual address 3713 is under page lock control, "locked" is stored in the lock flag 3715, and in a case where the storage area shown by the virtual address in the virtual address 3713 is not under page lock control, "unlocked" is stored in the lock flag 3715.

Fig. 16 is a drawing showing an example of an in-pool page management table related to Example 1.

The in-pool page management table 372 is for managing a logical volume 322-allocated page 323 inside a pool 321, and comprises the fields of a pool ID 3721, a page ID 3722, an access frequency 3723, a pool volume ID 3724, and a real address 3725 for each entry.

An identifier (pool ID) for uniquely identifying a pool 321 in which the pool volume 320 shown by the pool volume ID of the same entry is registered is stored in the pool ID 3721. An identifier (page ID) for uniquely identifying a page 323 in a storage apparatus 300-allocated pool 321 with respect to the logical volume 322 is stored in the page ID 3722. Information (number of accesses) showing how many times the relevant page 323 has been referenced following the allocation of the relevant page 323 is stored in the access frequency 3723. An identifier (pool volume ID) for uniquely identifying a pool volume 320 to which a page 323 is allocated is stored in the pool volume ID 3724. An address showing a storage area on the pool volume 320 is stored in the real address 3725. The size of the storage area shown by the real address, for example, is the same as the page size.

Fig. 17 is a drawing showing an example of a pool volume management table 373 related to Example 1.

The pool volume management table 373 is for managing a pool volume 320 registered in the pool 321, and comprises the fields of a pool ID 3731, a pool volume ID 3732, a tier 3733, an IO processing time 3734, a real address 3735, a storage device ID 3736, a physical address 3737, and a use flag 3738 for each entry.

An identifier (pool ID) for uniquely identifying a pool 321 managed by the storage apparatus 300 is stored in the pool ID 3731. An identifier (pool volume ID) for uniquely identifying a pool volume 320 managed by the storage apparatus 300 is stored in the pool volume ID 3732. Characteristics information related to the IO performance of the pool volume 320 is stored in the tier 3733. A time (IO processing time) required for a single data access to a prescribed amount of data in a dataset 331 stored in the pool volume 320 is stored in the IO processing time 3734. An address (real address) showing a storage area on the pool volume 320 is stored in the real address 3735. The size of the storage area shown by the real address, for example, is the same as the page size. An identifier (storage device ID) for uniquely identifying a storage device 308 configuring the storage area shown by the real address is stored in the storage device ID 3736. An address showing the storage area of the storage device 308 configuring the storage area shown by the real address is stored in the physical address 3737. A flag (use flag) showing whether or not the storage area shown by the real address is being used for a page 323 allocation is configured in the use flag 3738. In a case where the storage area shown by the real address is being used for a page 323 allocation, "in use" is stored in the use flag 3738, and in a case where the storage area shown by the real address is not being used in page 323 allocation, "unused" is stored in the use flag 3738.

Fig. 18 is a drawing showing an IO request related to Example 1.

The IO request 600 is issued by either the management computer 100 or the host computer 200. The IO request 600 comprises the fields of a destination 601, an indication content 602, a serial number 603, and an option 604.

Information related to the destination of the IO request 600 is stored in the destination 601. For example, information comprising the identifier of the storage apparatus 300, which is the destination of the IO request 600, the logical volume ID in the relevant storage apparatus 300, and a virtual address showing the storage area of the logical volume 322 shown by the relevant logical volume ID is stored as information related to the destination. The content of the processing (the indication content) instructed in accordance with the IO request 600 is stored in the indication content 602. For example, the indication content is either a storage tier control indication or a data access indication. As examples of a storage tier control indication, start page lock, cancel page lock, migrate page to specified storage tier 324, acquire tier utilization status, or acquire pool 321 status can be given. As examples of the data access indication, either a data write indication or a data read indication can be given. A number (serial number) issued by the IO request 600 is stored in the serial number 603. The serial number is decided by either the management computer 100 or the host computer 200, which is the source of the IO request 600. The contents of data for which a write has been requested by the IO request 600, a page migration-destination storage tier 324, and so forth are stored in the option 604.

Fig. 9 is a drawing showing an example of a data configuration management table related to Example 1.

The data configuration management table 271 is for managing the storage area of the logical volume 322 in which the dataset 331 is stored, and comprises the fields of a dataset name 2711, a storage device name 2712, a virtual address 2713, a storage ID 2714, and a logical volume ID 2715 for each entry.

A name (dataset name) of a dataset 331 managed by the OS 220 is stored in the dataset name 2711. An identifier (for example, a device number) for the OS 220 on the host computer 200 to uniquely identify the logical volume 322 in which is stored the dataset name dataset 331 is stored in the storage device name 2712. An address showing the storage area of the logical volume 322 in which is stored the dataset name dataset 331 of the same entry is stored in the virtual address 2713. An identifier (storage ID) for uniquely identifying the storage apparatus 300 managed by the host computer 200 is stored in the storage ID 2714. An identifier (logical volume ID) for uniquely identify the logical volume 322 allotted by the storage apparatus 300 identified using the storage ID is stored in the logical volume ID 2715.

Fig. 10 is a drawing showing an example of a page configuration management table related to the Example 1.

The page configuration management table 272 is for managing the association between the logical volume 322 storage area (virtual address) and the page 323, and comprises the fields of a storage ID 2721, a logical volume ID 2722, a page ID 2723, and a virtual address 2724 for each entry.

An identifier (storage ID) for uniquely identifying a storage apparatus 300, which is managed by the host computer 200, is stored in the storage ID 2721. An identifier (logical volume ID) for uniquely identifying the logical volume 322 allotted by the storage apparatus 300, which is identified by the storage ID of the same entry, is stored in the logical volume ID 2722. An identifier (page ID) for uniquely identifying a storage apparatus 300-allocated page 323 with respect to the logical volume 322, which is identified by the storage ID and the logical volume ID of the same entry, is stored in the page ID 2723. An address (virtual address) of a storage area on the logical volume 322, which is allocated to the page 323 identified by the page ID, is stored in the virtual address 2724.

Fig. 11 is a drawing showing an example of a storage tier information management table related to Example 1.

The storage tier information management table 273 is for managing information (IO performance information) related to performance and information related to the utilization status of the storage tier 324, and comprises the fields of a storage ID 2731, a tier 2732, an IO processing time 2733, an overall capacity 2734, and a page-lock capacity 2735 for each entry.

An identifier (storage ID) for uniquely identifying a storage apparatus 300, which is managed by the host computer 200, is stored in the storage ID 2731. An identifier for uniquely identifying a storage tier of a pool volume 320, which is managed by the storage apparatus 300 shown by the storage ID corresponding to the same entry, is stored in the tier 2732. A time (data access time), which is required for a data access (for example, a single data access) with respect to a prescribed amount of data of a dataset 331 stored in the storage tier, is stored in the IO processing time 2733. The difference in data access times between storage tiers corresponding to the each entry can be ascertained in accordance with comparing this data access time to other entries. A total value (overall capacity) of the total capacity of either one or multiple pool volumes 320 corresponding to the storage tier is stored in the overall capacity 2734. A total capacity of a page 323 for which page locking is being performed from among the pages 323 allocated from either one or multiple pool volumes 320 corresponding to the storage tier is stored in the page-lock capacity 2735.

Fig. 12 is a drawing showing an example of a job performance information management table related to Example 1.

The job performance information management table 274 is for managing a job 225 being executed by the OS 220 running on the host computer 200, and comprises the fields of a job name 2741, an execution time requirement 2742, and an execution time measured value 2743 for each entry.

A name of a job 225 (job name) used when the OS 220 running on the host computer 200 executes an application is stored in the job name 2741. A requirement (an example of performance requirement management information) for the execution time of an application in a job stipulated by the user is stored in the execution time requirement 2742. A measured value of a time (execution time), which is required for executing a job 225 when the job 225 is being executed by the OS 220, is stored in the execution time measured value 2743.

Fig. 13 is a drawing showing an example of a job step execution time management table related to Example 1.

The job step execution time management table 275 is for managing information (an example of tier characteristics information) related to the execution time of a job step 226 comprising the job 225, the destination storage tier, and so forth, and comprises the fields of a job name 2751, a job step name 2752, an execution time measured value 2753, a dataset name 2754, and a destination storage tier 2755 for each entry.

A name of a job 225 (job name) used when the OS 220 running on the host computer 200 executes an application is stored in the job name 2751. A name of a job step 226 (job step name) comprising the job 225 shown by the job name of the same entry is stored in the job step name 2752. A measured value of the execution time of the job step 226 shown by the job step name of the same entry is stored in the execution time measured value 2753. A name of a dataset 331 (dataset name) used in the job step 226 shown by the job step name of the same entry is stored in the dataset name 2754. Information showing the storage tier 324, which stores the dataset 331 shown by the dataset name, is stored in the destination storage tier 2755.

Fig. 29 is a drawing showing an example of a host computer management table related to Example 1.

The host computer management table 170 is host computer 200 information managed by the management computer 100, and comprises the fields of a host name 1701 and an IP address 1702 for each entry.

A name of a host computer 200 is stored in the host name 1701. An IP address allotted to the host computer 200 is stored in the IP address 1702.

As shown in Fig. 2, a centralized data configuration management table 171, a centralized page configuration management table 172, a centralized storage tier information management table 173, a centralized job performance information management table 174, and a centralized job step execution time management table 175 are stored in the memory 101 of the management computer 100. These tables store substantially the same information as the various tables stored in the memory 201 of the host computer 200. In this example, the tables stored in the memory 101 of the management table 100, which store the same information as the "aaa management tables" stored in the memory 201 of the host computer 200 shown in Fig. 3, are treated as "centralized aaa management tables" like those shown in Fig. 2. The contents stored in these "centralized aaa management tables" are configured by adding to the aaa management tables a column (field) for storing an identifier (host ID) for uniquely identifying the host computer 200, and consolidate the information of the "aaa management tables" being managed by the host computers 200 managed by the management computer 100. The configuration being such, drawings showing the contents of these centralized aaa tables and detailed explanations thereof will be omitted.

### (1-5) Detailed Each Apparatus Operations

The each apparatus operations in Example 1 will be explained in detail for the storage apparatus 300, the host computer 200, and the management computer 100, in that order.

First, the operations of the storage apparatus 300 will be explained.

The storage apparatus 300, based on the storage apparatus management program 354, acquires information related to the configuration of the storage apparatus 300 from the user, and creates the basic storage information 370, the logical volume management table 371, and the pool volume management table 373. Specifically, the storage apparatus 300 acquires an IP address and a storage ID from a user input (for example, a user input to the IO part 305), and stores the acquired IP address in the IP address 3701 of the basic storage information 370. Next, the storage apparatus 300 acquires a pool ID, a pool volume ID, a storage device ID, and a physical address from a user input to create a pool volume 320. In addition, the storage apparatus 300 adds a new entry to the pool volume management table 373, and stores the acquired information in the pool ID 3731, the pool volume ID 3732, the storage device ID 3736, and the physical address 3737 of the relevant entry. The storage apparatus 300 also acquires performance information and capacity information from the storage device 308 shown by the storage device ID stored in the storage device ID 3736, and stores the acquired information in the tier 3733 and the IO processing time 3734 of the relevant entry. In addition, the storage apparatus 300 initializes the use flag in accordance with configuring the use flag 3738 to "unused". The storage apparatus 300 repeats this operation as many times as there are number of user inputs to create the pool volume management table 373. In addition, to create a logical volume 322, the storage apparatus 300 acquires a user-inputted pool ID, a logical volume ID, and a virtual address. The storage apparatus 300 also adds a new entry to the logical volume management table 371, and stores the acquired information in the pool ID 3711, the logical volume ID 3712, and the virtual address 3713 of the relevant entry. In addition, the storage apparatus 300 initializes the lock flag in accordance with configuring the page ID 3714 of the relevant entry to "free" and configuring the lock flag 3715 to "unlocked". The storage apparatus 300 repeats this operation as many times as there are number of user inputs to create the logical volume management table 371.

Fig. 19 is a flowchart of IO processing related to Example 1.

The storage apparatus 300, upon receiving an IO request 600 from the host computer 200, determines on the basis of the IO processing program 351 whether or not the indication content, which is stored in the indication content 602 of the relevant IO request 600, is a storage tier control indication (S3000).

In a case where the result is that the indication content of the relevant IO request 600 is a storage tier control indication (S3000: Yes), the storage apparatus 300 executes a storage tier control process (refer to Fig. 21) (S3060) and ends the IO processing. Alternatively, in a case where the indication content of the relevant IO request 600 is not a storage tier control indication (S3000: No), the storage apparatus 300 advances the processing to Step S3010.

In Step S3010, the storage apparatus 300 determines whether or not the indication content of the relevant IO request 600 is a data access with respect to a storage area to which a page has not been allocated. Specifically, the storage apparatus 300 references the logical volume management table 371 and acquires the entry, which matches the virtual address stored in the relevant IO request 600. The storage apparatus 300, in a case where the page ID 3714 of the acquired entry shows "free", determines that the indication content is a data access to a page-unallocated storage area. Alternatively, in a case where the relevant page ID 3714 does not show "free", the storage apparatus 300 determines that the indication content is not a data access to a page-unallocated storage area.

In a case where the result is that the indication content of the relevant IO request 600 is a data access to a page-unallocated storage area (S3010: Yes), the storage apparatus 300 advances the processing to Step S3020. Alternatively, in a case where the result is that the indication content of the relevant IO request 600 is not a data access to a page-unallocated storage area (S3010: No), the storage apparatus 300 advances the processing to Step S3040.

In Step S3020, the storage apparatus 300 determines whether or not the indication content of the relevant IO request 600 is a data write. In a case where the result is that the indication content of the relevant IO request 600 is a data write (S3020: Yes), the storage apparatus 300 executes a page allocation process (refer to Fig. 20) for allocating a page 323 from the pool volume 320 to the relevant storage area (S3030), and advances the processing to Step S3040. Alternatively, in a case where the indication content of the relevant IO request 600 is not a data write (S3020: No), the storage apparatus 300 regards the result of a data read by the IO request 600 as 0 (that is, regards the result as though data denoting 0 has been read), returns 0 data to the host computer 200 (S3050), and ends the IO processing.

In Step S3040, the storage apparatus 300 executes a data access process with respect to the virtual address stored in the virtual address 3713 of the entry (the logical volume entry) of the logical volume management table 371. Specifically, the storage apparatus 300 acquires from the in-pool page management table 372 an entry (in-pool page management table entry), which matches the page ID of the page ID 3714 of this logical volume entry. Next, the storage apparatus 300 adds 1 to the value of the access frequency 3723 of the acquired in-pool page management table entry. In addition, the storage apparatus 300 acquires from the pool volume management table 373 the entry (pool volume management table entry), which matches the pool volume ID 3724 and the real address 3725 of the in-pool page management table entry. In addition, the storage apparatus 300 executes a data access process with respect to the storage area of the storage device 308 identified by the storage device ID 3736 and the physical address 3737 of the acquired pool volume management table entry. Thereafter, the storage apparatus 300 ends the IO processing.

Fig. 20 is a flowchart of a page allocation process related to Example 1.

The page allocation process corresponds to the processing executed in Step S3030 of the IO process (Fig. 19). The storage apparatus 300 executes the page allocation process based on the page allocation control program 352.

The storage apparatus 300 identifies from the pool volume management table 373 either one or multiple entries (pool volume management table entries), which match the pool ID of the pool ID 3711 in the logical volume entry acquired in Step S3010 of the IO process, and selects the highest level storage tier of the tier 3733 in the identified pool volume management table entry (S3100).

Next, the storage apparatus 300 determines whether or not a pool volume 320 capable of being allocated to the logical volume 322 exists in the selected storage tier (S3110). Specifically, the storage apparatus 300 identifies a pool volume management table entry that matches the selected storage tier 324, references the real address 3735 and the use flag 3738 of each identified pool volume management table entry, and determines whether or not there is an entry in which the size of the storage area shown by the real address 3735 is equal to or larger than the page size, and, in addition, the use flag 3738 is configured to unused, that is, whether or not an allocatable pool volume 320 exists.

In a case where the result of this is that an allocatable pool volume 320 exists (S3110: Yes), the storage apparatus 300 advances the processing to Step S3120, and, alternatively, in a case where an allocatable pool volume does not exist (S3110: No), advances the processing to Step S3130.

In Step S3120, the storage apparatus 300 registers "in use", the use flag that shows the storage area is being used for a page allocation, in the use flag 3738 of the pool volume management table entry identified in Step S3110. In addition, the storage apparatus 300, based on the information of the relevant pool volume management table entry, adds a new entry to the in-pool page management table 372. Specifically, the storage apparatus 300 adds a new entry to the in-pool page management table 372, and stores the pool ID in the pool ID 3711 of this logical volume entry in the pool ID 3721 of the added entry. The storage apparatus 300 also stores in the page ID 3722 of the added entry an arbitrary value, which is not stored in the page ID 3722 of the entries of the in-pool page management table 372 (for example, a value obtained by adding 1 to the largest value stored in the page ID 3722 of the in-pool page management table 372) as an identifier for uniquely identifying a page 323. The storage apparatus 300 stores the initial value 0 in the access frequency 3723 of the added entry, and stores the value of the pool volume ID 3732 of the pool volume management table entry identified in Step S3110 in the pool volume ID 3724. In addition, the storage apparatus 300 stores the value of the real address 3735 of the pool volume management table entry identified in Step S3110 in the real address 3725 of the added entry. Thereafter, the storage apparatus 300 ends the page allocation processing.

Alternatively, in Step S3130, the storage apparatus 300 checks for the presence or absence of a pool volume 320, which has a storage area of a storage tier 324 that is one level lower than the selected storage tier 324. In a case where the result is that a pool volume 320 having a storage area of a storage tier 324 one level lower exists (S3130: Yes), the storage apparatus 300 advances the processing to Step S3140, and, alternatively, in a case where a pool volume 320 having a storage area of a storage tier 324 one level lower does not exist (S3130: No), the storage apparatus 300 advances the processing to Step S3150.

In Step S3140, the storage apparatus 300 selects a storage tier 324 that is one level lower than the current storage tier 324, and executes the processing subsequent to Step S3110 making the relevant storage tier the target.

Alternatively, in Step S3150, the storage apparatus 300 returns an IO error to the host computer 200 that issued the IO request. The storage apparatus 300 not only returns an IO error to the host computer 200, but may also notify the user of the IO error via email. Thereafter, the storage apparatus 300 ends the page allocation processing.

Fig. 21 is a flowchart of a storage tier control process related to Example 1.

The storage tier control process is executed by the storage apparatus 300 based on the storage tier control program 353. This storage tier control process, for example, is executed regularly, or is executed in accordance with an indication from either the management computer 100 or the host computer 200. The storage tier control process, for example, is executed in Step S3060 of the IO process (Fig. 19). The storage tier control process will be explained with respect to each pool 321 hereinbelow.

First, the storage apparatus 300 acquires from the in-pool page management table 372 an entry (in-pool page management table entry) that matches a specified pool ID, and references the access frequency in the access frequency 3723 of the acquired in-pool page management table entry (S8000). The storage apparatus 300 acquires from the pool volume management table 373 an entry (pool volume management table entry) that matches the pool volume ID 3724 of the acquired in-pool page management table entry, and references the storage tier 324 shown by the tier 3733 of the acquired pool volume management table entry. In this example, the storage apparatus 300 references the in-pool page management table entries that match the pool volume ID of the lowest storage tier 324 in order from the higher-level entry.

For explanation purposes, hereinbelow in the current storage apparatus 300, the destination storage tier 324 of the current page 323 (substitution-source storage tier 324) is treated as a source tier, and an entry of the in-pool page management table 372 that matches the pool volume ID of the source tier is treated as a source entry. Also, the storage tier 324 referenced as a substitution destination of the page 323 is treated as a target tier, and regards an entry of the in-pool page management table 372 that matches the pool volume ID of the target tier is treated as a target entry.

Next, the storage apparatus 300 determines whether or not this storage tier control process is the result of a storage tier control indication (IO request) (S8005). In a case where the storage tier control process is a result of a storage tier control indication here (S8005: Yes), the storage apparatus 300 executes a storage tier control process (refer to Fig. 22) based on the IO request (S8200), and ends the storage tier control process. Alternatively, in a case where the storage tier control process is not the result of a storage tier control indication (S8005: No), the storage apparatus 300 advances the processing to Step S8010.

In Step S8010, the storage apparatus 300 compares an access frequency (reference access frequency, reference value), which constitutes a reference defined with respect to the target tier (storage tier 324 for which the initial value is the same as that of the source tier) to the access frequency of the relevant entry. Furthermore, the reference access frequency for each storage tier 324 is specified beforehand by the user.

In a case where the result is that the access frequency is larger than the reference access frequency (S8010: Yes), the storage apparatus 300 advances the processing to Step S8090 in an attempt to execute a page migration between pool volumes 320 of different storage tiers 324. Alternatively, in a case where the access frequency is not larger than the reference access frequency (S8010: No), the storage apparatus 300 advances the processing to Step S8013.

In Step S8090, the storage apparatus 300 determines whether or not there is a storage tier 324 that is one level higher than the source tier. In a case where the result is that a storage tier 324 one level higher than the source tier exists (S8090: Yes), the storage apparatus 300 selects the target tier as a storage tier 324 one higher than the current storage tier (S8070), and moves the processing to Step S8010.

The storage apparatus 300, in accordance with repeatedly performing the processing described hereinabove (S8010, S8090, S8070, and so forth), is able to identify a target tier for which the entry access frequency does not become larger than the reference value. In a case where it has been determined that a storage tier 324 that is one level higher than the source tier does not exist (S8090: No), the storage apparatus 300 advances the processing to Step S8025 without performing a page migration with respect to the corresponding page 323 (S8120). Thus, in a case where there is no storage tier 324 at a higher level than the source tier, that is, a case in which the source tier is the highest storage tier 324, the storage apparatus 300 continues the processing as-is without performing a source entry page migration in order to continue using the highest storage tier 324.

Alternatively, in a case where the access frequency in the access frequency 3723 of the source entry is equal to or smaller than the reference value in Step S8010 (S8010: No), the storage apparatus 300 determines whether or not the source tier and the target tier are the same (S8013). In a case where it has been determined that the source tier and the target tier are the same (S8013: Yes), the storage apparatus 300 concludes that the page 323 shown by the source entry meets the reference value of the currently allocated storage tier 324 and a source entry page migration is not necessary, and advances the processing to Step S8025.

Alternatively, in a case where it has been determined that the source tier and the target tier are not the same (S8013: No), the storage apparatus 300 concludes that the page 323 shown by the source entry does not meet the reference value of the currently allocated storage tier 324 and a source entry page migration is necessary, references the use flag 3738 of the pool volume management table 373 entry, which corresponds to the target tier pool volume 320, and checks whether or not there is a free space in the target tier, that is, whether or not a pool volume 320 to which a page allocation is possible exists in the target tier (S8015).

In a case where there is no free space in the target tier (S8015: No), the storage apparatus 300 determines whether or not there is an entry, which has an access frequency that is lower than the access frequency in the access frequency 3723 of the source entry, in the target tier, and, in addition, whether or not the lock flag of the corresponding page 323 is other than locked (S8100).

In a case where the result is that, although either an entry having an access frequency, which is lower than the value of the access frequency 3723 of the source entry, exists in the target tier, or an entry having an access frequency, which is lower than the value of the access frequency 3723 of the source entry, does not exist in the target tier, the lock flag 3715 of the entry in the logical volume management table 371 shown by the relevant entry page ID is under page lock control (is locked) (S8100: No), the storage apparatus 300 selects a storage tier 324 that is one level lower than the target tier as the target tier (S8107), and advances the processing to Step S8013.

Alternatively, in a case where an entry having an access frequency, which is lower than the referenced frequency of the access frequency 3723 of the source entry, exists in the target tier, and, in addition, the lock flag 3715 of the entry in the logical volume management table 371 shown by the page ID of the relevant entry is not under page lock control (is unlocked) (S8100: Yes), the storage apparatus 300 switches the pages between the source entry page 323 and the target entry page 323, that is, stores the data of the source entry page 323 in the pool volume 320 in which the target entry page 323 has been stored, and stores the data of the target entry page 323 in the pool volume 320 in which the source entry page 323 has been stored (S8110).

Alternatively, in Step S8015 in a case where there exists a pool volume 320 having free space for enabling a page migration to the target tier (S8015: Yes), the storage apparatus 300 performs a page migration with respect to the pool volume 320 in which the target tier free space exists, that is, stores the data of the corresponding page 323 in the pool volume 320 (S8020).

The storage apparatus 300, after executing Step S8020, Step S8110, or Step S8120, changes the source entry to the next entry (S8025).

Next, the storage apparatus 300 checks whether the determination process has been executed for all the source entries of the source tier in the pool 321 (S8030), and in a case where the determination process has not been executed for all the source entries, and an unprocessed entry exists (S8030: No), the storage apparatus 300 moves the processing to Step S8010 and executes the determination process with respect to the other entry. Alternatively, in a case where the determination process has been executed for all the source entries and there are no unprocessed entries in the source tier (S8030: Yes), the storage apparatus 300 configures the storage tier 324, which is one level higher than the source tier, as the source tier (S8040), and determines whether or not the relevant source tier exceeds the highest level storage tier 324 registered in the pool 321 (S8050).

In a case where the result is that the source tier does not exceed the highest tier, that is, a storage tier 324, which is one level higher than the source tier, exists (S8050: No), the storage apparatus 300 moves the processing to Step S8010. Alternatively, in a case where the configured storage tier 324 exceeds the highest storage tier 324, that is, a storage tier 324, which is one tier higher than the source tier, does not exist (S8050: Yes), the storage apparatus 300 resets the access frequency in the access frequency 3723 of the in-pool page management table 372 to 0 for all the storage tiers 324 in the pool 321 (S8130), and ends the storage tier control process.

Fig. 22 is a flowchart of an IO request-based storage tier control process related to Example 1.

The IO request-based storage tier control process corresponds to the processing performed in Step S8200 of the storage tier control process (Fig. 21). The IO request-based storage tier control process is executed in a case where the storage tier control process has been executed in the storage apparatus 300 in accordance with an indication from either the management computer 100 or the host computer 200.

Whereas the storage tier control process is processing that may be executed on a regular basis, the IO request-based storage tier control process is processing executed in accordance with an indication based on the IO request by either the management computer 100 or the host computer 200. The IO request-based storage tier control process will be explained hereinbelow by giving an example in which this process is executed in page 323 units, but in a case where multiple pages 323 are included in a range of addresses specified in the option area of the IO request, the storage apparatus 300 may repeatedly execute this processing in proportion to the number of pages 323. A storage tier control process based on an IO request 600 with respect to each pool 321 will be explained below.

First, the storage apparatus 300 determines whether or not the indication content in the indication content 602 specified by the IO request 600 is either start page lock or cancel page lock (S8210). Here, an IO request 600, in which the indication content is start page lock, for example, is created when a job 225 starts, and an IO request 600, in which the indication content is cancel page lock, for example, is created when a job 225 ends. In a case where the indication content is either start page lock or cancel page lock (S8210: Yes), the storage apparatus 300 determines whether or not the indication content of the IO request 600 is start page lock (S8212). In a case where the indication content is start page lock (S8212: Yes), the storage apparatus 300 locks the page 323 specified in the destination 601 of the IO request 600 (S8216). Specifically, the storage apparatus 300 identifies the entry of the logical volume management table 371 that matches the virtual address of the logical volume 322 specified in the destination 601, and registers a flag (locked) showing that the lock flag 3715 of the relevant entry is under page lock control. In accordance with this, for the relevant page 323, the storage tier 324 is not migrated in the access frequency-based storage tier control process (the processing of Step S8010 and beyond of Fig. 21). The state of being under page lock control is maintained until a cancel page lock is performed. Thereafter, the storage apparatus 300 ends the IO request-based storage tier control process.

Alternatively, in a case where the indication content 602 is cancel page lock (S8212: No), the storage apparatus 300 releases the page lock on the page 323 specified in the destination 601 of the IO request 600 (S8218). Specifically, the storage apparatus 300 identifies the entry of the logical volume management table 371 that matches the virtual address of the logical volume 322 specified in the destination 601, and changes the flag, which shows that under page lock control is stored in the lock flag 3715 of the relevant entry, to a flag (unlocked) showing that the page lock is cancelled. In accordance with this, for the relevant page 323, the storage tier 324 can be migrated in the access frequency-based storage tier control process (the processing of Step S8010 and beyond of Fig. 21). Thereafter, the storage apparatus 300 ends the IO request-based storage tier control process.

Alternatively, in a case where the result of the determination of Step S8210 is that the indication content is neither start page lock nor cancel page lock (S8210: No), the storage apparatus 300 determines whether or not the indication content of the IO request 600 is page migration (S8220).

In a case where the result is that the indication content is page migration (S8220: Yes), the storage apparatus 300 determines whether or not there is a free pool volume 320, which will enable the allocation of the migration-target page 323 to the migration-destination storage tier 324 specified in the IO request 600 (S8221). At this point, in order to acquire the information of the migration-destination storage tier 324 specified in the IO request 600, the storage apparatus 300 references the entry of the logical volume management table 371 corresponding to the address of the page specified in the IO request 600, and based on the page ID in the page ID 3714 of the relevant entry, references an entry of the in-pool page management table 372. In addition, the storage apparatus 300 references an entry of the pool volume management table 373 based on the pool volume ID of the relevant entry, and determines whether or not there is a free pool volume in accordance with identifying an entry having a value of unused in the use flag 3738 of the entry in which the migration-destination storage tier 324 is stored in the tier 3733 of the relevant entry.

In a case where the result is that an allocatable pool volume 320 exists (S8221: Yes), the storage apparatus 300 performs a page migration from the current storage tier 324 to the specified storage tier 324 for the data at the virtual address shown by the page 323 specified in the IO request 600 (S8229). After the page migration, the storage apparatus 300 ends the IO request-based storage tier control process.

Alternatively, in a case where an allocatable pool volume 320 does not exist (S8221: No), the storage apparatus 300 performs processing for switching the page 323 specified in the IO request 600 with a page 323 that exists in the migration-destination storage tier 324 of the relevant page 323. Specifically, the storage apparatus 300 performs the following processing.

First, the storage apparatus 300 determines whether or not the page migration specified in the IO request 600 is a page migration to a higher-level storage tier 324 (S8222).

In a case where the result is a page migration to a higher-level storage tier 324 (S8222: Yes), the storage apparatus 300 selects a page 323 having the lowest access frequency from the higher-level storage tier 324, which is the page migration destination (S8226). In accordance with page switching, the selected page 323 is migrated to a lower-level storage tier 324 than the storage tier 324 to which it is currently allocated. Thus, the storage apparatus 300 selects a low access frequency page 323 with the intention of creating a configuration that is capable of making full use of the migration-destination lower-level storage tier 324 despite the low input/output performance shown by this storage tier 324.

Alternatively, in a case where the page migration specified in the IO request 600 is not a page migration to a higher-level storage tier 324 (S8222: No), the storage apparatus 300 selects the page 323 having the highest access frequency from the lower-level storage tier 324, which is the page migration destination (S8224). In accordance with page switching, the selected page 323 is migrated to a higher-level storage tier 324 than the storage tier 324 to which it is currently allocated. Thus, the aim is for the high access frequency page 323 to make effective use of the high input/output performance of the lower-level storage tier 324, which is the migration destination.

Next, the storage apparatus 300 switches the page 323 specified in the IO request 600 with the page 323 selected in either Step S8224 or Step S8226 (S8228). After the switch is complete, the storage apparatus 300 ends the IO request-based storage tier control process.

Alternatively, in a case where it has been determined in Step S8220 that the indication content of the IO request 600 is not a page migration (S8220: No), the storage apparatus 300 regards the storage tier control indication of the IO request 600 as an information acquisition related to a storage tier 324, acquires the allocation information of the storage tier 324 in the logical volume 322 specified in the IO request 600, and returns this allocation information to the source of the IO request 600 (S8230). Specifically, the storage apparatus 300 references the entry of the logical volume management table 371 shown by the logical volume 322 specified in the destination 601 of the IO request 600 and acquires the virtual address. Next, the storage apparatus 300 references the entry of the in-pool page management table 372 identified by the pool ID and the page ID of the relevant entry, and acquires the pool volume ID. In addition, the storage apparatus 300 references the entry of the pool volume management table 373 identified by the pool ID and the pool volume ID, and acquires the storage tier 324. Then, the storage apparatus 300 returns the acquired virtual address and storage tier 324 to the source of the IO request 600. Thereafter, the storage apparatus 300 ends the IO request-base storage tier control process.

As described hereinabove, in accordance with the storage apparatus 300 implementing the IO request-based storage tier control process, it becomes possible to control the storage tiers 324 on the storage apparatus 300 in units of pages 323 based on an indication from either the management computer 100 or the host computer 200.

Next, processing at each of three stages, a preparation stage, an implementation stage of a storage apparatus 300 equipped with storage tiers 324, and an operating stage of a storage apparatus 300 equipped with storage tiers 324, will be explained as processes performed by the host computer 200.

First, the processing of the host computer 200 at the preparation stage will be explained.

Fig. 23 is a flowchart of a preparation process at a preparation stage of the host computer 200 related to Example 1.

The preparation process is executed in accordance with the host computer 200 processor 202 executing the user input information receiving program 251, the job execution information acquisition program 252, and the storage tier information acquisition program 253.

The host computer 200, based on the user input information receiving program 251, detects a storage apparatus 300 that exists on the computer system 10 (S2010). For example, the IP address of the storage apparatus 300, which is inputted in accordance with the IO part 205 by the host computer 200 user, can be used as the information for detecting the storage apparatus 300. As the method for inputting the IP address, for example, a range of IP addresses, such as 192.168.1.1 through 192.168.1.50, may be inputted, or a specific IP address may be inputted.

The host computer 200 creates an IO request 600 for acquiring the configuration information of the storage apparatus 300, and sends the created IO request 600 to the inputted IP address destination. Upon receiving the configuration information acquisition IO request 600, the storage apparatus 300 references the logical volume management table 371 and the basic storage information 370 stored in the memory 301, and collectively returns to the host computer 200 the various information stored therein and information held by the storage device 308. The host computer 200 determines that the storage apparatus 300 from which there was a response is a storage tier control management-target storage apparatus 300.

Next, the host computer 200, based on the job execution information acquisition program 252, acquires job 225- related information from the OS 220, and creates the data configuration management table 271, the job performance information management table 274, and the job step execution time management table 275 (S2020). Specifically, the host computer 200 acquires a dataset name, a storage device name, a virtual address, a storage ID, and a logical volume ID from the OS 220, creates an entry for respectively storing the acquired information in the dataset name 2711, the storage device name 2712, the virtual address 2713, the storage ID 2714, and the logical volume ID 2715, and stores this entry in the data configuration management table 271. The host computer 200 also acquires a job name, a job 225 execution time requirement, and a job 225 execution time measured value from the OS 220, creates an entry for respectively storing the acquired information in the job name 2741, the execution time requirement 2742, and the execution time measured value 2743, and stores this entry in the job performance information management table 274. In addition, the host computer 200 acquires from OS 220 a job 225 name, the name of a job step 226 comprising the relevant job 225, the execution time measured value of the relevant job step 226, and the name of a dataset 331 used by the relevant job step 226, creates an entry for respectively storing the acquired information in the job name 2751, the job step name 2752, the execution time measured value 2753, and the dataset name 2754, and stores this entry in the job step execution time management table 275.

Next, the host computer 200, based on the storage tier information acquisition program 253, creates an IO request 600 for acquiring storage tier 324 information with respect to the storage apparatus 300 identified in Step S2010, and sends the IO request 600 to the relevant storage apparatus 300. Upon receiving the IO request 600 for acquiring the storage tier 324 information, the storage apparatus 300 references the logical volume management table 371, the in-pool page management table 372, and the pool volume management table 373 stored in the memory 301, and returns information related to the utilization status of the page 323 and the storage tier 324 to the host computer 200. The host computer 200, based on the information included in the response from the storage apparatus 300, creates a page configuration management table 272 and a storage tier information management table 273 (S2030).

Specifically, the host computer 200 stores the storage ID specified in the destination 601 of the IO request 600 in the storage ID 2721 of the page configuration management table 272. The host computer 200 also stores the logical volume ID in the logical volume ID 3712 of the logical volume management table 371 (actually, the corresponding content of the information included in the response from the storage apparatus 300) in the logical volume ID 2722, stores the page ID of the page ID 3714 in the page ID 2723, and stores the virtual address of the virtual address 3713 in the virtual address 2724. The host computer 200 stores the storage ID specified in the destination 601 of the IO request 600 in the storage ID 2731 of the storage tier information management table 273. The host computer 200 also stores the value that exists in the tier 3733 of the pool volume management table 373 in the tier 2732, and stores the value that exists in the IO processing time 3734 in the IO processing time 2733. In addition, the host computer 200 stores the total value of the size of the storage area shown by the real address 3735 of the pool volume management table entry, which matches the tier 2732 in the overall capacity 2734, and stores the total value of the page-lock capacity of the capacity of the relevant pool volume management table entry in the page-lock capacity 2735.

Next, the host computer 200 references the data configuration management table 271, the page configuration management table 272, and the job step execution time management table 275 to identify the page 323, which is storing the dataset 331 shown by the dataset name 2754 of the job step execution time management table 275. Then, the host computer 200 references the in-pool page management table 372 and the pool volume management table 373 to identify the destination storage tier 324 of the identified page 323. The host computer 200 stores the identified destination storage tier 324 in the destination storage tier 2755 of the job step execution time management table 275.

The processing of the host computer 200 during the preparation stage has been explained hereinabove.

Next, the processing of the host computer 200 during a storage tier 324-equipped storage apparatus 300 implementation stage will be explained. In the storage apparatus 300 implementation stage, the host computer 200 executes a storage tier capacity estimation process.

Fig. 24 is a flowchart of a storage tier capacity estimation process related to the Example 1.

First, the host computer 200, based on the user input information receiving program 251, acquires via the IO part 205 the name of the estimation-target job 225 from the user (S2110). The receipt of the input from the user via the IO part 205 here, for example, is performed via the screen 240 shown in Fig. 27. The screen 240 is for receiving the input from the user and displaying the result of the storage tier capacity estimation process executed by the host computer 200. The screen 240 comprises a job name input area 240a for receiving the input of the estimation-target job name from the user. The job name input area 240a is configured so that either one or multiple job names can be inputted. The screen 240 also comprises an estimation indication button 240b for receiving an execution indication with respect to the storage tier capacity estimation process regarding the job of the job name inputted to the job name input area 240a by the user.

Next, the host computer 200, based on the over/under-performance dataset identification program 254, executes the over-performance job step identification process (refer to Fig. 25), and identifies an over-performance job step 226 for the job 225 shown by either one or multiple job names acquired in Step S2110 (S2120).

In addition, the host computer 200 executes the over-performance job step combination decision process (refer to Fig. 26), and decides on a combination of over-performance job steps 226 capable of being migrated from an over-performance job step 226 identified in Step S2120 to a lower-level tier 324 (S2130).

Then, the host computer 200 determines whether or not a combination of over-performance job steps 226 has been identified for all the jobs 225 acquired in Step S2110 (S2140). In a case where a combination of over-performance job steps 226 has been identified for all jobs (S2140: Yes), the host computer 200 advances the processing to Step S2150. Alternatively, in a case where a combination of over-performance job steps 226 has not been identified for all jobs 225 (S2140: No), the host computer 200 moves the processing to Step S2120.

In Step S2150, the host computer 200 calculates the capacity required for each storage tier 324 in a case where the dataset 331 used by the either one or multiple over-performance job steps 226 decided in Step S2130 is stored in a lower-level storage tier 324. Specifically, a value obtained by subtracting the total size of the over-performance dataset 331 from the total size of the dataset 331 used by the job 225 acquired in Step S2110 becomes the capacity required in the higher-level storage tier 324. Alternatively, the total size of the over-performance dataset 331 becomes the capacity required in the lower-level storage tier 324. In this way, the host computer 200 calculates the capacities of the required storage tiers 324 for storing the datasets 331 used by the jobs 225. Then, the host computer 200 displays information on the capacity calculated for each storage tier 324 via the IO part 250.

The displaying of information via the IO part 205 here, for example, is performed using the screen 240 shown in Fig. 27. The screen 240 comprises an estimation display area 240c in which an estimate of the capacity of each storage tier 324 calculated by the host computer 200 is displayed. As shown in Fig. 27, either one or multiple estimates of the capacity of each storage tier 324 may be displayed in the estimation display area 240c. In addition, an estimate that places importance on curbing an increase in the job 225 execution time and an estimate that places importance on reducing as much as possible the capacity of the higher-level storage tier 324 may be displayed. This screen 240 is also provided with a detailed display button 240d for displaying the details of the destination storage tier 324 of each dataset 331 and a change in the execution time of each job 225 for the capacity estimation of either one or multiple storage tiers 324. When this detailed display button 240d is pressed, information related to the execution time change of each job 225 and the destination storage tier 324 of each dataset 331 is displayed.

Fig. 25 is a flowchart of an over-performance job step identification process related to Example 1.

The over-performance job step identification process corresponds to the processing performed in Sep S2120 of the storage tier capacity estimation process (refer to Fig. 24). The over-performance job step identification process is executed in a case where either the management computer 100 or the host computer 200 executes the storage tier capacity estimation process in accordance with a user indication.

First, the host computer 200 calculates the acceptable increase in the job 225 execution time for the job 225 targeted for identifying an over-performance job step 226 (S2210). Specifically, the host computer 200 acquires from the job performance information management table 274 an entry that matches the job name acquired in accordance with an input from the user. Then, the host computer 200 calculates the acceptable increase in the execution time of the job 225 shown by the job name 2741 by subtracting the execution time measured value 2743 from the execution time requirement 2742 of the acquired entry.

Next, the host computer 200 acquires the execution time of the job step 226 comprising the job 225 and the dataset name of the dataset 331 used in the job step 226 (S2220). Specifically, the host computer 200 acquires from the job step execution time management table 275 an entry that matches the job name in the job name 2741 of the job performance information management table 274. Then, the host computer 200 references the execution time measured value 2753 of the acquired entry to acquire the execution time measured value of the job step 226 shown in the job step name of the job step name 2752. The host computer 200 also identifies the dataset name of the dataset 331 used in the job step 226 shown by the job step name in the job step name 2752 by referencing the dataset name 2754.

Then, the host computer 200 calculates a maximum increase in the execution time of the relevant job step 226 (a predicted amount of change in the execution performance) in a case where all of the datasets 331 used in the job step 226 are migrated to the lower-level storage tier 324 (S2240). Specifically, first the host computer 200 calculates the maximum rate of increase in the data access time in a case where the dataset 331 is migrated from the current destination storage tier 324 to the lower-level storage tier 324. Thus, the host computer 200 references the job step execution time management table 275 and the storage tier information management table 273 for each dataset 331 to acquire from the storage tier information management table 273 the entry comprising the tier 2732 in which is stored the storage tier corresponding to the storage tier in the dataset 331 destination storage tier 2755. Then, the host computer 200 divides the IO processing time 2733 of the entry showing the storage tier 324, which is at a lower level than the storage tier 324 of the relevant tier 2732, by the IO processing time of the IO processing time 2733 of the acquired entry to calculate the rate of increase of the data access processing time in a case where the dataset 331 is migrated to the lower-level storage tier. However, in a case where the storage tier of the dataset 331 destination storage tier 2755 is the lowest level storage tier, the host computer 200 does not calculate the rate of increase of the data access processing time related to the relevant dataset 331. The host computer 200 executes the above-described processing for all the datasets 331 used in the job step 226 and calculates the maximum rate of increase of the data access time. This is intended to identify the maximum rate of increase of the data access time for calculating the maximum increase in the execution time of the job step 226 in a case where all the datasets 331 used in the job step 226 are migrated to the lower-level storage tier 324. Then, the host computer 200 adds up the maximum increase rate of the identified data access time and the execution time measured value 2753 of the job step execution time management table 275 to calculate the maximum increase in the execution time of the relevant job step 226. Thus, the calculation of the maximum increase in the execution time when the data access time accounts for the largest percentage of the job step 226 execution time, that is, when the job step 226 execution time and the data access time are equivalent, is for increasing to the utmost the job step 226 execution time in a case where the dataset 331 is migrated to the lower-level storage tier 324.

Next, the host computer 200 compares the acceptable increase in the execution time of the job 225 calculated in Step S2210 to the maximum increase in the job step 226 execution time calculated in the Step S2240 (S2250). In a case where the acceptable increase in the execution time is smaller than the maximum increase in the execution time (S2250: Yes), the host computer 200 determines that the dataset 331 used in the relevant job step 226 is not over performance (S2260), and advances the processing to Step S2270. Alternatively, in a case where the acceptable increase in the execution time is equal to or larger than the maximum increase in the execution time (S2250: No), the host computer 200 determines that the dataset 331 used in the relevant job step 226 is likely to be over performance (S2265), and advances the processing to Step S2270.

In Step S2270, the host computer 200 identifies whether or not a determination has been made for all of the job steps 226. In a case where a determination has been made for all the job steps 226 (S2270: Yes), the host computer 200 advances the processing to Step S2280. Alternatively, in a case where a determination has not been made for all of the job steps 226 (S2270: No), the host computer 200 advances the processing to Step S2220.

In Step S2280, the host computer 200 identifies the presence or absence of a dataset 331, which has been determined not to be over performance with respect to the datasets 331 used in the job steps 226, determines that a job step 226, which uses only a dataset 331 that is likely to be over performance is over performance, and ends the over-performance job step identification process.

Fig. 26 is a flowchart showing an over-performance job step combination decision process related to Example 1.

The over-performance job step combination decision process corresponds to the processing performed in Step S2130 of the storage tier capacity estimation process (refer to Fig. 24). The over-performance job step combination decision process is executed in a case where either the management computer 100 or the host computer 200 executes the storage tier capacity estimation process in accordance with a user indication.

First, the host computer 200 carries out the same processing as that of Step S2210 of Fig. 25 for the job 225 targeted for identifying an over-performance job step 226, and calculates the acceptable increase in the execution time of the job 225 (S2310).

Next, the host computer 200 initializes the increase in the execution time variable of the relevant job 225 to 0 (S2320).

Then, the host computer 200 selects from the job steps 226 determined to be over performance in Step S2280 of the over-performance job step identification process (refer to Fig. 25) the job step 226 having the smallest maximum increase in the execution time (in units of a predicted amount of change) with respect to each prescribed-data-size data set 331 capable of being migrated to the lower-level storage tier 324 (S2330). This is intended to select a job step 226 from the job steps 226 having a small maximum increase in the execution time with respect to each prescribed-data-size data set 331 to be migrated. This enables the total size of the datasets 331 migrated to the lower-level storage tier 324 to be made as large as possible within the range of the acceptable increase in the execution time of the job 225. The maximum increase in the execution time with respect to each prescribed-data-size dataset 331 is obtained by dividing the maximum increase in the execution time with respect to the dataset 331 by the amount of data corresponding to the virtual address range of the virtual address 2713 of the data configuration management table 271 corresponding to this dataset 331.

Next, the host computer 200 adds the maximum increase in the execution time of the selected job step 226 to the increase in the execution time of the job 225 (S2350), and compares the increase in the execution time of the job 225 to the acceptable increase in the execution time (S2360). In a case where the increase in the execution time of the job 225 is equal to or larger than the acceptable increase in the execution time (S2360: Yes), the host computer 200 determines that the job 225 performance requirement will not be met when more datasets 331 are migrated to the lower-level storage tier 324, and advances the processing to Step S2390.

Alternatively, in a case where the increase in the execution time of the job 225 is less than the acceptable increase in the execution time (S2360: No), the host computer 200 adds the job step 226 selected in Step S2330 to a candidate for combination of over-performance job steps 226 (S2370). Next, the host computer 200 identifies whether or not all the job steps 226 of the job have been selected (Step S2380). In a case where all the job steps 226 have been selected (S2380: Yes), the host computer 200 advances the processing to Step S2390. Alternatively, in a case where all the job steps 226 have not been selected (S2380: No), the host computer 200 moves the processing to Step S2330.

In Step S2390, the host computer 200 decides on all of job step 226 combination candidates added in Step S2370 and subsets thereof as the combination of the over-performance job steps 226, and ends the over-performance job step combination decision process. This makes it possible to appropriately identify a combination of multiple job steps 226, which are able to migrate a page.

The processing of the host computer 200 in the implementation stage of a storage tier 324-equipped storage apparatus 300 has been explained hereinabove.

Finally, the processing of the host computer 200 in the operating stage of the storage tier 324-equipped storage apparatus 300 will be explained.

Fig. 28 is a second drawing showing an example of a host computer operation screen related to Example 1. Fig. 28 shows an example of the host computer 200 operation screen in the operating stage of the storage tier 324-equipped storage apparatus 300.

In the operating stage, the host computer 200, based on the user input information receiving program 251, acquires from the user the name of the job 225 for identifying an over-performance dataset 331 via the IO part 205. This operation, for example, is performed using the screen 241 shown in Fig. 28. The screen 241 is for receiving the input from the user and displaying information of the over-performance dataset 331 identified by the host computer 200. The screen 241 comprises a job name input area 241a for receiving an input of a processing-target job name from the user. The job name input area 241a is configured to enable the input of a job name. The screen 241 also comprises a search indication button 241b for receiving an execution indication for a process that searches for a combination of datasets to be migrated between storage tiers with respect to the job of the job name inputted to the job name input area 241a by the user.

Next, the host computer 200, based on the over/under-performance dataset identification program 254, executes the over-performance job step identification process (refer to Fig. 25) with respect to the job 225 shown by the job name acquired from the user input. In addition, the host computer 200 executes the over-performance job step combination decision process (refer to Fig. 26) with respect to the over-performance job step 226 identified in the over-performance job step identification process.

Then, the host computer 200 displays for the user via the IO part 205 a dataset 331 used in a set of job steps 226 decided as the over-performance job step 226 combination in the over-performance job step combination decision process as a combination of over-performance datasets 331 capable of being migrated to the lower-level storage tier 324. The display of the combination of the migratable over-performance datasets 331, for example, is performed using the screen 241 shown in Fig. 28.

The host computer 200 can receive an indication from the user for migrating the displayed over-performance dataset 331 to the lower-level storage tier 324. The host computer 200, for example, receives an indication for migrating a dataset 331 in accordance with the user pressing the dataset migration indication button 241c shown in the screen 241 of Fig. 28.

The host computer 200, which receives the dataset 331 migration indication from the user, based on the storage tier control indication program 257, instructs the storage apparatus 300 to perform storage tier control with respect to the page 323 storing the relevant dataset 331. Specifically, the host computer 200 acquires from the data configuration management table 271 the entry that matches the target dataset name of storage tier control acquired from the user input. Next, the host computer 200 acquires from the page configuration management table 272 the entry that matches the virtual address 2713 of the acquired entry. In addition, the host computer 200 creates an IO request 600 for a storage tier control indication, and stores in the created IO request 600 the page ID 2723 of the acquired entry and the migration-destination tier of the dataset 331 acquired from the user input. Then, the host computer 200 sends the created IO request 600 to the storage apparatus 300. In accordance with this, the storage apparatus 300 executes the processing shown in Figs. 21 and 22, and performs the migration of the dataset 331 in accordance with the user indication.

The processing of the host computer 200 in the operating stage of the storage tier 324-equipped storage apparatus 300 has been explained hereinabove.

Next, the operations of the management computer 100 will be explained.

The management computer 100 performs the same operations as the host computer 200 based on programs having the same functions as the various programs stored in the memory 201 of the host computer 200. Here, the "centralized aaa programs", which are stored in the memory 101 of the management computer 100, are programs having the same functions as the "aaa programs", which are stored in the memory 201 of the host computer 200. The management computer 100 centrally manages multiple host computers 200. Specifically, the management computer 100 is able to perform the above-described host computer 200 processing with respect to each of multiple host computers 200. Since the processing with respect to each host computer 200 is the same as that of the host computer 200 described hereinabove, a detailed explanation of the operations of the management computer 100 will be omitted.

### (1-6) Effects of Example 1

As described above, according to Example 1, the host computer 200 identifies from among datasets 331 used by a job 225 a set of datasets 331 that can be migrated to a lower-level storage tier 324 while meeting the performance requirement of the relevant job 225. The host computer 200 also identifies and outputs a combination of datasets 331 with respect to the identified set of datasets 331 within a range that meets the performance requirement of the relevant job 225.

This makes it possible for the user to ascertain the capacity needed for each storage tier 324 when a storage tier 324-equipped storage apparatus is implemented. The user is also able to migrate an over-performance dataset 331 to a lower-level storage tier 324 when the storage tier 324-equipped storage apparatus is in operation. As a result of this, another dataset 331 is able to make effective use of the higher-level storage tier 324. By lowering the frequency with which the higher-level storage tier 324 is used, it is possible to increase the life of the storage device configuring the relevant storage tier 324.

### [Example 2]

### (2-1) Overview of Example 2

A computer system related to Example 2 will be explained next.

In Example 2, regarding a job 225 that meets a performance requirement, an over-performance dataset 331 is identified from among datasets 331 used by the relevant job 225 the same as in Example 1.

However, in Example 2, rather than make a determination as to whether or not either one or multiple datasets 331 used in a job step 226 are over performance for each job step 226 comprising the job 225 as in Example 1, a determination is made as to whether or not the relevant dataset 331 is over performance for each dataset 331 used by the job 225. Specifically, a total value of the number of data accesses with respect to the relevant dataset 331 is measured from the start until the end of a job 225 execution for each dataset 331. Next, the IO processing time difference between storage tiers 324 is identified. Then, from the number of data accesses and the IO processing time per data access, the increase in the execution time of the job 225 in a case where the relevant dataset 331 is migrated to the lower-level storage tier 324 is calculated. In addition, the acceptable increase in the execution time of the job 225 is calculated, and a determination is made as to whether or not the relevant dataset 331 is over performance in accordance with comparing the increase in the execution time to the acceptable increase in the execution time the same as in Example 1.

Thus, in Example 2, the increase in the execution time of the job 225 is calculated in units of datasets 331, which are more detailed than the units of sets of datasets used in the job steps. Thus, the effect is that, although more time is required to acquire the information for calculating the increase in the execution time than in Example 1, it is possible to more precisely identify an over-performance dataset 331.

### (2-2) Computer System Hardware Configuration

The configurations of the computer system and the storage apparatus in Example 2 are the same as the configurations of the computer system (refer to Fig. 1) and the storage apparatus (refer to Fig. 4) in Example 1.

Fig. 31 is a block diagram of a host computer related to Example 2. Like reference numerals are appended to parts, which are the same as those of the host computer related to Example 1 shown in Fig. 3.

In addition to storing the various programs and tables, with the exception of the job step processing time management table 275, deployed in the memory 201 of the host computer 200 related to Example 1, the memory 201 of the host computer 200 (referred to as 200A hereinafter) related to Example 2 also stores a data access information management table 276.

The data access information management table 276 stores information for managing the number of data accesses to a dataset in accordance with a job 225.

Fig. 30 is a block diagram of a management computer related to Example 2. Like reference numerals are appended to parts, which are the same as those of the management computer related to Example 1 shown in Fig. 2.

In addition to storing the various programs and tables, with the exception of the centralized job step processing time management table 175, deployed in the memory 101 of the management computer 100 in Example 1, the memory 101 of the management computer 100 (referred to as 100A hereinafter) related to Example 2 also stores a centralized data access information management table 176.

The centralized data access information management table 176 stores information for managing the number of data accesses to a dataset in accordance with a job 225.

### (2-3) Overview of Computer System Processing

Next, an overview of the processing of the computer system related to Example 2 will be explained.

The host computer 200A in Example 2 identifies an over-performance dataset 331 by calculating an increase in the execution time of a job 225 in a case where the dataset 331 used by the job 225 is migrated to a lower-level storage tier 324 the same as the host computer 200 in Example 1. However, in Example 2, the host computer 200A calculates the increase in the execution time of the job 225 for each dataset 331, that is, the increase in the execution time of the job 225.

A method for determining whether or not a dataset 331 is over performance by calculating the increase in the execution time of the job 225 for each dataset 331 in Example 2 will be explained hereinbelow.

Fig. 32 is a conceptual drawing illustrating an overview of a method for identifying an over-performance dataset related to Example 2.

It is supposed here that a job 225 is being deployed in the memory 201 of the host computer 200A as shown in Fig. 32. It is also supposed that the deployed job 225 uses four datasets 331 (dataset A, dataset B, dataset C, and dataset D).

In this example, the host computer 200A uses the requirement for the job 225 execution time, the measured value of the job 225 execution time, the destination storage tier 324 of the dataset 331 used by the job 225, the IO processing time of each storage tier 324, and the number of data accesses to each dataset to identify an over-performance dataset 331.

First, the host computer 200A uses the difference between the job 225 execution time requirement and the execution time measured value to calculate an acceptable increase in the execution time for the relevant job 225 the same as in Example 1. In the example of Fig. 32, the acceptable increase in the execution time of the job 225 is 230 ms (400 ms (the job 225 execution time requirement) - 170 ms (the job 225 execution time measured value)).

Next, the host computer 200A, based on the destination storage tier 324 of the dataset 331 used by the job 225 and the IO processing time of each storage tier 324, calculates the increase in data access time per data access in a case where the dataset 331 is migrated to the lower-level storage tier 324. In the example shown in Fig. 32, the dataset D used by the job 225 is stored in the medium-performance storage tier 324. The IO processing time of the medium-performance storage tier 324 is 10 ms, and the IO processing time of the low-performance storage tier 324 is 30 ms. In accordance with this, when the dataset D is migrated to the low-performance storage tier 324, the increase in the data access time per data access to the dataset D can be calculated as 20 ms (30 ms - 10 ms).

Then, the host computer 200A, based on the calculated increase in the data access time with respect to the dataset 331 and the number of data accesses to the relevant dataset 331, calculates the increase in the execution time of the job 225 in a case where the relevant dataset 331 is migrated to the lower-level storage tier 324. In the example shown in Fig. 32, since the increase in the data access time with respect to the dataset D is 20 ms and there are four data accesses, the job execution time can be calculated as increasing to 80 ms in a case where the dataset D is migrated to the lower-level storage tier 324. Since the actual number of data accesses is used here, the increase in the execution time can be more appropriately calculated.

In addition, the host computer 200A compares the calculated increase in the execution time of the job 225 to the acceptable increase in the execution time of the job 225. In a case where the increase in the execution time of the job 225 is smaller than the acceptable increase in execution time of the job 225, the host computer 200A determines that the relevant dataset 331 is over performance, and, alternatively, in a case where the increase in the execution time of the job 225 is not smaller than the acceptable increase in execution time of the job 225, determines that the relevant dataset 331 is not over performance. In the example shown in Fig. 32, the increase in the execution time of the job 225 in a case where the dataset D is migrated to the lower-level storage tier 324 is 80 ms, and the acceptable increase in execution time of the job 225 is 230 ms. Thus, the host computer 200A determines that the dataset D is over performance.

The host computer 200A identifies an over-performance dataset 331 by making the above determination for each dataset 331.

An overview of the method for identifying an over-performance dataset 331 in this example has been explained hereinabove.

Furthermore, a storage tier control process, which is realized by the computer system 10, is the same as that of Example 1, and basically is executed by the host computer 200A and the storage apparatus 300. However, the management computer 100 may centrally manage multiple host computers 200 and the storage apparatus 300 as needed the same as in Example 1. Or, the management computer 100 may send a storage tier control indication directly to the storage apparatus 300.

### (2-4) Contents of Each Table

Fig. 33 is a drawing showing an example of a data access information management table related to Example 2.

The data access information management table 276 is for managing information related to a data access required for calculating an increase in the execution time of a job in a case where the dataset 331 is migrated to the lower-level storage tier 324, and each entry comprises a field for a job name 2761, a dataset name 2762, a destination storage tier 2763, and a number of data accesses 2764.

A name of a job 225 (job name) used when the OS 220 running on the host computer 200A executes an application is stored in the job name 2761. A name of a dataset 331 (dataset name) used by the job 225 shown by the job name of the same entry is stored in the dataset name 2762. The storage tier 324, which stores the dataset 331 shown by the dataset name, is stored in the destination storage tier 2763. A number of times, which data access is performed to the dataset 331 shown by the dataset name 2762 from execution start to execution end of the job 225 shown by the job name of the same entry, is stored in the number of data accesses 2764.

As shown in Fig. 30, a centralized data access information management table 176 is stored in the memory 101 of the management computer 100A. The centralized data access information management table 176 has the same functions as the data access information management table 276 stored in the memory 201 of the host computer 200A. Specifically, the centralized data access information management table 176 adds a column (field) for storing an identifier (host ID) for uniquely identifying the host computer 200A to the data access information management table 276, and consolidates the information of the data access information management table 176 managed by each host computer 200A that is managed by the management computer 100. Since the configuration is such, a drawing showing the contents of the centralized data access information management table 176 and a detailed explanation thereof will be omitted.

### (2-5) Detailed Each Apparatus Operations

The detailed operations of each apparatus in Example 2 will be explained in order beginning with the host computer 200A and then the management computer 100A. The detailed operations of the storage apparatus 300 in this example are the same as the detailed operations of the storage apparatus 300 in Example 1 (Figs. 19, 20, 21, and 22). Thus, a detailed explanation of the operations of the storage apparatus 300 in Example 2 will be omitted.

First, the operations of the host computer 200A will be explained.

The processing at each of three stages, a preparation stage, the storage tier 324-equipped storage apparatus 300 implementation stage, and the storage tier 324-equipped storage apparatus 300 operating stage, will be explained as processes performed by the host computer 200A in Example 2.

First, the processing of the host computer 200A during the preparation stage will be explained.

In the preparation stage of Example 2, the host computer 200A executes processing, which excludes the process for creating a job step processing time management table 275 from the processing of the host computer 200 in the preparation stage of Example 1 (refer to Fig. 23). That is, the host computer 200A creates a data configuration management table 271, a page configuration management table 272, a storage tier information management table 273, and a job performance information management table 274.

In addition, the host computer 200A, based on the job execution information acquisition program 252, acquires information related to a job 225 from the OS 220 and creates a data access information management table 276. Specifically, the host computer 200A acquires from the OS 220 a job name, a dataset name used by the job 225, and a number of data accesses to the dataset 331. The host computer 200A also references the data configuration management table 271 and the page configuration management table 272 to identify the destination storage tier 324 of the page 323 for storing the acquired dataset 331. Then, the host computer 200A creates an entry for respectively storing either the acquired or identified information in the job name 2761, the dataset name 2762, the destination storage tier 2763, and the number of data accesses 2764, and stores this entry in the data access information management table 276.

Next, the processing of the host computer 200A at the implementation stage of the storage tier 324-equipped storage apparatus 300 will be explained. At the storage apparatus 300 implementation stage, the host computer 200A executes a storage tier capacity estimation process.

Fig. 34 is a flowchart of the storage tier capacity estimation process related to Example 2.

First, the host computer 200A executes the same processing as that of the host computer 200 in Example 1 (S2110 of Fig.24), and acquires the name of the estimation-target job 225 from the user (S2410).

Next, the host computer 200A, based on the over/under-performance dataset identification program 254, executes an over-performance dataset identification process (Refer to Fig. 35), and identifies an over-performance dataset 331 for the job 225 shown by the either one or multiple job names acquired in Step S2410 (S2420).

In addition, the host computer 200A executes an over-performance dataset combination decision process (refer to Fig. 36), and decides on a combination of over-performance datasets 331 that can be migrated to the lower-level storage tier 324 from among the over-performance datasets 331 identified in Step S2420 (S2430).

Then, the host computer 200A determines whether or not a combination of over-performance datasets 331 has been identified for all the jobs 225 acquired in Step S2410 (S2440). In a case where a combination of over-performance datasets 331 has been identified for all the jobs (S2440: Yes), the host computer 200A advances the processing to Step S2450. Alternatively, in a case where a combination of over-performance datasets 331 has not been identified for all the jobs 225 (S2440: No), the host computer 200A moves the processing to Step S2420.

In Step S2450, the host computer 200A executes the same processing (S2150 of Fig. 24) as the host computer 200 in Example 1, and displays information concerning the capacity required for each storage tier 324.

Fig. 35 is a flowchart showing an over-performance dataset identification process related to Example 2.

The over-performance dataset identification process corresponds to the processing performed in Step S2420 of the storage tier capacity estimation process (refer to Fig. 34). The over-performance dataset identification process is executed in a case where either the management computer 100A or the host computer 200A has executed a storage tier capacity estimation process in accordance with a user indication.

First, the host computer 200A executes the same processing (S2210 of Fig. 25) as that of the host computer 200 in Example 1 for the job 225 targeted for identifying the over-performance dataset 331, and calculates the acceptable increase in the execution time of the job 225 (S2510).

Next, the host computer 200A regards one dataset 331 used by the job 225 as the dataset targeted for processing (processing-target dataset), and determines whether or not the storage tier 324, which is storing the processing-target dataset 331, is the lowest level storage tier 324 (S2520). In a case where the storage tier 324 storing the processing-target dataset 331 is the lowest level (S2520: Yes), the host computer 200A determines that the processing-target dataset 331 is not over performance (S2555) and advances the processing to Step S2560. Alternatively, in a case where the storage tier 324 storing the processing-target dataset 331 is not the lowest level S2520: No), the host computer 200A moves the processing to Step S2530.

In Step S2530, the host computer 200A calculates the increase in the execution time of the job 225 in a case where the processing-target dataset 331 is migrated from the current destination storage tier 324 to the lower-level storage tier 324. Specifically, the host computer 200A acquires from the data configuration management table 271 an entry that matches the dataset name in the dataset name 2762 of the data access information management table 276. Then, the host computer 200A acquires from the storage tier information management table 273 an entry that matches the storage tier in the destination storage tier 2755 and the storage ID in the storage ID 2714 of the acquired entry. In addition, the host computer 200A subtracts the IO processing time in the IO processing time 2733 of the acquired entry from the IO processing time in the IO processing time 2733 of the entry showing the lower-level storage tier 324, and calculates the increase in the data access time per data access in a case where the processing-target dataset 331 is migrated to the lower-level storage tier 324. Then, the host computer 200A adds up the calculated increase in the data access time per data access and the number of data accesses in the number of data accesses 2764 corresponding to the processing-target dataset 331 of the data access information management table 276 to calculates the increase in the execution time of the job 225 in a case where the processing-target dataset 331 is migrated to the lower-level storage tier 324.

Next, the host computer 200A compares the calculated increase in the execution time of the job 225 to the acceptable increase in the execution time of the job 225 (S2540). In a case where the acceptable increase in the execution time of the job 225 is smaller than the increase in the execution time of the job 225 (S2540: Yes), the host computer 200A determines that the processing-target dataset 331 is not over performance (S2555) and advances the processing to Step S2560. Alternatively, in a case where the acceptable increase in the execution time of the job 225 is equal to or larger than the increase in the execution time of the job 225 (S2540: No), the host computer 200A determines that the processing-target dataset 331 is over performance (S2550) and advances the processing to Step S2560.

In Step S2560, the host computer 200A identifies whether or not a determination has been made for all the datasets 331 used by the job 225. In a case where a determination has been made for all the datasets 331 (S2560: Yes), the host computer 200A ends the over-performance dataset identification process. Alternatively, in a case where a determination has not been made for all the datasets 331 (S2560: No), the host computer 200A moves the processing to Step S2520, and executes the processing of this and the subsequent steps having the dataset 311 for which a determination has not been made as the processing target.

Fig. 36 is a flowchart showing an over-performance dataset combination decision process related to Example 2.

The over-performance dataset combination decision process corresponds to the processing performed in Step S2430 of the storage tier capacity estimation process (refer to Fig. 34). The over-performance dataset combination decision process is executed in a case where either the management computer 100A or the host computer 200A has executed the storage tier capacity estimation process in accordance with a user indication.

First, the host computer 200A performs the same processing as that of Step S2510 of Fig. 35 for the job 225 targeted for identifying the over-performance dataset 331 to calculates the acceptable increase in the execution time of the job 225 (S2610).

Next, the host computer 200A initializes the increase in the execution time of the relevant job 225, which is a variable, to 0 (S2620).

Then, from among the datasets 331 determined to be over performance in Step S2550 of the over-performance dataset identification process (refer to Fig. 35), the host computer 200A selects the dataset 331 having the smallest increase in data access time per prescribed data size when migrated to the lower-level storage tier 324 (S2630). This is intended to preferentially select datasets 331 having a small increase in the job 225 execution time per data size as a combination in order to increase as much as possible the total data size of the datasets 331 migrated to the lower-level storage tier 324 within the range of the acceptable increase in the execution time of the job 225. The increase in the data access time per prescribed data size of each data set 331 here is obtained by dividing the increase in the execution time for each dataset 331 by the amount of data, which corresponds to the virtual address range in the virtual address 2713 of the data configuration management table 271 corresponding to the dataset 331.

Next, the host computer 200A adds the increase in the data access time of the dataset 331 selected in Step S2630 to the increase in the execution time of the job 225 (S2650).

Then, the host computer 200A compares the increase in the execution time of the job 225 to the acceptable increase in the execution time (S2660). In a case where the increase in the execution time of the job 225 is equal to or larger than the acceptable increase in the execution time (S2660: Yes), the host computer 200A determines that the job 225 performance requirement will not be met when the relevant dataset 331 is migrated to the lower-level storage tier 324, and advances the processing to Step S2690. Alternatively, in a case where the increase in the execution time of the job 225 is less than the acceptable increase in the execution time (S2660: No), the host computer 200A adds the dataset 331 selected in Step S2630 as an over-performance dataset 331 combination candidate (S2670). Next, the host computer 200A identifies whether or not all the datasets 331, which have been determined to be over performance, have been selected (S2680). In a case where all the datasets 331 determined to be over performance have been selected (S2680: Yes), the host computer 200A executes the processing of Step S2690. Alternatively, in a case where all the datasets 331 determined to be over performance have not been selected (S2680: No), the host computer 200A moves the processing to Step S2630.

In Step S2690, the host computer 200A decides on all of the dataset 331 combination candidates added in Step S2670 and subsets thereof as the combination of the over-performance dataset 331, and ends the over-performance dataset combination decision process. This makes it possible to appropriately identify a combination of multiple datasets 331, which is able to migrate a page.

The processing of the host computer 200A in the implementation stage of a storage tiers 324-equipped storage apparatus 300 has been explained hereinabove.

Finally, the processing of the host computer 200A in the operating stage of the storage tier 324-equipped storage apparatus 300 will be explained.

In the operating stage, the host computer 200A, based on the user input information receiving program 251, acquires from the user the name of the job 225 for identifying an over-performance dataset 331 via the IO part 205. This processing, for example, is performed using the screen 241 shown in Fig. 28 the same as in the case of the host computer 200 related to Example 1.

Next, the host computer 200A, based on the over/under-performance dataset identification program 254, executes the over-performance dataset identification process (refer to Fig. 35) with respect to the job 225 shown by the job name acquired from the user input. In addition, the host computer 200A executes the over-performance dataset combination decision process (refer to Fig. 36).

Then, the host computer 200A displays for the user via the IO part 205 the combination of over-performance datasets 331 decided on in the over-performance dataset combination decision process the same as the host computer 200 in Example 1.

The host computer 200A, based on the storage tier control indication program 257, instructs the storage apparatus 300 to perform a page migration for the page storing the relevant dataset 331 in accordance with a dataset 331 migration indication from the user the same as the host computer 200 in Example 1. In accordance with this, the storage apparatus 300 executes the processing shown in Figs. 21 and 22, and performs the migration of the dataset 331 in accordance with the user indication.

The processing of the host computer 200A in the operating stage of the storage tier 324-equipped storage apparatus 300 has been explained hereinabove.

Next, the operations of the management computer 100A will be explained.

The management computer 100A performs the same operations as the host computer 200A based on programs having the same functions as the various programs stored in the memory 201 of the host computer 200A. Here, the "centralized aaa programs", which are stored in the memory 101 of the management computer 100A, are programs having the same functions as the "aaa programs", which are stored in the memory 201 of the host computer 200A. The management computer 100A centrally manages multiple host computers 200A. Specifically, the management computer 100A is able to perform the above-described host computer 200A processing with respect to each of multiple host computers 200A. Since the processing with respect to each host computer 200A is the same as that of the host computer 200A described hereinabove, a detailed explanation of the operations of the management computer 100A will be omitted.

### (2-6) Effects of Example 2

As described above, according to Example 2, the host computer 200A identifies from among datasets 331 used by a job 225 a dataset 331 that can be migrated to a lower-level storage tier 324 while meeting the performance requirement of the relevant job 225. The host computer 200A also identifies and outputs a combination of datasets 331 with respect to the identified dataset 331 within a range that meets the performance requirement of the relevant job 225. In addition, the host computer 200A identifies an over-performance dataset 331 in units of datasets 331.

This makes it possible for the user to ascertain in more detail than in Example 1 a dataset 331 that is capable of being migrated to the lower-level storage tier 324. As a result of this, the capacity required in the higher-level storage tier 324 can be reduced more than in Example 1. Also, a large number of datasets 331 is able to make effective use of the higher-level storage tier 324. In addition, by lowering the frequency with which the higher-level storage tier 324 is used, it is possible to increase the life of the storage device configuring the relevant storage tier 324.

In Example 1 and Example 2, the host computer 200 and the host computer 200A are mainframes.

The mainframe user (mainframe administrator) stipulates a performance requirement via the mainframe IO part for an application to be run on the mainframe, monitors the performance of the relevant application, and, in addition, controls the computer resources allocated to the relevant application.

In Example 1 and Example 2, the mainframe administrator is able to ascertain an over-performance dataset via the mainframe IO part the same as in conventional computer resource allocation control.

### [Example 3]

### (3-1) Overview of Example 3

Next, a computer system related to Example 3 will be explained.

The host computer 200 in Example 3 is an open system. The difference in the operations between the computer system 10 related to Example 3 and the computer system 10 related to Example 1 will be explained hereinbelow.

The computer system 10 related to Example 1 handles a job 225, a job step 226, and a dataset 331. Alternatively, the computer system 10 related to Example 3 handles a task, which is equivalent to the job 225, a subtask, which is equivalent to the job step 226, and a file, which is equivalent to the dataset 331.

In Example 1, basically the host computer 200 identifies an over-performance dataset 331. Alternatively, in Example 3, basically the management computer 100 identifies an over-performance file. Furthermore, basically the management computer 100 related to Example 3 instructs each host computer 200 to collect task performance information and file configuration information. The host computer 200, which receives the indication, gathers together the task performance information and the file configuration information and returns this information to the management computer 100. However, the same as in Example 1, the user may use the host computer 200 to instruct storage tier control as needed. Or, the management computer 100 may send a storage tier control indication directly to the storage apparatus 300.

The management computer 100 and the host computer 200 related to Example 1 use the IO port 104 and the IO port 204 to send a storage tier control indication to the storage apparatus 300 via the communication network 500. Alternatively, basically the management computer 100 and the host computer 200 of Example 3 use the management port 103 and the management port 203 to send a storage tier control indication to the storage apparatus 300 via the communication network 550. However, in Example 3 as well, the management computer 100 and the host computer 200 may send a storage tier control indication to the storage apparatus 300 via the communication network 500.

The host computer 200 related to Example 1 acquires a job 225 execution time requirement from the OS 220. Alternatively, either the management computer 100 or the host computer 200 related to Example 3 acquires a task execution time requirement from the user.

### (3-2) Computer System Hardware Configuration

The hardware configuration of the computer system related to Example 3 is the same as the hardware configuration of the computer system related to Example 1. Thus, a detailed explanation of the hardware configuration of the computer system in Example 3 will be omitted.

### (3-3) Overview of Computer System Processing

An overview of the processing of the computer system related to Example 3 will be explained by focusing on the points of difference with Example 1.

The computer system 10 related to Example 3 handles a task, which is equivalent to the job 225, a subtask, which is equivalent to the job step 226, and a file, which is equivalent to the dataset 331.

Basically, the management computer 100 and the host computer 200 related to Example 3 use the management port 103 and the management port 203 to send a storage tier control indication to the storage apparatus 300 via the communication network 550. In Example 3, either the management computer 100 or the host computer 200 acquires a task execution time requirement from the user.

### (3-4) Contents of Various Tables

In Example 3, the same tables as the various tables in Example 1 are stored in the memory of each computer (the memory 101, the memory 201, and the memory 301). The various tables replace the job 225, the job step 226, and the dataset 331 in Example 1 with the respectively corresponding task, subtask, and file. Everything else is the same, and as such, a detailed explanation of the various tables will be omitted.

### (3-5) Detailed Each Apparatus Operations

The operations of each apparatus in Example 3 will be explained in detail by focusing on the points of difference with Example 1.

In Example 3, basically the management computer 100 identifies an over-performance file. Thus, the management computer 100 related to Example 3 performs the same processing in the preparation stage as the preparation stage processing (refer to Fig. 23) of the host computer 200 related to Example 1. Specifically, the management computer 100 executes the same processing as that of Step S2010 of Fig. 23 to detect the storage apparatus 300.

Next, the management computer 100 instructs either one or multiple host computers 200 to acquire information regarding a task, which will run on the relevant host computer(s) 200. The host computer 200, which receives the task information acquisition indication, acquires information related to the task from the OS 220. However, the host computer 200 acquires a requirement for the task execution time from the user via the IO part 205 instead of from the OS 220. Then, the host computer 200 returns the task-related information acquired from the OS 220 and the user to the management computer 100. In addition, the management computer 100, based on the information returned from the host computer 200, creates a data configuration management table 271, a task performance information management table (equivalent to the job performance information management table 274 of Fig. 3), and a subtask execution time management table (equivalent to the job step execution management table 275).

Then, the management computer 100 performs the same processing as that of Step S2030 of Fig. 23 to create a page configuration management table 272 and a storage tier information management table 273.

### (3-6) Effects of Example 3

As described above, according to Example 3, the host computer 200 identifies from among files used by a task a set of files that can be migrated to a lower-level storage tier 324 while meeting the performance requirement of the relevant task. The host computer 200 also identifies and outputs a combination of files with respect to the identified set of files within a range that meets the performance requirement of the relevant task.

This makes it possible for the user to ascertain the capacity required for each storage tier 324 when a storage tier 324-equipped storage apparatus is implemented in an open system. The user is also able to ascertain over-performance files and migrate these files to the lower-level storage tier 324 at storage tier 324-equipped storage apparatus operation time. As a result of this, another file is able to make effective use of the higher-level storage tier 324. Also, by lowering the frequency with which the higher-level storage tier 324 is used, it is possible to increase the life of the storage device configuring the relevant storage tier 324.

### [Example 4]

### (4-1) Overview of Example 4

Next, a computer system related to Example 4 will be explained. In Example 4, the host computer 200 is a mainframe the same as in Example 1.

In Example 4, a dataset to be stored in the higher-level storage tier 324 is identified for a job (job application), which does not meet a performance requirement, from among datasets used by the relevant job in order to meet the relevant application performance requirement. This makes it possible for the user to ascertain a dataset, which must be migrated to the higher-level storage tier 324, in order to meet the performance requirement of the application.

Here, a dataset 331, which allows the job performance requirement to be met by being migrated to the higher-level storage tier 324, hereinafter will be called the dataset 331 capable of resolving under performance.

In Example 4, the host computer 200 determines, for each job step 226, whether or not under performance can be resolved in accordance with either one or multiple datasets 331 to be used in the job step 226. Specifically, the host computer 200 calculates an execution time reduction requirement based on the difference between the job 225 execution time requirement and the execution time measured value. Next, the host computer 200 calculates the relevant job step 226 execution time reduction requirement in a case where the dataset 331 to be used in the job step 226 is migrated to the higher-level storage tier 324. Then, the host computer 200 determines whether or not the under performance can be resolved in accordance with the dataset 331 to be used in the relevant job step 226 by comparing the execution time reduction to the execution time reduction requirement. Here, the determination as to whether or not either one or multiple datasets to be used in a job step are over performance for each job step is made for the following three reasons. The first reason is because a job step is a smaller processing unit than a job. The second reason is because the number of job steps comprising a job is smaller than the number of datasets used by the job. Thus, it is easier to acquire the execution time of each job step than it is to acquire the data access time of each dataset. The third reason is because the dataset to be used is defined by the job step, making it possible to identify the dataset to be used in the job step.

In addition, with respect to a dataset 331 determined to be unable to resolve under performance using only the dataset 331 used in a certain job step 226, the host computer 200 decides on a combination of datasets 331 that meet the performance requirement of the job 225. Then, the host computer 200 presents the user with the set of datasets 331 and the decided combination of datasets 331 determined to be able to resolve under performance.

This makes it possible for the user to ascertain a set of datasets 331, which must be migrated to the higher-level storage tier 324 in order to meet the job 225 performance requirement, without identifying the IO performance requirement needed for each dataset 331.

### (4-2) Computer System Hardware Configuration

The configurations of a computer system, a management computer, a host computer, and a storage apparatus related to Example 4 are basically the same as the configuration of the computer system 10 (refer to Fig. 1), the configuration of the management computer 100 (refer to Fig. 2), the configuration of the host computer 200 (refer to Fig. 3), and the configuration of the storage apparatus 300 (refer to Fig. 4) in Example 1. Thus, a detailed explanation of the hardware configuration of the computer system 10 related to Example 4 will be omitted.

### (4-3) Overview of Computer System Processing

Next, an overview of the processing of the computer system related to Example 4 will be explained.

In Example 4, the host computer 200 determines whether or not it is possible to meet the job 225 performance requirement by migrating a dataset to be used by a job step 226 to the higher-level storage tier 324 for each job step 226 comprising the job 225 (that is, whether or not under performance can be resolved). Specifically, first, the host computer 200 calculates the execution time reduction requirement of the relevant job 225 based on the difference between the job 225 execution time requirement and the execution time measured value. Next, the host computer 200 calculates the difference between the IO processing times of the current destination storage tier 324 and the higher-level storage tier 324 for the dataset 331 to be used in each job step 226. Then, the host computer 200 regards the total value of the difference calculated for each dataset 331 as the minimum job 225 execution time reduction (an example of the predicted amount of change) in a case where the dataset 331 to be used in the relevant job step 226 is migrated to the higher-level storage tier 324. This is because the job 225 execution time reduction is minimal in a case where the relevant dataset 331 is migrated to the higher-level storage tier 324 when data access is performed only one time for each dataset 331. In addition, the host computer 200 compares the calculated minimum execution time reduction to the job 225 execution time reduction requirement. In a case where the minimum execution time reduction is equal to or larger than the execution time reduction requirement, the host computer 200 determines that under performance can be resolved in accordance with the dataset 331 to be used by the relevant job step 226. Alternatively, in a case where the calculated minimum execution time reduction is smaller than the execution time reduction requirement, the host computer 200 determines that under performance cannot be resolved with only the dataset 331 to be used in the single relevant job step 226.

The host computer 200 also selects a job step 226 from the multiple job steps 226 determined to be unable to resolve under performance in accordance with the dataset 331 of the job step 226 alone in order from the largest minimum execution time reduction for each prescribed size of dataset 331 until the job 225 performance requirement is met. Then, the host computer 200 displays a combination of the selected job steps 226 and the job step 226 determined to be able to resolve under performance.

The above-described determination is performed for each dataset 331 to identify the dataset 331 capable of resolving under performance.

An overview of the method for identifying a dataset 331 capable of resolving under performance has been explained hereinabove based on an application performance requirement in this example.

A storage tier control process, which is realized by the computer system 10, basically is executed by the host computer 200 and the storage apparatus 300 the same as in Example 1. However, the same as in Example 1, the management computer 100 may centrally manage multiple host computers 200 and the storage apparatus 300 as needed. Or, the management computer 100 may send a storage tier control indication directly to the storage apparatus 300.

### (4-4) Contents of Various Tables

The various tables deployed in the memory 101, the memory 201, and the memory 301 in Example 4 are the same various tables deployed in the memory 101, the memory 201, and the memory 301 in Example 1. Thus, a drawing showing the contents of the various tables in Example 4 and a detailed explanation thereof will be omitted.

### (4-5) Detailed Each Apparatus Operations

The operations of each apparatus in Example 4 will be explained in detail in order beginning with the host computer 200A and then the management computer 100A. Furthermore, the details of the operations of the storage apparatus 300 related to Example 4 are the same as the details of the operations of the storage apparatus 300 related to Example 1 (Figs. 19, 20, 21, and 22). Thus, a detailed explanation of the operations of the storage apparatus 300 related to Example 4 will be omitted.

First, the operations of the host computer 200 will be explained.

The processing in each of two stages, the implementation stage of a storage tier 324-equipped storage apparatus 300 and the operating stage the storage tier 324-equipped storage apparatus 300, will be explained as the processing performed by the host computer 200 related to Example 4. The processing performed in the preparation stage by the host computer 200 related to Example 4 is the same as the processing performed in the preparation stage by the host computer 200 related to Example 1 (refer to Fig. 23). Thus, a detailed explanation of the processing in the preparation stage by the host computer 200 related to Example 4 will be omitted.

The processing of the host computer 200 in the implementation stage of the storage tier 324-equipped storage apparatus 300 will be explained. In the implementation stage of the storage apparatus 300, the host computer 200 executes a storage tier capacity estimation process.

Fig. 37 is a flowchart of a storage tier capacity estimation process related to Example 4.

First, the host computer 200 executes the same processing (S2110 of Fig. 24) as the host computer 200 of Example 1, and acquires the name of the estimation-target job 225 from the user (S4110).

Next, the host computer 200, based on the over/under-performance dataset identification program 254, executes a process for identifying a job step capable of resolving under performance (refer to Fig. 38), and identifies whether or not the under performance can be resolved in accordance with a dataset 331 used in the relevant job step 226 for each job step 226 with respect to the job 225 shown by either one or multiple job names acquired in Step S4110 (S4120).

In addition, the host computer 200 executes a process for deciding a combination of job steps capable of resolving under performance (refer to Fig. 39), and decides on a combination of job steps 226 for meeting the job 225 performance requirement from among job steps 226, which are not capable of resolving under performance on their own (S4130).

Then, the host computer 200 determines whether or not a job step 226 and a combination of job steps 226 capable of resolving under performance have been identified for all the jobs 225 acquired in Step S4110 (S4140). In a case where identification has been completed for all the jobs 225 (S4140: Yes), the host computer 200 advances the processing to Step S4150. Alternatively, in a case where the identification has not been completed for all the jobs 225 (S4140: No), the host computer 200 moves the processing to S4120.

In Step S4150, the host computer 200 executes the same processing (S2150 of Fig. 24) as the host computer 200 in Example 1, and displays on the IO part 205 information with respect to the capacity required for each storage tier 324.

Fig. 38 is a flowchart of a process for identifying a job step capable of resolving under performance related to Example 4.

The process for identifying a job step capable of resolving under performance corresponds to the processing performed in Step S4120 of the storage tier capacity estimation process (refer to Fig. 37). The process for identifying a job step capable of resolving under performance is executed in a case where either the management computer 100 or the host computer 200 executes the storage tier capacity estimation process in accordance with a user indication.

First, the host computer 200 calculates a job 225 execution time reduction requirement for a target job 225 (S4210). Specifically, the host computer 200 acquires from the job performance information management table 274 an entry, which matches a job name acquired in accordance with a user input. Then, the host computer 200 calculates the execution time reduction requirement for the job 225 shown by the job name 2741 by subtracting the execution time requirement 2742 from the execution time measured value 2743 of the acquired entry.

Next, the host computer 200 executes the same processing (S2220 of Fig. 25) as the host computer 200 in Example 1, and acquires the execution time of the job step 226 comprising the job 225, and the dataset 331 to be used (S4220).

Then, the host computer 200 calculates the minimum execution time reduction (predicted amount of change in execution performance) of the relevant job step 226 in a case where all the datasets 331 used by the job step 226 are migrated to the higher-level storage tier 324 (S4240). Specifically, first the host computer 200 references the job step execution time management table 275 and the storage tier information management table 273 for each dataset 331, and identifies the difference in the IO processing times between the current destination storage tier 324 and the higher-level storage tier 324. Then, the host computer 200 regards the total value of the differences in the identified IO processing times as the minimum execution time reduction of the relevant job step 226. This is because the job 225 execution time reduction is minimal in a case where the relevant dataset 331 is migrated to the higher-level storage tier 324 when it is assumed that data access is performed only one time for each dataset 331.

Next, the host computer 200 compares the job 225 execution time reduction requirement calculated in Step S4210 to the job step 226 minimum execution time reduction calculated in Step S4240 (S4250). As a result of this, in a case where the execution time reduction requirement is equal to or larger than the minimum execution time reduction (S4250: Yes), the host computer 200 determines that under performance can be resolved using only the dataset 331 to be used in the relevant job step 226 (S4260), and advances the processing to Step S4270. Alternatively, in a case where the execution time reduction requirement is smaller than the minimum execution time reduction (S4250: No), the host computer 200 determines that under performance cannot be resolved using only the dataset 331 to be used in the relevant job step 226 (S4265), and advances the processing to Step S4270.

In Step S4270, the host computer 200 identifies whether or not a determination has been made for all the job steps 226. In a case where a determination has been made for all the job steps 226 (S4270: Yes), the host computer 200 ends the process for identifying a job step capable of resolving under performance. Alternatively, in a case where a determination has not been made for all the job steps 226 (S4270: No), the host computer 200 moves the processing to Step S4220.

Fig. 39 is a flowchart of a process for deciding a combination of job steps capable of resolving under performance related to Example 4.

The process for deciding a combination of job steps capable of resolving under performance corresponds to the processing performed in Step S4130 of the storage tier capacity estimation process (refer to Fig. 37). The process for deciding a combination of job steps capable of resolving under performance is executed in a case where either the management computer 100 or the host computer 200 executes the storage tier capacity estimation process in accordance with a user indication.

First, the host computer 200 calculates the job 225 execution time reduction requirement for a target job 225 (S4310). The specific process is the same as Step S4210 of the process for identifying a job step capable of resolving under performance shown in Fig. 38.

Next, the host computer 200 initializes the relevant job 225 execution time reduction variable to 0 (S4320). Then, the host computer 200 selects, from the job steps 226 that are not capable of resolving under performance on their own, a job set 226 having the largest minimum execution time reduction for each prescribed data size of dataset 331 capable of being migrated to the higher-level storage tier 324 (S4330). This is intended to preferentially select a job step 226 for a combination of job steps 226 from among job steps 226 having the largest minimum execution time reduction for each prescribed data size dataset 331 to be migrated in order to make the total size of the datasets 331 to be migrated to the higher-level storage tier 324 as small as possible while achieving the job 225 execution time reduction requirement. Here, the minimum execution time reduction per prescribed data size dataset 331 is obtained by dividing the minimum execution time reduction for the dataset 331 by the amount of data, which corresponds to the virtual address range of the virtual address 2713 in the data configuration management table 271 corresponding to the dataset 331.

Next, the host computer 200 adds the selected job step 226 to the combination (S4345), and adds the minimum execution time reduction of the selected job step 226 to the job 225 execution time reduction (S4350).

In addition, the host computer 200 compares the job 225 execution time reduction to the execution time reduction requirement (S4360). In a case where the job 225 execution time reduction is equal to or larger than the execution time reduction requirement (S4360: Yes), the host computer 200 determines that it was possible to decide on a combination of job steps 226 capable of resolving under performance and ends the process for identifying a combination of job steps capable of resolving under performance. This makes it possible to appropriately identify a combination of multiple job steps 226, which are able to migrate a page.

Alternatively, in a case where the job 225 execution time reduction is smaller than the execution time reduction requirement (S4360: No), the host computer 200 identifies whether or not all of the job steps 226 have been selected (S4380). In a case where all the job steps 226 having the largest minimum execution time reduction have been selected (4380: Yes), the host computer 200 determines that a combination of job steps 226 capable of resolving under performance does not exist (S4390), and ends the process for identifying a combination of job steps capable of resolving under performance. Alternatively, in a case where all the job steps 226 have not been selected (S4380: No), the host computer 200 moves the processing to Step S4330.

The processing of the host computer 200 in the implementation stage of the storage tier 324-equipped storage apparatus 300 has been explained hereinabove.

Next, the processing of the host computer 200 in the operating stage of the storage tier 324-equipped storage apparatus 300 will be explained.

The same as the processing of the host computer 200 in Example 1, the host computer 200 in Example 4, based on the user input information receiving program 251, acquires via the IO part 205 the name of a job 225, which does not meet the performance requirement from the user.

Next, the host computer 200, based on the over/under-performance dataset identification program 254, executes the process for identifying a job step capable of resolving under performance (refer to Fig. 38) with respect to a job 225 shown by the job name acquired from the user input. In addition, the host computer 200 executes the process for deciding a combination of job steps capable of resolving under performance (refer to Fig. 39) for a job step 226, which is unable to resolve under performance on its own.

Then, the host computer 200 identifies the dataset 331 to be used with respect to the job step 226 and the decided job step 226 combination capable of resolving under performance. Next, the host computer 200 displays the identified dataset 331 on the IO part 205 the same as the processing of the host computer 200 in Example 1.

The host computer 200 is able to receive via the IO part 205 an indication by the user to migrate the displayed dataset 331 capable of resolving under performance to the higher-level storage tier 324.

The host computer 200, which receives the dataset 331 migration indication from the user, performs the same processing as the host computer 200 in Example 1 based on the storage tier control indication program 257 to instruct the storage apparatus 300 to perform storage tier control. In accordance with this, the processing shown in Figs. 21 and 22 is executed and the migration of the dataset 331 is performed in the storage apparatus 300 in accordance with the user indication.

The processing of the host computer 200 in the operating stage of the storage tier 324-equipped storage apparatus 300 has been explained hereinabove.

Next, the operations of the management computer 100 will be explained.

The management computer 100 performs the same operations as the host computer 200 based on programs having the same functions as the various programs stored in the memory 201 of the host computer 200. Here, the "centralized aaa programs", which are stored in the memory 101 of the management computer 100, are programs having the same functions as the "aaa programs", which are stored in the memory 201 of the host computer 200. The management computer 100 centrally manages multiple host computers 200. Specifically, the management computer 100 is able to perform the above-described host computer 200 processing with respect to each of multiple host computers 200. Since the processing with respect to each host computer 200 is the same as that of the host computer 200 described hereinabove, a detailed explanation of the operations of the management computer 100 will be omitted.

### (4-6) Effects of Example 4

As described above, according to Example 4, the host computer 200 identifies a set of datasets 331 that can be migrated to a higher-level storage tier 324 in order to meet the performance requirement for a job 225, which is not meeting the performance requirement, and can output this information. Furthermore, the host computer 200 can also identify a set of datasets 331 so that an excess of datasets 331 is not migrated to the higher-level storage tier 324.

This makes it possible for the user to take steps to meet the performance requirement of a job 225 while preventing an excess of datasets 331 from being migrated to the higher-level storage tier 324 by instructing that an identified dataset 331 be migrated to the higher-level storage tier 324. The computer system related to Example 4 may be combined with the computer system related to Example 1.

### [Example 5]

### (5-1) Overview of Example 5

Next, a computer system related to Example 5 will be explained.

Example 5, with respect to a job 225 that is not meeting a performance requirement, identifies from among the datasets 331 used by the relevant job 225 a dataset 331 to be stored in the higher-level storage tier 324 in order to meet the relevant job 225 performance requirement the same as Example 4.

However, in Example 4, whereas a determination is made for each job step 226 comprising a job 225 as to whether or not under performance can be resolved in accordance with either one or multiple datasets 331 used in the job step 226, in Example 5, a determination is made for each dataset 331 used by the job 225 as to whether or not the relevant dataset 331 is capable of resolving under performance. This difference is the same as the difference between Example 1 and Example 2. That is, in Example 5, the same as in Example 2, a measurement is made of the total value of the number of data accesses to the relevant dataset 331 from the start to the end of job 225 execution for each dataset 331. Next, the difference in IO processing times between the storage tiers 324 is identified. Then, based on the number of data accesses and the IO processing time per individual data access, a job 225 execution time reduction in a case where the relevant dataset 331 is migrated to the higher-level storage tier 324 is calculated. In addition, the job 225 execution time reduction requirement is calculated, and a determination is made as to whether or not under performance can be resolved in accordance with the relevant dataset 331 by comparing the execution time reduction to the execution time reduction requirement the same as in Example 4.

In Example 5, the job 225 execution time reduction is calculated like this in units of datasets 331, which are smaller than the units of sets of datasets used in a job step. Thus, the effect is that, although more time is required to acquire the information for calculating the execution time reduction than in Example 4, it is possible to precisely identify a dataset 331 capable of resolving under performance.

### (5-2) Computer System Hardware Configuration

The configurations of the computer system, the management computer, the host computer, and the storage apparatus in Example 5 are the same as the configurations of the computer system 10 (refer to Fig. 1), the configuration of the management computer 100A (refer to Fig. 30), the configuration of the host computer 200A (refer to Fig. 31), and the configuration of the storage apparatus 300 (refer to Fig. 4) in Example 2. Thus, a detailed explanation of the hardware configuration of the computer system 10 in Example 5 will be omitted.

### (5-3) Overview of Computer System Processing

Next, an overview of the processing of the computer system related to Example 5 will be explained.

In Example 5, the same as in Example 2, the host computer 200A calculates the amount of change in the data access time in a case where a dataset 331 is migrated to a different storage tier 324. However, in Example 5, the host computer 200A calculates a reduction in the data access time. Specifically, the host computer 200A, based on the destination storage tier 324 of the dataset 331 used by the job 225 and the IO performance time of each storage tier 324, calculates the reduction in the data access time per individual data access in a case where the dataset 331 is migrated to the higher-level storage tier 324.

Then, the host computer 200A, based on the calculated data access time reduction per data access and the number of data accesses with respect to the relevant dataset 331, calculates a job 225 execution time reduction in a case where the relevant dataset is migrated to the higher-level storage tier 324.

The host computer 200A also calculates the execution time reduction requirement for the relevant job 225 based on the difference between the job 225 execution time requirement and the execution time measured value.

Then, the host computer 200A determines that under performance can be resolved in accordance with the relevant dataset 331 in a case where job 225 execution time reduction is equal to or larger than the job 225 execution time reduction requirement.

In addition, the host computer 200A identifies a combination of datasets 331 not determined to be able to resolve under performance to allow the job 225 to meet the performance requirement. Then, the host computer 200A outputs the dataset 331 capable of resolving under performance and the combination of datasets 331 capable of resolving under performance.

An overview of the method for identifying a dataset 331 capable of resolving under performance based on the performance requirement of an application in this example has been explained hereinabove.

The storage tier control process, which is realized by the computer system 10, basically is executed by the host computer 200 and the storage apparatus 300 the same as in Example 1. However, the same as in Example 1, the management computer 100A may centrally manage multiple host computers 200A and the storage apparatus 300 as needed. Or, the management computer 100 may send a storage tier control indication directly to the storage apparatus 300.

### (5-4) Contents of Various Tables

The various tables deployed in the memory 101, the memory 201, and the memory 301 related to Example 5 are the same various tables deployed in the memory 101, the memory 201, and the memory 301 in Example 2. Thus, a drawing showing the contents of the various tables in Example 5 and a detailed explanation thereof will be omitted.

### (5-5) Detailed Each Apparatus Operations

The operations of each apparatus related to Example 5 will be explained in detail in order beginning with the host computer 200A and then the management computer 100A. Furthermore, the details of the operations of the storage apparatus 300 related to this example are the same as the details of the operations of the storage apparatus 300 in Example 1 (Figs. 19, 20, 21, and 22). Thus, a detailed explanation of the operations of the storage apparatus 300 related to Example 5 will be omitted.

First, the operations of the host computer 200A will be explained.

The processing in each of two stages, the implementation stage of a storage tier 324-equipped storage apparatus 300 and the operating stage the storage tier 324-equipped storage apparatus 300, will be explained as the processing performed by the host computer 200A related to Example 5. The processing performed in the preparation stage by the host computer 200A related to Example 5 is the same as the processing (refer to Fig. 23) performed in the preparation stage by the host computer 200A related to Example 2. Thus, a detailed explanation of the processing performed in the preparation stage by the host computer 200A related to Example 5 will be omitted.

First, the processing of the host computer 200A in the implementation stage of the storage tier 324-equipped storage apparatus 300 will be explained. In the implementation stage of the storage apparatus 300, the host computer 200A executes a storage tier capacity estimation process.

Fig. 40 is a flowchart of a storage tier capacity estimation process related to Example 5.

First, the host computer 200A executes the same processing (S2410 of Fig. 34) as the host computer 200A of Example 2, and acquires the name of the estimation-target job 225 from the user (S4410).

Next, the host computer 200A, based on the over/under-performance dataset identification program 254, executes a process for identifying a dataset capable of resolving under performance (refer to Fig. 41), and identifies a dataset 331 capable of resolving under performance for the job 225 shown by either one or multiple job names acquired in Step S4410 (S4420).

In addition, the host computer 200A executes a process for deciding a combination of datasets capable of resolving under performance (refer to Fig. 42), and decides on a combination of datasets 331, which will allow the job 225 performance requirement to be met by being migrated to the higher-level storage tier 324 from multiple datasets 331 incapable of resolving the under performance on their own (S4430).

Then, the host computer 200A determines whether or not a dataset 331 capable of resolving under performance has been identified for all the jobs 225 acquired in Step S4410 (S4440). In a case where a dataset 331 capable of resolving under performance has been identified for all the jobs (S4440: Yes), the host computer 200A advances the processing to Step S4450. Alternatively, in a case where a dataset 331 capable of resolving under performance has not been identified for all the jobs 225 (S4440: No), the host computer 200A moves the processing to S4420.

In Step S4450, the host computer 200A executes the same processing (S2450 of Fig. 34) as the host computer 200A in Example 2, and displays the capacity required for each storage tier 324 on the IO part 205.

Fig. 41 is a flowchart of a process for identifying a dataset capable of resolving under performance related to Example 5.

The process for identifying a dataset capable of resolving under performance corresponds to the processing performed in Step S4420 of the storage tier capacity estimation process (refer to Fig. 40). The process for identifying a dataset capable of resolving under performance is executed in a case where either the management computer 100A or the host computer 200A executes a storage tier capacity estimation process in accordance with a user indication.

First, the host computer 200A executes the same processing (S4210 of Fig. 38) as that of the host computer 200 in Example 4 for the job 225 targeted for identifying an over-performance dataset 331, and calculates the job 225 execution time reduction requirement (S4510).

Next, the host computer 200A determines whether or not the storage tier 324, which is storing the dataset 331 used by the job 225, is the highest level storage tier 324 (S4520). In a case where the storage tier 324 storing the dataset 331 is the highest level (S4520: Yes), the host computer 200A determines that the relevant dataset 331 cannot be used to resolve under performance (S4558) and advances the processing to Step S4560. Alternatively, in a case where the storage tier 324 storing the dataset 331 is not the highest level (S4520: No), the host computer 200A moves the processing to Step S4530.

In Step S4530, the host computer 200A calculates the reduction in the job 225 execution time in a case where the dataset 331 used in the job 225 is migrated from the current destination storage tier 324 to the higher-level storage tier 324. Specifically, the host computer 200A acquires from the data configuration management table 271 an entry that matches the dataset name in the dataset name 2762 of the data access information management table 276. Then, the host computer 200A acquires from the storage tier information management table 273 an entry that matches the storage tier in the destination storage tier 2755 and the storage ID in the storage ID 2714 of the acquired entry. In addition, the host computer 200A subtracts the IO processing time in the IO processing time 2733 of the acquired entry from the IO processing time in the IO processing time 2733 of the entry showing the higher-level storage tier 324, and calculates the reduction in the data access time per data access in a case where the relevant dataset 331 is migrated to the higher-level storage tier 324. Then, the host computer 200A adds up the calculated reduction in the data access time per data access and the number of data accesses 2764 of the data access information management table 276, and calculates the job 225 execution time reduction in a case where the relevant dataset 331 is migrated to the higher-level storage tier 324.

Next, the host computer 200A compares the calculated job 225 execution time reduction to the job 225 execution time reduction requirement (S4540). In a case where the execution time reduction is equal to or larger than the execution time reduction requirement (S4540: Yes), the host computer 200A determines that the relevant dataset 331 is capable of resolving under performance (S4550) and advances the processing to Step S4560. Alternatively, in a case where the execution time reduction is smaller than execution time reduction requirement (S4540: No), the host computer 200A determines that the relevant dataset 331 is not capable of resolving under performance on its own (S4555) and advances the processing to Step S4560.

In Step S4560, the host computer 200A identifies whether or not a determination has been made for all the datasets 331 used by the job 225. In a case where a determination has been made for all the datasets 331 (S4560: Yes), the host computer 200A ends the process for identifying a dataset capable of resolving under performance. Alternatively, in a case where a determination has not been made for all the datasets 331 (S4560: No), the host computer 200A moves the processing to Step S4520.

Fig. 42 is a flowchart of a process for deciding a combination of datasets capable of resolving under performance related to Example 5.

The process for deciding a combination of datasets capable of resolving under performance corresponds to the processing performed in Step S4430 of the storage tier capacity estimation process (refer to Fig. 40). The process for deciding a combination of datasets capable of resolving under performance is executed in a case where either the management computer 100A or the host computer 200A executes the storage tier capacity estimation process in accordance with a user indication.

First, the host computer 200A performs the same processing as that of Step S4510 of the process for identifying a dataset capable of resolving under performance shown in Fig. 41 for a job 225 targeted for identifying an over-performance dataset 331, and calculates the job 225 execution time reduction requirement (S4610).

Next, the host computer 200A initializes the relevant job 225 execution time reduction variable to 0 (S4620).

Then, from among the over-performance datasets 331 used by the job 225, the host computer 200A selects the dataset 331 having the largest minimum reduction in data access time per prescribed data size when migrated to the higher-level storage tier 324 (S4630). This is intended to preferentially select as a combination datasets 331 having large reductions in execution time per prescribed data size. This makes it possible to make the total size of the datasets 331 migrated to the higher-level storage tier 324 as small as possible while achieving the job 225 execution time reduction requirement. The reduction in the data access time per prescribed data size of each data set 331 here is obtained by dividing the reduction in the execution time for each dataset 331 by the amount of data, which corresponds to the virtual address range in the virtual address 2713 of the data configuration management table 271 corresponding to the dataset 331.

Next, the host computer 200A adds the selected dataset 331 to the combination (S4645), and adds the reduction in the data access time in accordance with the selected dataset 331 to the job 225 execution time reduction (S4650).

In addition, the host computer 200A compares the job 225 execution time reduction to the execution time reduction requirement (S4660). In a case where the job 225 execution time reduction is equal to or larger than the execution time reduction requirement (S4660: Yes), the host computer 200A determines that a combination of datasets 331 capable of resolving under performance can be decided, and ends the process for identifying a combination of datasets capable of resolving under performance.

Alternatively, in a case where the job 225 execution time reduction is smaller than the execution time reduction requirement (S4660: No), the host computer 200A identifies whether or not all the job steps 226 have been selected (S4680). In a case where all the datasets 331 have been selected (S4680: Yes), the host computer 200A determines that a combination of datasets 331 capable of resolving under performance does not exist (S4690), and ends the process for identifying a combination of datasets capable of resolving under performance. Alternatively, in a case where all the datasets 331 have not been selected (S4680: No), the host computer 200A moves the processing to Step S4630.

The processing of the host computer 200A in the implementation stage of the storage tier 324-equipped storage apparatus 300 has been explained hereinabove.

Next, the processing of the host computer 200A in the operating stage of the storage tier 324-equipped storage apparatus 300 will be explained.

The host computer 200A related to Example 5, based on the user input information receiving program 251, acquires from the user via the IO part 205 the name of a job 225, which is not meeting the performance requirement, the same as the processing of the host computer 200 related to Example 4.

Next, the host computer 200A executes, on the basis of the over/under-performance dataset identification program 254, the process for identifying a dataset capable of resolving under performance (refer to Fig. 41) with respect to the job 225 shown by the job name acquired from the user input. In addition, the host computer 200A executes the process for deciding a combination of datasets capable of resolving under performance (refer to Fig. 42) for the dataset 331, which is unable to resolve under performance on its own.

Then, the host computer 200A executes the same processing as the host computer 200A in Example 2, and displays the dataset 331 capable of resolving under performance and the decided combination of datasets 331 capable of resolving under via the IO part 205.

The host computer 200A is able to receive a user indication to migrate the dataset 331 capable of resolving under performance to the higher-level storage tier 324 the same as in Example 4.

The host computer 200A, which receives the dataset 331 migration indication from the user, performs the same operation as the host computer 200 in Example 1, and, based on the storage tier control indication program 257, instructs the storage apparatus 300 to perform storage tier control. In accordance with this, the storage apparatus 300 executes the processing shown in Figs. 21 and 22, and performs the dataset 331 migration in accordance with the user indication.

The processing of the host computer 200A in the operating stage of the storage tier 324-equipped storage apparatus 300 has been explained hereinabove.

Next, the operations of the management computer 100A will be explained.

The management computer 100A performs the same operations as the host computer 200A based on programs having the same functions as the various programs stored in the memory 201 of the host computer 200A. Here, the "centralized aaa programs", which are stored in the memory 101 of the management computer 100, are programs having the same functions as the "aaa programs", which are stored in the memory 201 of the host computer 200A. The management computer 100 centrally manages multiple host computers 200A. Specifically, the management computer 100 is able to perform the above-described host computer 200A processing with respect to each of multiple host computers 200A. Since the processing with respect to each host computer 200A is the same as that of the host computer 200A described hereinabove, a detailed explanation of the operations of the management computer 100 will be omitted.

### (5-6) Effects of Example 5

As described above, according to Example 5, the host computer 200A, with respect to a job 225 that is not meeting the performance requirement, identifies and outputs a set of datasets 331 to be migrated to the higher-level storage tier 324 in order to meet the performance requirement. The host computer 200 is also able to identify a set of datasets 331 so that an excess of datasets 331 is not migrated to the higher-level storage tier 324. Furthermore, the host computer 200A is able to identify the datasets 331 capable of resolving under performance in units of datasets 331.

This makes it possible for the user to more precisely ascertain the dataset 331 to be migrated to the higher-level storage tier 324 than in Example 4. As a result of this, the total size of the datasets 331 migrated to the higher-level storage tier 324 can be made smaller than in Example 4. The computer system related to Example 5 may be combined with the computer system related to Example 2.

### [Example 6]

### (6-1) Overview of Example 6

Next, a computer system related to Example 6 will be explained.

The host computer 200 related to the Example 6 is an open system. The difference between the operations of the computer system 10 related to Example 6 and the operations of the computer system 10 related to Example 4 is the same as the difference between the operations of the computer system 10 related to Example 3 explained in (3-1) above and the operations of the computer system 10 related to Example 1. Thus, detailed explanations of the hardware configuration, the processing outline, the contents of the various tables, and the operations of the respective apparatuses of the computer system related to Example 6 will be omitted.

### (6-2) Effects of Example 6

According to the Example 6, the host computer 200, with respect to a task that is not meeting the performance requirement, is able to identify and output a set of files to be migrated to the higher-level storage tier 324 in order to meet the performance requirement. The host computer 200 is also able to identify a set of files so that an excess of files is not migrated to the higher-level storage tier 324. This makes it possible for the user to meet the performance requirement of a task while preventing an excess of files from being migrated to the higher-level storage tier 324 by instructing that an identified file be migrated to the higher-level storage tier 324.

Six examples have been described hereinabove. For example, either the management computer 100 or the host computer 200, with respect to a task that executes processing stipulated in an application, identifies the performance requirement thereof and the file to be used for each subtask comprising the task. Then, either the management computer 100 or the host computer 200, with respect to the file used in the subtask, identifies a storage tier 324, which meets the application performance requirement, and outputs this information.

This makes it possible for the user to ascertain the capacity of each storage tier 324 required to meet the application performance requirement. The user is also able to prevent an excess of files from being stored in the higher-level storage tier 324 by migrating the file to the identified storage tier 324. As a result of this, it becomes possible for another file to make effective use of the higher-level storage tier 324. It is also possible to extend the life of the storage device configuring the higher-level storage tier 324.

### [Reference Signs List]

- 100: Management computer
- 200: Host computer
- 300: Storage apparatus

## Claims

1. A computer which is coupled to a storage apparatus, comprises a hierarchical pool comprising multiple storage tiers that are multiple page groups having different IO performance, and which, in a case where a migration request has been received, migrates page data, which is data in units of pages, between storage tiers in accordance with the migration request,
the computer comprising:
a storage device; and
a control device, which is coupled to the storage device,
wherein the storage device is configured to store performance requirement management information comprising information denoting the performance requirement of a task, which is an execution unit of a prescribed process, and IO performance information for enabling identification of a difference in IO performance between the multiple storage tiers, and
wherein the control device is configured to calculate, based on the IO performance information, a predicted amount of change in the task execution performance on supposition that one or more data objects for use in the task are to be migrated to a page in another storage tier, and identify, based on the predicted amount of change, one or more data objects, which are able to be migrated to a page in another storage tier while ensuring a state in which the execution performance with respect to the task meets the performance requirement.

2. A computer according to claim 1,
wherein the task comprises at least one or more subtasks,
wherein the storage device is configured to store tier identification information for enabling identification of each storage tier to which each page storing each of all data objects for use in the subtask belongs, and
wherein the control device is configured to
calculate, based on the IO performance information and the tier identification information, a predicted amount of change in the task execution performance on supposition all data objects for use in the subtask are to be migrated to a page of another storage tier, and
identify, based on the predicted amount of change, a subtask, which is able to migrate all the data objects to be used to a page in another storage tier while ensuring a state in which the execution performance with respect to the task meets the performance requirement.

3. A computer according to claim 2,
wherein the control device is configured to
calculate, based on the IO performance information and the tier identification information, a unit of a predicted amount of change, which is an amount per a prescribed amount of data with respect to the predicted amount of change in the task execution performance on supposition that all data objects for use in the subtask are to be migrated to a page of another storage tier, and
identify, in a priority order based on the unit of predicted amount of change, a subtask, which is able to migrate all data objects to be migrated to a page of another storage tier while ensuring a state in which execution performance with respect to the task meets the performance requirement.

4. A computer according to claim 3,
wherein the control device is configured to prioritize a subtask for which the unit of predicted amount of change is small when identifying a subtask assumed to be able to ensure a state in which execution performance with respect to the task meets the performance requirement even when all data objects for use by the subtask are migrated to a page of a lower-level storage tier.

5. A computer according to claim 3,
wherein the control device is configured to prioritize a subtask for which the unit of predicted amount of change is large when identifying a subtask assumed to be able to ensure a state in which execution performance with respect to the task meets the performance requirement by migrating all data objects for use by the subtask are migrated to a page of a higher-level storage tier.

6. A computer according to claim 2,
wherein the control device is configured to identify, based on the predicted amount of change, a combination of multiple subtasks, which are able to migrate all data objects to be used to a page of another storage tier while ensuring a state in which execution performance with respect to the task meets the performance requirement.

7. A computer according to claim 6,
wherein the control device is configured to
regard a combination of multiple subtasks, which is assumed to be able to ensure a state in which execution performance with respect to the task meets the performance requirement even when all data objects for use by the subtask are migrated to a page of a lower-level storage tier, as a subtask combination for which the amount of data migrated to the page of the lower-level storage tier is increased, and
regard a combination of multiple subtasks, which is assumed to be able to ensure a state in which execution performance with respect to the task meets the performance requirement by migrating all data objects for use by the subtask to a page of a higher-level storage tier, as a subtask combination for which the amount of data migrated to the page of the higher-level storage tier becomes is decreased.

8. A computer according to claim 1,
wherein the storage device is configured to store tier identification information enabling identification of each storage tier to which each page storing each of all data objects used by the task belongs, and
wherein the control device is configured to
calculate, based on the IO performance information and the tier identification information, a predicted amount of change in the task execution performance on supposition that each data object of the subtask is migrated to a page of another storage tier, and
identify, based on the predicted amount of change, one or more data objects, which are able to be migrated to a page in another storage tier while ensuring a state in which the execution performance with respect to the task meets the performance requirement.

9. A computer according to claim 8,
wherein the storage device is configured to store the number of accesses to each data object of the task, and
wherein the control device is configured to calculate, based on the IO performance information and the number of accesses, a predicted amount of change in the task execution performance on supposition that each data object of the subtask is migrated to a page in another storage tier.

10. A computer according to claim 8,
wherein the control device is configured to
calculate, based on the IO performance information and the tier identification information, a unit of predicted amount of change, which is an amount per a prescribed amount of data with respect to the predicted amount of change in the task execution performance on supposition that each data object is migrated to a page of another storage tier, and
identify, in a priority order based on the unit of predicted amount of change, a data object, which can be migrated to a page of another storage tier while ensuring a state in which execution performance with respect to the task meets the performance requirement.

11. A computer according to claim 10,
wherein the control device is configured to prioritize a data object for which the unit of predicted amount of change is small when identifying a data object assumed to be able to ensure a state in which execution performance with respect to the task meets the performance requirement even when a data object is migrated to a page of a lower-level storage tier.

12. A computer according to claim 10,
wherein the control device is configured to prioritize a data object for which the unit of predicted amount of change is large when identifying a data object assumed to be able to ensure a state in which execution performance with respect to the task meets the performance requirement by migrating a data object is migrated to a page of a higher-level storage tier.

13. A computer according to claim 9,
wherein the control device is configured to identify, based on the predicted amount of change, a combination of multiple data objects, which is able to be migrated to a page of another storage tier while ensuring a state in which execution performance with respect to the task meets the performance requirement.

14. A computer according to claim 13,
wherein the control device is configured to
regard a combination of multiple data objects, which is assumed to be able to ensure a state in which execution performance with respect to the task meets the performance requirement even when migrated to a page of a lower-level storage tier, as a data object combination for which the amount of data migrated to the page of the lower-level storage tier is increased, and
regard a combination of multiple data objects, which is assumed to be able to ensure a state in which execution performance with respect to the task meets the performance requirement in accordance with being migrated to a page of a higher-level storage tier, as a data object combination for which the amount of data migrated to the page of the higher-level storage tier is decreased.

15. A data allocation control method for a computer coupled to a storage apparatus, which comprises a hierarchical pool comprising multiple storage tiers that are multiple page groups having different IO performance, and which, in a case where a migration request has been received, migrates page data, which is data in units of pages, between storage tiers in accordance with the migration request,
the data allocation control method comprising:
calculating, by a control device of the computer, based on IO performance information enabling identification of a difference in IO performance between the multiple storage tiers, a predicted amount of change in the task execution performance on supposition that one or more data objects to be used in the task, which is an execution unit of a prescribed process, are to be migrated to a page of another storage tier; and
identifying, by the control device, based on the predicted amount of change, one or more data objects, which are able to be migrated to a page in another storage tier while ensuring a state in which execution performance with respect to the task meets the performance requirement, which is based on performance requirement management information comprising information denoting the task performance requirement.
